# EUROPEAN PATENT APPLICATION

(11) **EP 1 530 369 A1**
(43) Date of publication of application: **11.05.2005**
(21) Application number: 04745952.4
(22) Date of filing: 09.06.2004
(51) Int. Cl.: H04N 5/91

(54) **RECORDING DEVICE, RECORDING METHOD, AND PROGRAM**

(30) Priority: 26.06.2003 JP 2003181971
(71) Applicant: Sony Corporation, Tokyo 141-0001 (JP)
(72) Inventor: FURUKAWA, Takashi SONY CORPORATION, Tokyo 1410001 (JP); ANDO, Hideki SONY CORPORATION, Tokyo 1410001 (JP)
(74) Representative: Leppard, Andrew John
(86) International application number: PCT/JP2004/008403
(87) International publication number: WO 2005/002217

(57) **Abstract**

The present invention allows a postrecording process to be executed even if a bit rate of data recorded on or data for recording onto a recording medium is higher than a bit rate for reading out from or recording onto the recording medium. At step S363, a control section causes low-res data, which are a data series of sound and picture having the same contents as an audio file of a designated channel, to be read out from an optical disk. At step S367, the control section causes acquired audio data to be recorded to the audio file of the designated channel on the optical disk 7. The present invention is applicable to a disk apparatus for recording audio data and video data onto the optical disk.

## Description

### TECHNICAL FIELD

The present invention relates to a recording apparatus and method, and a program, and particularly, to a recording apparatus and method, and a program which executes a so-called postrecording process.

### BACKGROUND ART

A so-called postrecording process is used in the field of picture production such as film making and broadcasting. In the postrecording process, while recorded sound or picture is being read out, the sound or picture being read out is reproduced and also other sound or picture synchronizing with the sound or picture being reproduced is recorded.

Further, in Unexamined Japanese Patent Application Publication No. 11-136609, a technique is disclosed, wherein while an audio signal such as a narration is being recorded onto an inner circumferential-side area ARN of an optical disk, either a video signal recorded on an outer circumferential- side is reproduced according to an editing list, or while an audio signal such as a narration is being tentatively edited using a storage means, a video signal is reproduced from an optical disk to output the video signal directly or through the storage means, and the edited audio signal is thereafter recorded onto the optical disk.

However, when a bit rate of data recorded on or to be recorded onto a recording medium is high, it has been impossible, in some cases, to execute a postrecording process due to limitations imposed on a bit rate for reading out or recording from/ to the recording medium. Further, to execute the postrecording process, a storage means has been required to store a video signal or an audio signal in some cases.

### DISCLOSURE OF THE INVENTION

The present invention has been made in view of such circumstances. It is, therefore, an object of the present invention to allow a postrecording process to be executed even if a bit rate of data recorded on or data for recording onto a recording medium is higher than a bit rate for reading out from or recording onto the recording medium. Further, it is another object of the present invention to allow the postrecording process without provision of a strange means.

A first recording apparatus of the present invention is characterized by including reading controlling means for controlling reading of low-resolution data having the same contents as at least one of first picture data and first sound data recorded on a recording medium, and recording controlling means for controlling recording of second picture data or second sound data synchronizing with the at least one of the first picture data and the first sound data, onto the recording medium.

The reading controlling means may be configured to control reading of the low-resolution data in which low-resolution picture data having the same contents as the first picture data and low-resolution sound data having the same contents as the first sound data are multiplexed.

The recording controlling means may be configured to control recording of the second picture data so as to be recorded to a first file in which picture data are collectively placed, or recording of the second sound data so as to be recorded to a second file in which sound data are collectively placed.

The recording medium may be an optical disk.

The recording medium may be a semiconductor memory.

A first recording method of the present invention is characterized by including a reading controlling step of controlling reading of low-resolution data having the same contents as at least one of first picture data and first sound data recorded on a recording medium, and a recording controlling step of controlling recording of second picture data or second sound data synchronizing with the at least one of the first picture data and the first sound data, onto said recording medium.

A first program of the present invention is characterized by causing a computer to execute a reading controlling step of controlling reading of low-resolution data having the same contents as at least one of first picture data and first sound data recorded on the recording medium, and a recording controlling step of controlling recording of second picture data or second sound data synchronizing with the at least one of the first picture data and the first sound data, onto the recording medium.

A second recording apparatus of the present invention is characterized by including reading controlling means for controlling reading of first picture data and low-resolution picture data, and recording controlling means for controlling recording of second picture data in synchronism with the first picture data.

The reading controlling means may be configured to control reading of low-resolution data in which the low-resolution picture data having the same contents as the first picture data and low-resolution sound data having the same contents as sound data are multiplexed.

The recording controlling means may be configured to control recording of the second picture data to a file in which picture data are collectively placed.

The recording medium may be an optical disk.

The recording medium may be a semiconductor memory.

A second recording method of the present invention is characterized by including a reading controlling step of controlling reading of first picture data and low-resolution picture data, and a recording controlling step of controlling recording of second picture data in synchronism with the first picture data.

A second program of the present invention is characterized by causing a computer to execute a reading controlling step of controlling reading of first picture data and low-resolution picture data, and a recording controlling step of controlling recording of second picture data in synchronism with the first picture data.

A third recording apparatus of the present invention is characterized by including reading controlling means for controlling reading of first sound data and low-resolution sound data, and recording controlling means for controlling recording of second sound data in synchronism with the first sound data.

The reading controlling means may be configured to control reading of low-resolution data in which the low-resolution sound data having the same contents as the first sound data and low-resolution picture data having the same contents as picture data are multiplexed.
17 The recording controlling means may be configured to control recording of the second sound data to a file in which sound data are collectively placed.

The recording medium may be an optical disk.

The recording medium may be a semiconductor memory.

A third recording method of the present invention is characterized by including a reading controlling step of controlling reading of first sound data and low-resolution sound data, and a recording controlling step of controlling recording of second sound data in synchronism with the first sound data.

A third program of the present invention is characterized by causing a computer to execute a reading controlling step of controlling reading of first sound data and low-resolution sound data, and a recording controlling step of controlling recording of second sound data in synchronism with the first sound data.

In the first recording apparatus and method, and program of the present invention, low-resolution data having the same contents as at least one of first picture data and first sound data recorded on a recording medium are read out, and second picture data or second sound data synchronizing with the at least one of the first picture data and the first sound data are recorded onto a recording medium.

In the second recording apparatus and method, and program of the present invention, reading of first picture data and low-resolution picture data is controlled, and recording is controlled such that second picture data is recorded in synchronism with the first picture data.

In the third recording apparatus and method, and program of the present invention, reading of first sound data and low-resolution sound data is controlled, and recording is controlled such that second sound data is recorded in synchronism with the first sound data.

The recording apparatus may be an independent apparatus or a block for executing a recording process of a recording/ reproducing apparatus.

### BRIEF DESCRIPTION OF DRAWINGS

FIG. 1 is a block diagram showing an example of a configuration of a first embodiment of an AV network system to which the present invention is applied.
FIG. 2 is a diagrammatic representation showing a standard AV multiplex format.
FIG. 3 is a diagrammatic representation showing an AV independent format.
FIG. 4 is a diagrammatic representation showing the AV independent format.
FIG. 5 is a diagrammatic representation showing the AV independent format.
FIG. 6 is a diagrammatic representation showing the AV independent format.
FIG. 7 is a block diagram showing an example of a configuration of a format conversion section.
FIG. 8 is a block diagram showing an example of a configuration of a standard/independent conversion section.
FIG. 9 is a block diagram showing an example of a configuration of a video file creation section.
FIG. 10 is a block diagram showing an example of a configuration of an audio file creation section.
FIG. 11 is a flowchart illustrating a master file creation process.
FIG. 12 is a flowchart illustrating a metadata file creation process for file units.
FIG. 13 is a flowchart illustrating a metadata file creation process for frame units.
FIG. 14 is a flowchart illustrating an auxiliary file creation process.
FIG. 15 is a flowchart illustrating a video file creation process.
FIG. 16 is a flowchart illustrating an audio file creation process.
FIG. 17 is a block diagram showing an example of a configuration of a disk driving apparatus.
FIG. 18 is a block diagram showing an example of a configuration of a data conversion section.
FIG. 19 is a diagrammatic representation illustrating a structure of a low-res data file.
FIG. 20 is a diagrammatic representation illustrating a structure of the low-res data file.
FIG. 21 is a diagrammatic representation illustrating a structure of a system item.
FIG. 22 is a diagrammatic representation illustrating a configuration of a picture essence.
FIG. 23 is a diagram illustrating data amounts of picture essences each having a KLV structure.
FIG. 24 is a diagrammatic representation showing a configuration of a sound essence.
FIG. 25 is a block diagram showing a configuration of a low-res data creation section.
FIG. 26 is a block diagram illustrating a configuration of a video file processing section.
FIG. 27 is a block diagram illustrating a configuration of an audio file processing section.
FIG. 28 is a block diagram showing a configuration of a data synthesis section.
FIG. 29 is a flowchart illustrating a video file process.
FIG. 30 is a flowchart illustrating an audio file process.
FIG. 31 is a flowchart illustrating a metadata file process.
FIG. 32 is a flowchart illustrating a low-res file synthesis process.
FIG. 33 is a flowchart illustrating a recording process executed by a control section.
FIG. 34 is a flowchart illustrating a sound data recording task.
FIG. 35 is a diagram representing changes in a total amount La of sound data and a total amount Lv of picture data.
FIG. 36 is a diagram representing how sound data and picture data are recorded on an optical disk.
FIG. 37 is a flowchart illustrating a picture data recording task.

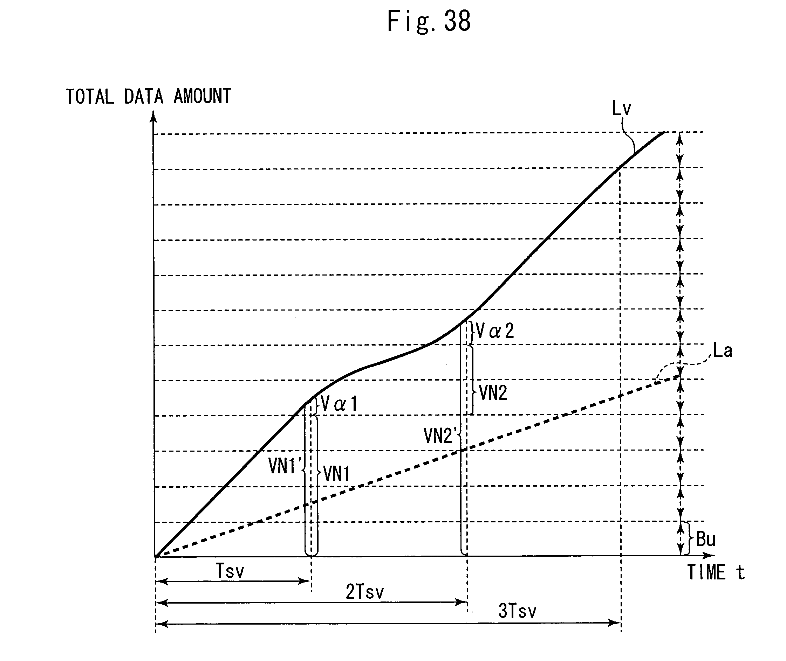

FIG. 38 is a diagram representing changes in the total amount La of sound data and the total amount Lv of picture data.
FIG. 39 is a flowchart illustrating a low-res data recording task.
FIG. 40 is a flowchart illustrating a metadata recording task.
FIG. 41 is a diagram showing total amounts of data to be sored into a memory.
FIG. 42 is a diagram showing total amounts of data to be sored into the memory.
FIG. 43 is a diagram showing total amounts of data to be sored into the memory.
FIG. 44 is a diagram showing total amounts of data to be sored into the memory.
FIG. 45 is a diagram showing total amounts of data to be sored into the memory.
FIG. 46 is a diagram showing how data are recorded on the optical disk.
FIG. 47 is a diagram showing how data are recorded on the optical disk.
FIG. 48 is a diagrammatic representation illustrating data recorded on the optical disk.
FIG. 49 is a flowchart illustrating a recording process.
FIG. 50 is a block diagram showing an example of a configuration of an independent/ standard conversion section.
FIG. 51 is a block diagram showing an example of a configuration of a video file processing section.
FIG. 52 is a block diagram showing an example of a configuration of an audio file processing section.
FIG. 53 is a block diagram showing an example of a configuration of a data synthesis section.
FIG. 54 is a flowchart illustrating a metadata file process.
FIG. 55 is a flowchart illustrating an auxiliary file process.
FIG. 56 is a flowchart illustrating a video file process.
FIG. 57 is a flowchart illustrating an audio file process.
FIG. 58 is a flowchart illustrating a synthesis process.
FIG. 59 is a diagrammatic representation illustrating a postrecording process executed by a disk apparatus.
FIG. 60 is a flowchart illustrating a postrecording process for recording audio data.
FIG. 61 is a flowchart illustrating a postrecording process for recording video data.
FIG. 62 is a block diagram showing an example of a configuration of an embodiment of a computer to which the present invention is applied.

### BEST MODE FOR CARRYING OUT THE INVENTION

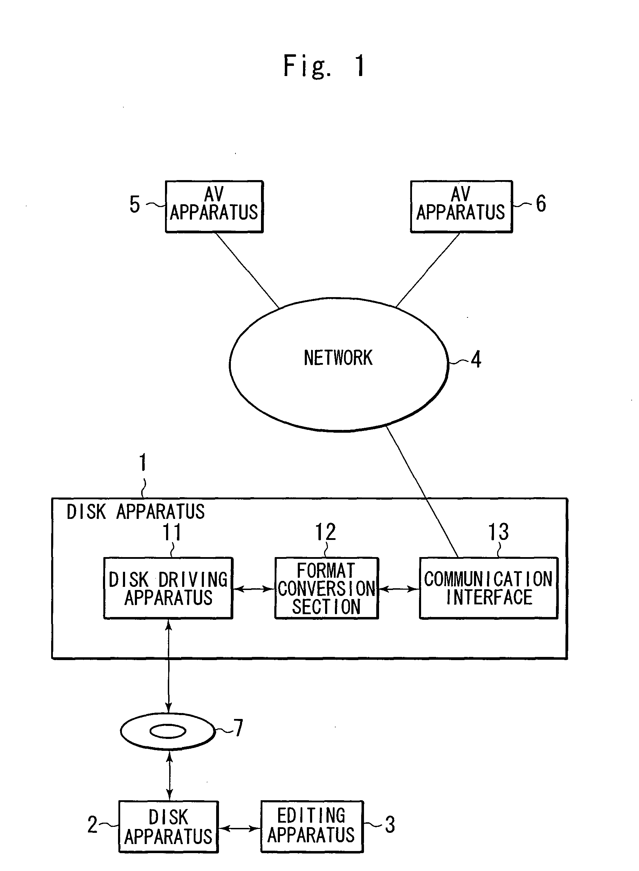

FIG. 1 shows an example of a configuration of an embodiment of an AV network system (the term "system" means a logical set of a plurality of apparatus irrespective of whether or not the apparatus as components are accommodated in the same housing).

A disk apparatus 1 includes a disk driving apparatus 11, a format conversion section 12, and a communication interface (I/F) 13. The disk apparatus 1 receives a file of AV data transmitted through a network 4 and records the file onto an optical disk 7. Further, the disk apparatus 1 reads out a file of AV data recorded onto the optical disk 7 and transmits the file through the network 4.

That is, an optical disk 7 can be removably loaded into the disk driving apparatus 11. The disk driving apparatus 11 drives the optical disk 7 loaded therein to record (write) a file of an AV independent format hereinafter described, supplied thereto from the format conversion section 12, onto the optical disk 7. Further, the disk driving apparatus 11 reads out a file of the AV independent format from the optical disk 7 and supplies the file to the format conversion section 12.

The format conversion section 12 converts the file of the AV independent format supplied thereto from the disk driving apparatus 11 into a file of a standard AV multiplex format and supplies the file to the communication interface 13. Further, the format conversion section 12 converts a file of the standard AV multiplex format supplied thereto from the communication interface 13 into a file of the AV independent format and supplies the file to the disk driving apparatus 11.

The standard AV multiplex format includes, for example, an MXF (Material eXchange Format).

The MXF is a format which considers streaming, in addition to file exchange between broadcasting apparatus of different models or makers. And in the MXF, video data and audio data are multiplexed in small units, such as frames.

The communication interface 13 may be formed from, for example, an Institute of Electrical and Electronics Engineers (IEEE) 1394 port, a USB (Universal Serial Bus) port, or a NIC (Network Interface Card) for connection of a LAN (Local Area Network). Alternatively, the communication interface 13 may be formed from an analog modem, a Terminal Adapter (TA), and a Digital Service Unit (DSU), an Asymmetric Digital Subscriber Line (ADSL) modem, or the like. The communication interface 13 exchanges files of the standard AV multiplex format through the network 4, such as the Internet or an intranet. That is, the communication interface 13 transmits a file of the standard AV multiplex format supplied thereto from the format conversion section 12 through the network 4. Further, the communication interface 13 receives a file of the standard AV multiplex format transmitted thereto through the network 4 and supplies the file to the format conversion section 12.

In the disk apparatus 1 having the configuration described hereinabove, the communication interface 13 receives a file of the standard AV multiplex format transmitted thereto through the network 4 and supplies the file to the format conversion section 12. The format conversion section 12 converts the file of the standard AV multiplex format from the communication interface 13 into a file of the AV independent format and supplies the file to the disk driving apparatus 11. And the disk driving apparatus 11 records the file of the AV independent format from the format conversion section 12 onto an optical disk 7 loaded therein.

Further, in the disk apparatus 1, the disk driving apparatus 11 reads out a file of the AV independent format from an optical disk 7 loaded therein and supplies the file to the format conversion section 12. The format conversion section 12 converts the file of the AV independent format from the disk driving apparatus 11 into a file of the standard AV multiplex format and supplies the file to the communication interface 13. And the communication interface 13 transmits the file of the standard AV multiplex format from the format conversion section 12 through the network 4.

A file of the standard AV multiplex format here conforms to, for example, standards of the MXF, and includes a header, a body, and a footer. And since a file of the standard AV multiplex format conforms to the standards of the MXF, the body thereof includes video data and audio data, which are AV data, placed in a multiplexed state in a unit of, for example, one frame therein.

In FIG. 1, AV apparatus 5 and 6 connected to the network 4 are apparatus that conform to the standards of the MXF and can therefore handle a file conforming to the standards of the MXF. Accordingly, each of the AV apparatus 5 and 6 can transmit a file of the standard AV multiplex format to the disk apparatus 1 through the network 4. Further, each of the AV apparatus 5 and 6 can receive a file of the standard AV multiplex format transmitted thereto from the disk apparatus 1 through the network 4. That is, the disk apparatus 1 and the AV apparatus 5 and 6 can exchange a file of the standard AV multiplex format therebetween through the network 4. Furthermore, each of the AV apparatus 5 and 6 can execute various processes such as streaming reproduction of a received file of the standard AV multiplex format.

An apparatus here conforming to the existing standards of the MXF like the AV apparatus 5 and 6 is hereinafter referred to suitably as standard apparatus.

Meanwhile, a file of the AV independent format includes a header, a body, and a footer, similarly to a file of the standard AV multiplex format. However, only the body has a form different from that of the body of a file of the standard AV multiplex format. That is, in a file of the AV independent format, video data and audio data are placed in different files from each other. While a video file, which is a file of video data, has a header and a footer of the same form as that of a file of the standard AV multiplex format, the body of the video file includes video data placed collectively therein. Further, while an audio file, which is a file of audio data, has a header and a footer of the same form as that of a file of the standard AV multiplex format, the body of the audio file includes audio data placed collectively therein.

Accordingly, if a video file or an audio file of the AV independent format is transmitted to the AV apparatus 5 or 6 from the disk apparatus 1, the AV apparatus 5 or 6, which is a standard apparatus, cannot handle video data or audio data placed in the body of the video file or the audio file of the AV independent format unless the AV apparatus is ready for the AV independent format. However, the AV apparatus 5 or 6 can handle the video file or the audio file itself of the AV independent format. That is, the video file or the audio file of the AV independent format is formed from a header, a body, and a footer similarly to a file of the standard AV multiplex format, and the header and the footer have the same form as that of a file of the standard AV multiplex format. Therefore, unless the "contents" of the body (data placed in the body) are referred to, the video file or the audio file itself of the AV independent format is equivalent to a file of the standard AV format (a file conforming to the standard AV format). Accordingly, even if the AV apparatus 5 to 6, which is a standard apparatus, is not ready for the AV independent format, it can handle the video file or the audio file itself of the AV independent format.

That is, the disk apparatus 1 and the AV apparatus 5 or 6, which is a standard apparatus, can perform only file exchange of a file of the AV independent format.

As described hereinabove, a file of the AV independent format is equivalent to a file of the standard AV multiplex format unless the "contents" of the body of the file are referred to. From this point of view, it can be said that a file of the AV independent format is compatible with a file of the standard AV multiplex format.

Next, in FIG. 1, an optical disk 7 can be removably loaded into a disk apparatus 2. The disk apparatus 2 is a standard apparatus similarly to, for example, the AV apparatus 5 or 6, and reads out a video file or an audio file of the AV independent format from the optical disk 7 loaded therein and supplies the file to an editing apparatus 3.

That is, as described above, a video file or an audio file of the AV independent format is equivalent to a file of the standard AV multiplex format unless the "contents" of the body of the file are referred to. Therefore, the disk apparatus 2, which is a standard apparatus, can read out a video file or an audio file of the AV independent format.

The editing apparatus 3 is an apparatus ready for the AV independent format, and can therefore handle a file of the AV independent format. The editing apparatus 3 performs, for example, AV independent editing of a video file or an audio file of the AV independent format supplied thereto from the disk apparatus 2 and supplies the video file or the audio file of the AV independent format as the editing result to the disk apparatus 2.

And the disk apparatus 2 records the video file or the audio file of the AV independent format supplied thereto from the editing apparatus 3 onto the optical disk 7 loaded therein.

That is, as described above, a video file or an audio file of the AV independent format is equivalent to a file of the standard AV multiplex format unless the "contents" of the body of the file are referred to. Therefore, the disk apparatus 2, which is a standard apparatus, can record a video file or an audio file of the AV independent format onto the optical disk 7.

As described above, in a file of the standard AV multiplex format, video data or audio data are placed in a multiplexed state, for example, in a unit of a frame in the body. Meanwhile, in a video file or an audio file of the AV independent format, video data or audio data are placed collectively in the body, and accordingly, editing such as AV independent editing can be executed readily. And since a file of the AV independent format has a header and a footer of the same form as that of a file of the standard AV multiplex format, it is compatible with a file of the standard AV multiplex format unless the "contents" of the body are referred to. Consequently, a file of the AV independent format can be handled by a standard apparatus.

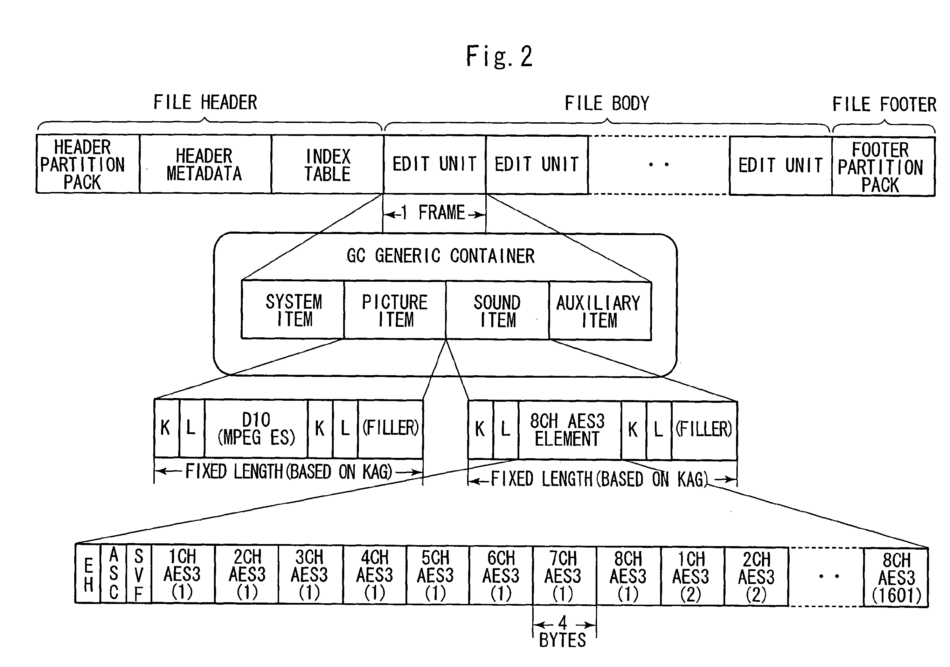

Next, FIG. 2 shows an example of the standard AV multiplex format.

FIG. 2 here shows a standard AV multiplex format, which adopts video data coded in accordance with the Moving Picture Experts Group (MPEG) IMX system called D10 as video data placed in the body. Further, the standard AV multiplex format shown adopts non-compressed audio data of the Audio Engineering Society (AES) 3 format as audio data placed in the body.

Note that other video data and audio data of various formats such as a format of Digital Video (DV) standards can be placed in the body alternatively.

A file of the standard AV multiplex format is formed from a header (File Header), a body (File Body), and a footer (File footer) placed in order from the top therein.

The header includes a Header Partition Pack, Header Metadata, and an Index Table placed in order from the top therein. The header partition pack includes data for specifying the header, the form of data placed in the body, information representative of a file format, and the like placed therein. The header metadata includes metadata of a file unit placed therein. The metadata includes, for example, a creation date of the file, and information regarding data placed in the body. The index table includes a table placed therein. The table indicates the positions of edit units hereinafter described, which are placed in the body.

The metadata here includes a time code added, for example, to each frame of a video file, a Unique Material Identifier (UMI) for the video file, Global Positioning System (GPS) information representative of the position where imaging was performed by a video camera, a time/date (year, month, date, hour, minute, second) on which the imaging was performed, Association of Radio Industries and Businesses (ARIB) metadata, and setting/control information of the video camera which performed the imaging. Note that the ARIB metadata means metadata superimposed on a standard communication interface such as a Serial Digital Interface (SDI), which is standardized by the ARIB. Further, the setting/control information of the video camera includes, for example, IRIS control values, white balance/black balance modes, and lens information regarding zooming/ focusing of a lens.

Note that the index table is provided optionally, and may be or may not be included in the header. Further, the header can place various optional data therein in addition to the index table.

Further, as the information representative of a file format placed in the header partition pack, information representative of the standard AV multiplex format is adopted in a file of the standard AV multiplex format, and information representative of the AV independent format is adopted in a file of the AV independent format. However, the form itself of the header partition pack is common to both the standard AV multiplex format and the AV independent format.

The footer is formed from a Footer Partition Pack. The footer partition pack includes data for specifying the footer placed therein.

The body is formed from one or more Edit Units. An edit unit is a unit of one frame and includes therein AV data for one frame, and others.

That is, an edit unit includes a System Item, a Picture Item, a Sound Item, and an Auxiliary Item placed in order from the top therein.

The system item includes metadata (metadata of a file unit) about a frame of video data placed in the succeeding picture item. Metadata of a frame unit here includes, for example, a time code.

The picture item includes video data for one frame placed therein. In FIG. 2, video data of the D10 format described above are placed in the picture item.

In the picture item here, video data for one frame having a Key, Length, and Value (KLV) structure placed by KLV-coding.

The KLV structure means a structure in which a Key, a Length, and a Value are placed in order from the top therein. The key includes a label of 16 bytes placed therein. The label conforms to standards of the SMPTE 298M and represents what data are placed in the value. The length includes therein a data length of data placed in the value. The value includes actual data, i.e., video data of one frame here, placed therein.

Further, the picture item uses a fixed data length whose reference is a KLV Alignment Grid (KAG). And in order that the picture item may have a fixed length, also a Filler as data for stuffing is provided in the form of a KLV structure similarly and placed next to the video data of the picture item.

Note that the fixed length, which is a data length of the picture item and whose reference is the KAG, equals, for example, an integral multiple of a sector length of the optical disk 7 (e.g., 512 bytes, 2 Kbytes, or the like). In this case, the optical disk 7 and the picture item exhibit high affinity, and consequently, reading/writing processing from/to the optical disk 7 can be executed at a high speed.

Further, not only the system item described above, but also the sound item and the auxiliary item hereinafter described adopt the KLV structure similarly to the picture item, and the data length is a fixed length whose reference is the KAG.

The sound item includes audio data for one frame placed in a KLV structure therein, similarly as in the picture item described above. The audio data of one frame corresponds to a frame of the video data placed in the picture item.

Further, the sound item includes audio data of a plurality of channels, for example, eight channels placed in a multiplexed state therein.

That is, the value of the KLV structure of the sound item includes an Element Header (EH), an Audio Sample Count (ASC), a Stream Valid Flags (SVF), and multiplexed audio data of eight channels placed in order from the top therein.

In the sound item, the audio data of eight channels here are multiplexed by placing samples of the audio data in such an order as first samples, second samples, ··· of the audio data of the eight channels in one frame. Each of numerals in parentheses of the audio data shown at the bottom of FIG. 2 indicates which one of the samples of the audio data the sample in question is.

Further, the element header EH includes data for specifying the element header and others placed therein. The audio sample count ASC includes therein the number of samples of audio data placed in the sound item. The stream valid flag SVF is a flag of eight bits (one byte), and each of the bits represents whether the audio data of the channel corresponding to the bit is valid or not. That is, each bit of the stream valid flag SVF is set to, for example, 1 where the audio data of the channel corresponding to the bit is valid, and to, for example, 0 where the audio data is invalid.

The auxiliary item includes necessary user data placed therein. Therefore, the auxiliary item is an area into which a user can place arbitrary data.

As described hereinabove, in the standard AV multiplex format, the system item in which metadata of a frame unit is placed, the picture item in which video data is placed, the sound item in which audio data is placed, the auxiliary item in which user data are placed are multiplexed in a unit of one frame. Further, in the sound item, audio data of eight channels are multiplexed in a unit of one sample.

Thus, in a file where video data and audio data are placed collectively but separately, reproduction of the video data and the audio data cannot be started unless all of a file of the collectively placed video data and a file of the collectively placed audio data are received. However, in the standard AV multiplex format, video data and audio data are multiplexed in a frame unit. Therefore, once video data and audio data for one frame have been received, the video data and the audio data of the frame can be reproduced instantly. Consequently, it can be said that the standard AV multiplex format is suitable for streaming.

As described hereinabove, the standard AV multiplex format is suitable for streaming because video data and audio data of the format are multiplexed in a frame unit. On the other hand, it is hard to perform AV independent editing wherein video data and audio data are edited independently of each other.

Further, also metadata of a file unit exist discretely in the system item of the edit unit, and are therefore hard to handle during editing or the like.

Furthermore, the AES3 format, which can be adopted by the standard AV format, is specified such that at least four bytes are allocated to one sample of audio data. Therefore, the entire file has a large size.

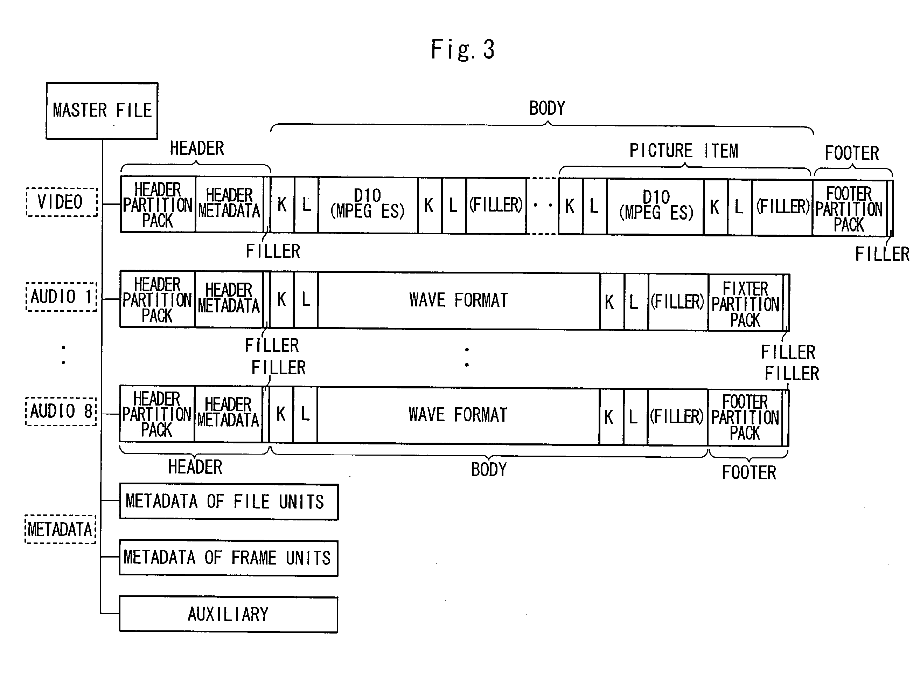

Then, FIG. 3 shows an example of the AV independent format.

In the AV independent format, video data, audio data, metadata of a file unit, and user data, which are multiplexed in the standard AV multiplex format, are formed as files in which they are individually placed collectively.

That is, in the AV independent format, picture items in which video data are placed in the standard AV multiplex format are placed collectively in the body. Further, a header and a footer having the same form as that of the standard AV multiplex format are added to the body to form a video file.

Note that, since picture items each having a length equal to an integral multiple of the sector length of the optical disk 7 are collectively placed in the body of a video file of the AV independent format, the entire body has a size equal to an integral multiple of the sector length of the optical disk 7. That is, the body of a video file of the AV independent format has a size which exhibits sector alignment.

Further, the entire body of a video file has a size equal to an integral multiple of an ECC block length of the optical disk 7. As hereinafter described, the last filler of the body is adjusted such that the entire body of the video file has a size equal to an integral multiple of the ECC (Error Correction Code) block length of the optical disk 7.

The ECC block is a unit for reading/writing data from/to the optical disk 7 and for performing ECC processing.

Note that a sector is an example of a physical unit area of an optical disk 7, and that an ECC block is an example of a unit for reading/writing from/to the optical disk 7. Further, the physical unit area of the optical disk 7 can be formed from, for example, a plurality of sectors which is a fixed number. The unit for reading/writing from/to the optical disk 7 can be equal to, for example, a plurality of physical unit areas, which is a fixed number.

The ECC processing here is executed by a signal processing section 115 hereinafter described, in units of ECC blocks. An ECC block can be formed from one or more sectors.

In the following description, one sector means a physical unit area of the optical disk 7 and one ECC block means a reading/writing unit formed from one or more sectors.

Further, in FIG. 2, the index table is shown in the header of a file of the standard AV multiplex format. However, the index table is optical according to the MXF as described above. Thus, a video file shown in FIG. 3 does not adopt the index table (this applies similarly to an audio file hereinafter described).

In the AV independent format, multiplexed audio data of eight channels placed in the sound item in the standard AV multiplex format are demultiplexed into audio data for the individual channels. Thus, the audio data whose form has been converted from the AES3 format to the WAVE format are placed in the KLV structure in the body of a file for each channel. Further, a header and a footer having the same form as that of the standard AV multiplex format are added to the body to form an audio file.

That is, in the AV independent format, audio files of eight channels are formed independently of each other for audio data of the eight channels. An audio file of each channel is formed by processing the audio data of the channel so as to have the WAVE format, placing the processed audio data collectively in the KLV structure in the body, and further, adding a header and a footer having the same form as that of the standard AV multiplex format, to the body.

Note that, while audio data of the WAVE format of a channel are placed collectively in the KLV structure in the body of an audio file as described above, the entire audio data may not necessarily have a size equal to an integral multiple of the ECC block length of the optical disk 7. To overcome this inconvenience, a filler of the KLV structure is placed next to audio data of the KLV structure, and fillers are also placed next to the header and the footer, respectively.

The AV independent format includes the following files in addition to a video file and audio files for individual eight channels as described hereinabove. The AV independent format includes a metadata file of file units in which metadata of file units placed in the header metadata in the standard AV multiplex format are placed collectively. Further, the AV independent format further includes a metadata file of frame units in which system items in which metadata of frame units are placed in the standard AV multiplex format are placed collectively. Furthermore, the AV independent format includes an auxiliary file in which auxiliary items in which user data are placed in the standard AV multiplex format are placed collectively.

And in the AV independent format, a master file is formed in which pointers to a video file, audio files for individual eight channels, a metadata file of file units, a metadata file of frame units, and an auxiliary file are described.

That is, the master file is described in, for example, the Extensible Markup Language (XML). In the master file, for example, file names for a video file, audio files for individual eight channels, a metadata file of file units, a metadata file of frame units, and an auxiliary file are described as the pointers to the files.

Therefore, the video file, the audio files for individual eight channels, the metadata file of file units, the metadata file of frame units, and the auxiliary file can be referred to from the master file.

Note that, for example, the auxiliary file may be an optional file.

Further, the metadata file of file units, the metadata file of frame units, and the auxiliary file shown in FIG. 3 do not have a header and a footer of the same form as that of the standard AV multiplex format. However, a header and a footer of the same form as that of the standard AV multiplex format may otherwise be added to the metadata file of file units, the metadata file of frame units, and the auxiliary file.

Furthermore, the header metadata, which forms the header of a video file and an audio file of the AV independent format, has metadata of file units of a minimum set placed therein.

That is, the AV independent format includes a metadata file of file units in which metadata of file units placed in the header metadata in the standard AV multiplex format are placed collectively. Therefore, it is redundant to place the metadata of file units placed in the metadata file in an overlapping relationship with the header metadata, which form the header of the video file and the audio files. Further, this makes the size of the entire file of the AV independent format large.

However, in the MXF, the header metadata is an item essentially required for the header. Therefore, if a header is formed without placing header metadata, then the resulting header does not have the same form as that of the standard AV multiplex format.

Meanwhile, in the MXF, metadata of file units to be placed in the header metadata includes various items. Some of the items are essentially required but the others are optional.

Thus, in order to prevent the file size from becoming large and maintain the compatibility with the standard AV multiplex format, the header metadata, which form the header of the video file and the audio files of the AV independent format includes metadata of file units of a minimum set placed therein. That is, only metadata of those items whose placement is essentially required in the MXF are placed in the header metadata.

As described hereinabove, in the AV independent format, video data are placed collectively in the video file, and audio data of individual channels are placed collectively in the audio files of the individual channels. Therefore, editing such as AV independent editing in which video data and audio data are edited independently of each other can be performed readily.

Further, in the AV independent format, since audio data have the WAVE format, the data amount can be reduced when compared with an alternative case where audio data of the AES3 format are adopted as in the standard AV independent format. As a result, when a file of the AV independent format is recorded onto a storage such as the optical disk 7, the capacity of the storage necessary for the recording can be reduced when compared with an alternative case where a file of the standard AV multiplex format is recorded.

Furthermore, a video file and audio files of the AV independent format are formed by placing a header, a body, and a footer in order from the top therein, similarly to a file of the standard AV multiplex format. Furthermore, the header and the footer have the same form as that of the standard AV multiplex format. Therefore, if a video file and audio files of the AV independent format are recorded onto a removable optical disk 7 by the disk apparatus 1 and the optical disk 7 is loaded into the disk apparatus 2, then the disk apparatus 2 can read out the video file and the audio files of the AV independent format from the optical disk 7 if the disk apparatus 2 is a standard apparatus (which can handle a file of the MXF).

Furthermore, in the AV independent format, metadata of file units and metadata of frame units are collected separately into different files. This facilitates a search process in which metadata is used.

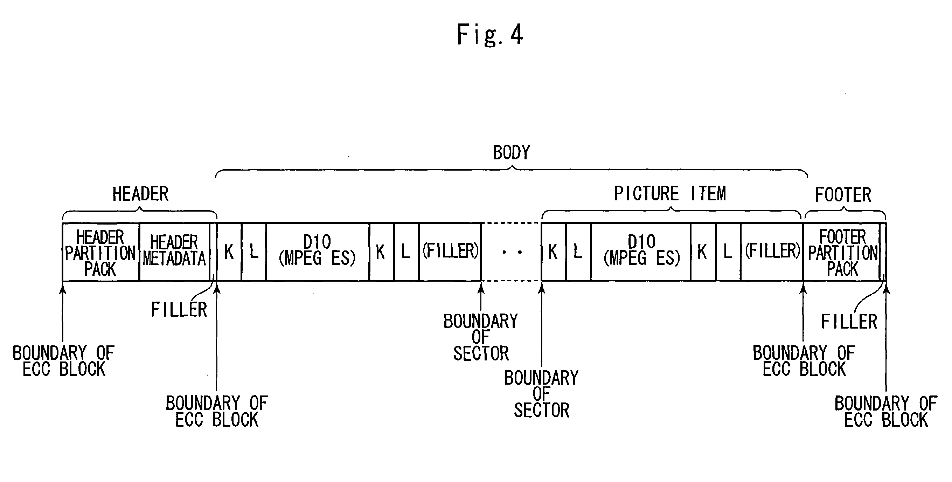

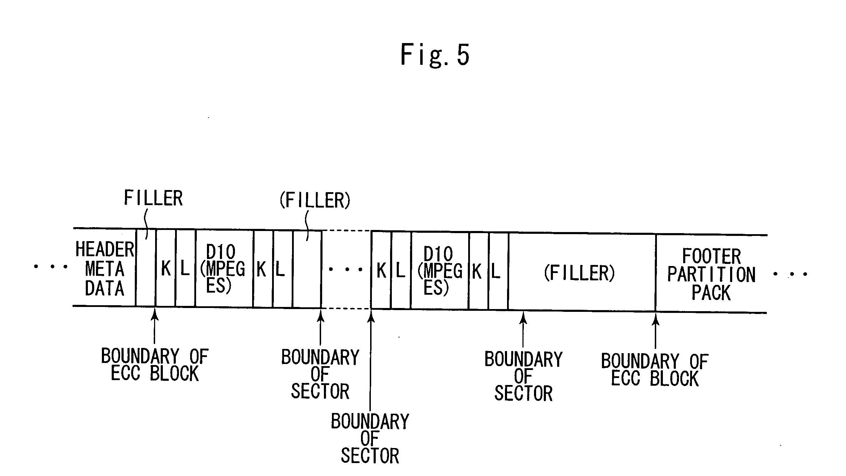

FIGS. 4 and 5 are diagrammatic representations illustrating a data amount of a video file of the AV independent format. As shown in FIG. 4, a filler is placed next to the header of the video file of the AV independent format to make the size of the entire header equal to an integral multiple of the ECC block length of the optical disk 7. The video file is written to the optical disk 7 such that the boundaries of the header of the video file coincide with the corresponding boundaries of ECC block(s) of the optical disk 7.

A filler is placed next to the footer of the video file to make the size of the entire footer equal to an integral multiple of the ECC block length of the optical disk 7. The video file is written to the optical disk 7 such that the boundaries of the footer of the video file coincide with the corresponding boundaries of ECC block(s) of the optical disk 7.

The entire body of the video file has a size equal to an integral multiple of the ECC block length of the optical disk 7. The video file is written to the optical disk 7 such that the boundaries of the body coincide with the corresponding boundaries of ECC block(s) of the optical disk 7. Further, each of picture items and a filler placed next thereto in the body have a size equal to an integral multiple of the sector length of the optical disk 7. The video file is written to the optical disk 7 such that the top-side boundary of the picture item coincides with a boundary of a sector and the bottom-side boundary of the filler added to the picture item coincides with a boundary of a sector.

As shown in FIG. 5, the last filler of the body has a size thereof adjusted such that the entire body has a size equal to an integral multiple of the ECC block length of the optical disk 7. When the video file is written to the optical disk 7, the bottom-side boundary of the filler added to the last picture item of the body coincides with the corresponding boundary of an ECC block.

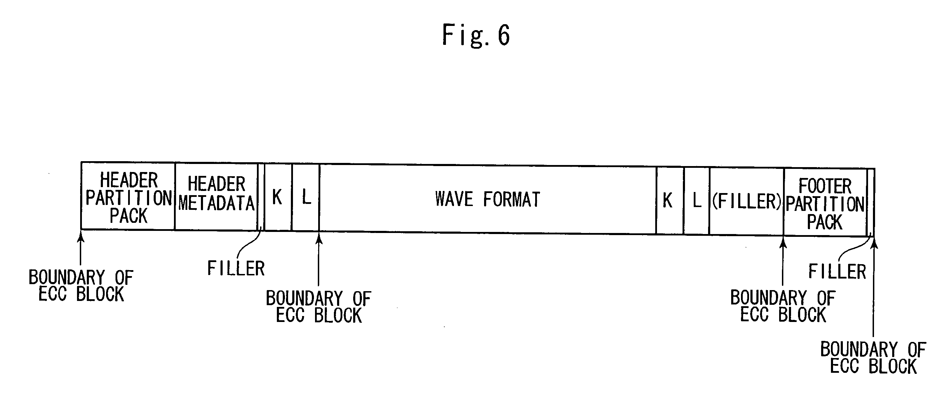

FIG. 6 is a diagrammatic representation illustrating a data amount of an audio file of the AV independent format. The last filler has a size thereof adjusted such that the header of the audio file and the key and the length of the audio data formed into a KLV structure of the body have a size equal to an integral multiple of the ECC block length of the optical disk 7. The audio file is written to the optical disk 7 such that the top-side boundary of the header of the audio file coincides with the corresponding boundary of an ECC block of the optical disk 7. Further, the audio file is written to the optical disk 7 such that the bottom-side boundary of the length coincides with the corresponding boundary of an ECC block.

The value of the audio data formed into the KLV structure of the body and a filler formed into the KLV structure added to the body have a size equal to an integral multiple of the ECC block length of the optical disk 7. The audio file is written to the optical disk 7 such that the bottom-side boundary of the body coincides with the corresponding boundary of an ECC block of the optical disk 7.

A filler is placed next to the footer of the audio file to make the size of the entire footer equal to an integral multiple of the ECC block length of the optical disk 7. The audio file is written to the optical disk 7 such that both boundaries of the footer of the audio file coincide with the corresponding boundaries of ECC block(s) of the optical disk 7.

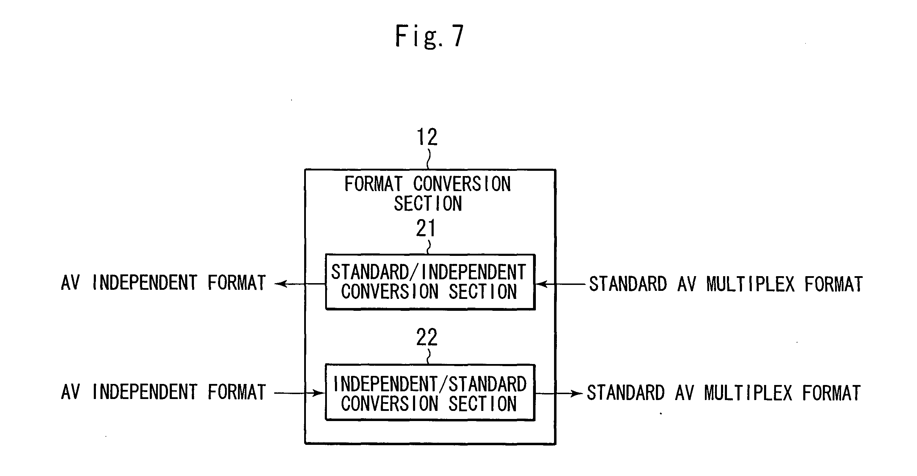

Next, FIG. 7 shows an example of a configuration of the format conversion section 12 of the disk apparatus 1 shown in FIG. 1.

The format conversion section 12 includes a
standard/ independent conversion section 21 and an
independent/ standard conversion section 22.

The standard/independent conversion section 21 converts a file of the standard AV multiplex format of FIG. 2 supplied thereto from the communication interface 13 into a file of the AV independent format of FIG. 3 and supplies the resulting file to the disk driving apparatus 11. The independent/ standard conversion section 22 converts a file of the AV independent format of FIG. 3 supplied thereto from the disk driving apparatus 11 into a file of the standard AV multiplex format of FIG. 2 and supplies the resulting file to the communication interface 13.

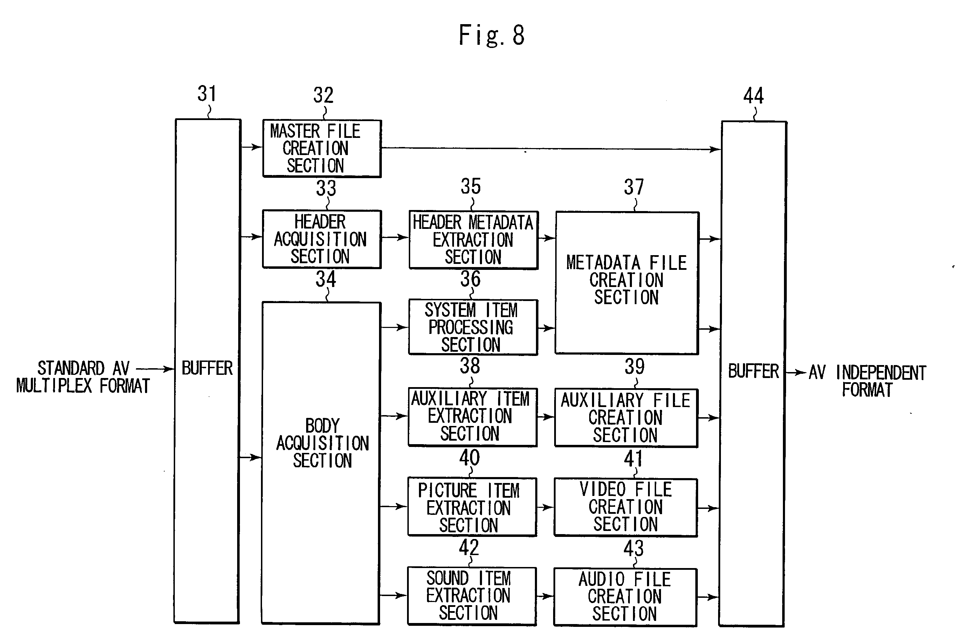

Next, FIG. 8 shows an example of a configuration of the standard/independent conversion section 21 shown in FIG. 7.

A file of the standard AV multiplex format is supplied to a buffer 31 from the communication interface 13. The buffer 31 temporarily stores the file of the standard AV multiplex format supplied thereto.

After the file of the standard AV multiplex format is stored into the buffer 31, a master file creation section 32 creates a master file of the AV independent format from the file of the standard AV multiplex format and supplies the created file to a buffer 44.

A header acquisition section 33 extracts a header from the file of the standard AV multiplex format stored in the buffer 31 to acquire the header and supplies the header to a header metadata extraction section 35.

A body acquisition section 34 extracts a body from the file of the standard AV multiplex format stored in the buffer 31 to acquire the body and supplies the body to a system item processing section 36, an auxiliary item extraction section 38, a picture item extraction section 40, and a sound item extraction section 42.

The header metadata extraction section 35 extracts header metadata from the header supplied thereto from the header acquisition section 33 and supplies metadata of file units placed in the header metadata to a metadata file creation section 37. The system item processing section 36 extracts system items in which the metadata of frame units are placed from edit units of the body supplied thereto from the body acquisition section 34 and supplies the system items to the metadata file creation section 37. The metadata file creation section 37 creates a metadata file of file units in which the metadata of file units supplied thereto from the header metadata extraction section 35 are placed. Further, the metadata file creation section 37 creates a metadata file of frame units in which the system items of the edit units supplied thereto from the system item processing section 36 are collectively (and sequentially) placed. The metadata file creation section 37 supplies the metadata file of file units and frame units to the buffer 44.

The auxiliary item extraction section 38 extracts auxiliary items in which user data of frame units are placed from the edit units of the body supplied thereto from the body acquisition section 34 and supplies the auxiliary items to an auxiliary file creation section 39. The auxiliary file creation section 39 creates an auxiliary file in which the auxiliary items of the edit units supplied thereto from the auxiliary item extraction section 38 are placed collectively and supplies the auxiliary file to the buffer 44.

The picture item extraction section 40 extracts picture items in which video data of frame units are placed from the edit units of the body supplied thereto from the body acquisition section 34 and supplies the picture items to a video file creation section 41. The video file creation section 41 creates a video file in which the picture items of the edit units supplied thereto from the picture item extraction section 40 are placed collectively in the body and further a header and a footer of the same format as that of the standard AV multiplex format are added to the body. The video file creation section 41 supplies the video file to the buffer 44.

The sound item extraction section 42 extracts sound items in which audio data of frame units are placed from the edit units of the body supplied thereto from the body acquisition section 34 and supplies the sound items to an audio file creation section 43. The audio file creation section 43 creates an audio file for each channel in which audio data of the channel placed in the sound items of the edit units supplied thereto from the sound item extraction section 42 are placed collectively for the channel in the body and further a header and a footer of the same format as that of a file of the standard AV multiplex format are added to the body. The audio file creation section 43 supplies the audio files to the buffer 44.

The buffer 44 temporarily stores the master file supplied thereto from the master file creation section 32, the metadata files of file units and frame units supplied thereto from the metadata file creation section 37, the auxiliary file supplied thereto from the auxiliary file creation section 39, the video file supplied thereto from the video file creation section 41, and the audio files for the individual channels supplied thereto from the audio file creation section 43. Further, the buffer 44 supplies those files to the disk driving apparatus 11 as files of the AV independent format.

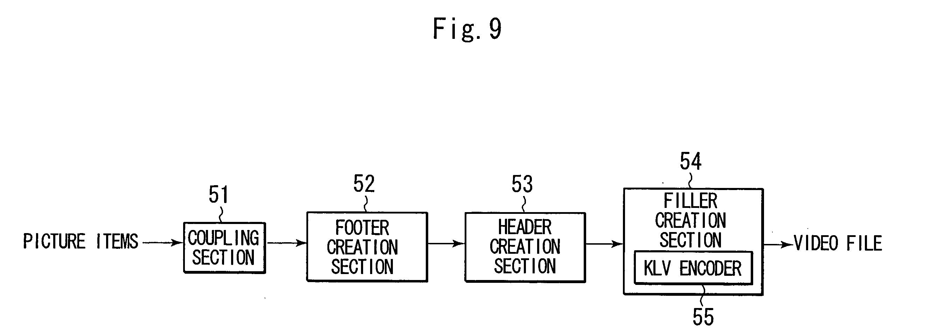

Next, FIG. 9 shows an example of a configuration of the video file creation section 4 shown in FIG. 8.

A picture item of each edit unit supplied from the picture item extraction section 40 is supplied to a coupling section 51. The coupling section 51 successively couples (connects) the picture items of the edit units supplied thereto and supplies the picture items coupled to each other to a footer creation section 52. The footer creation section 52 creates a footer of the same form as that of a file of the standard AV multiplex format, which is added to a body provided by the picture items of the edit units coupled to each other and supplied thereto from the coupling section 51. Then, the footer creation section 52 supplies the footer and the body to a header creation section 53.

The header creation section 53 creates a header to be added to the footer and the body supplied thereto from the footer creation section 52. The header creation section 53 supplies the header, the body, and the footer to a filler creation section 54.

The filler creation section 54 creates a filler to be added to the header and a filler to be added to the footer. Further, the filler creation section 54 creates the last filler of the body. A KLV encoder 55 of the filler creation section 54 encodes the last filler of the body into the KLV structure.

The filler creation section 54 creates a video file of the AV independent format formed from the header, the body, and the footer to which the fillers are added and outputs the created video file.

The fillers created by the filler creation section 54 are added to the header, the body, or the footer of the video file, respectively. As a result, the data amount of each of the header, the body, and the footer is adjusted to an integral multiple of the ECC block length of the optical disk 7.

In this way, when a video file is written to the optical disk 7, the likelihood that the header, the body, or the footer will be recorded onto a part of an ECC block can be prevented. Thus, reading/writing of a video file can be executed efficiently.

Further, each of the header, the body, and the footer has a size equal to an integral multiple of the ECC block length of the optical disk 7. Therefore, if each of the header, the body, and the footer is recorded such that the boundaries thereof coincide with the corresponding boundaries of ECC block(s), then when only the header, the body, or the footer is written or read out, the header, the body, or the footer can be written to or read out from a minimum number of ECC blocks. That is, the processing of reading/writing a video file from/to the optical disk 7 can be executed more efficiently.

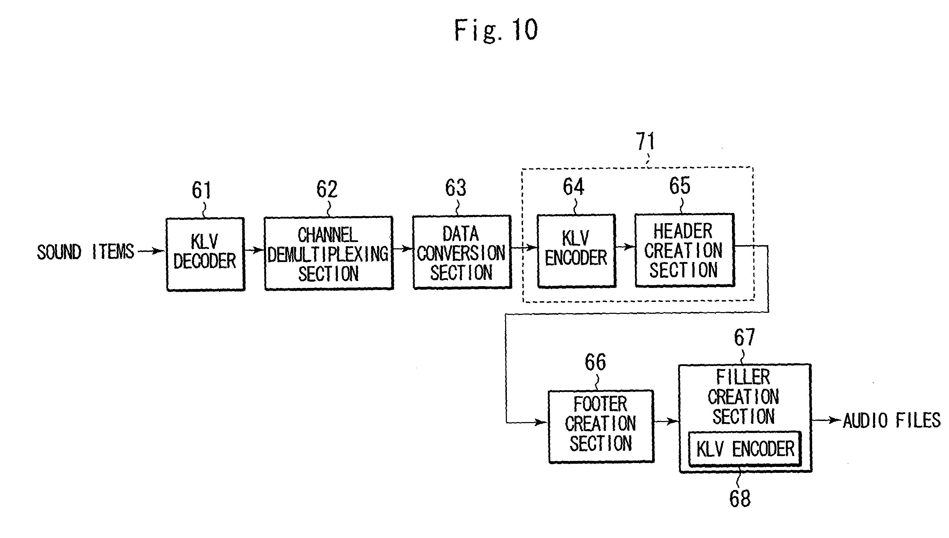

Next, FIG. 10 shows an example of a configuration of the audio file creation section 43 shown in FIG. 8.

A sound item of each edit unit supplied from the sound item extraction section 42 is supplied to a KLV decoder 61. The KLV decoder 61 decomposes the KLV structure of audio data placed in the sound item of the edit unit to obtain multiplexed audio data of eight channels (hereinafter referred to suitably as multiplexed audio data) and supplies the multiplexed audio data to a channel demultiplexing section 62.

The channel demultiplexing section 62 demultiplexes the multiplexed audio data for the sound items supplied thereto from the KLV decoder 61 into audio data of individual channels and supplies the audio data of the channels collectively for the individual channels to a data conversion section 63.

The data conversion section 63 converts the coding system of the audio data of the channels supplied thereto from the channel demultiplexing section 62. That is, while audio data in the standard AV multiplex format are encoded by the AES3 format, audio data in the AV independent format are encoded by the WAVE system. Therefore, the data conversion section 63 converts the audio data (audio data of the AES3 system) encoded in the AES3 system supplied thereto from the channel demultiplexing section 62 into audio data (audio data of the WAVE system) encoded in the WAVE system.

Note that, while the data conversion section 63 here converts audio data of the AES3 system into audio data of the WAVE system, the data conversion section 63 can convert the audio data into audio data of a system other than the WAVE system. That is, conversion of the audio data by the data conversion section 63 is executed for the purpose of suppressing the data amount of audio data of the AES3 system. Therefore, the data conversion section 63 may adopt any encoding system as long as the encoding system can achieve this purpose.

Further, if the data amount of audio data does not matter, the audio file creation section 43 can be configured without provision of the data conversion section 63.

The audio data of the WAVE system of the individual channels obtained by the data conversion section 63 are supplied to a KLV encoder 64. The KLV encoder 64 KLV-codes the audio data supplied thereto from the data conversion section 63 and collected for the individual channels into the KLV structure and supplies the resulting audio data to a header creation section 65.

The header creation section 65 creates a header of the same form as that of a file of the standard AV multiplex format, which is to be added to a body of each channel which includes audio data of the channel supplied thereto from the KLV encoder 64 and supplies the body and the header to a footer creation section 66.

The footer creation section 66 creates a footer of the same form as that of a file of the standard AV multiplex format, which is to be added to the body. The footer creation section 66 supplies the header, the footer, and the body to a filler creation section 67.

The filler creation section 67 creates a filler to be added to the header, a filler to be added to the body, and a filler to be added to the footer. The filler creation section 67 here creates a filler such that the header and a key and a length added by the KLV encoder 64 have a data amount equal to an integral multiple of the data amount of an ECC block and places the created filler next to the header, as shown in FIG. 6. Further, the filler creation section 67 creates another filler such that the footer has a data amount equal to an integral multiple of the data amount of an ECC block and places the created filler next to the footer, as shown in FIG. 6.

A KLV encoder 68 of the filler creation section 67 encodes the filler to be added to the body into the KLV structure. The filler creation section 67 creates the filler encoded into the KLV structure such that the audio data have a data amount equal to an integral multiple of the data amount of an ECC block and places the created filler next to the audio data, as shown in FIG. 6.

Note that the KLV encoder 64 and the header creation section 65 constitute a top-side data creation section 71.

In this way, the filler created by the filler creation section 54 is added to the header, the audio data, or the footer. As a result, the data amount of each of the header and a key and a length added thereto by the KLV encoder 64, the audio data, and the footer of the audio file is adjusted so as to be equal to an integral multiple of the ECC block length of the optical disk 7.

This prevents the header, the body, or the footer of an audio file from being recorded onto a part of an ECC block when the audio file is written to the optical disk 7. Therefore, reading/writing of a video file can be executed efficiently.

Further, each of the header and the key and the length added thereto by the KLV encoder 64, the audio data, and the footer has a size equal to an integral multiple of the ECC block length of the optical disk 7. Therefore, if the header and the key and the length added thereto by the KLV encoder 64, the audio data, or the footer is recorded such that the boundaries thereof coincide with the corresponding boundaries of ECC block(s), then when only the header and a key and a length added thereto by the KLV encoder 64, only the audio data, or only the footer is written or read out, the header and the key and the length added thereto by the KLV encoder 64, the audio data, or the footer can be written or read out from a minimum number of ECC blocks. That is, the processing of reading/writing audio files from/to the optical disk 7 can be executed more efficiently.

Next, the standard/independent conversion section 21 shown in FIG. 8 executes a master file creation process for creating a master file as a file of the AV independent format, a metadata file creation process for creating metadata files of file units and frame units, an auxiliary file creation process for creating an auxiliary file, a video file creation process for creating a video file, and an audio file creation process for creating audio files.

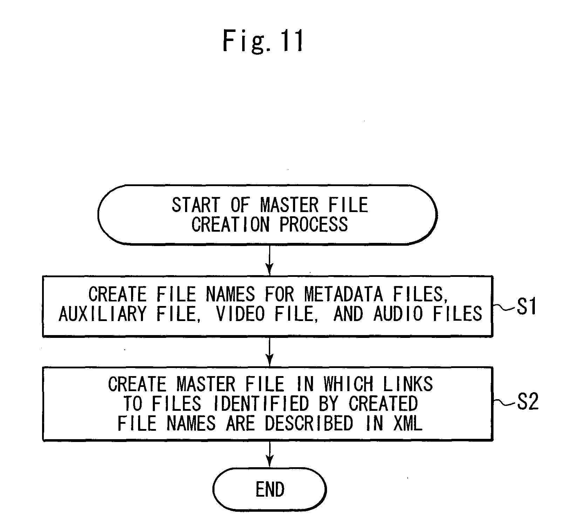

Thus, referring to flowcharts of FIGS. 11 to 13, the master file creation process, the metadata file creation process, the auxiliary file creation process, the video file creation process, and the audio file creation process executed by the standard/independent conversion section 21 will be described.

Referring first to the flowchart of FIG. 11, the master file creation process will be described.

For example, when a file of the standard AV format is supplied to and stored into the buffer 31 (FIG. 8), the master file creation process is started. First at step S1, the master file creation section 32 (FIG. 8) creates file names for metadata files of file units and frame units, an auxiliary file, a video file, and audio files of individual channels. Then, the processing advances to step S2. At step S2, the master file creation section 32 creates a master file in which links to the files identified by the file names created at step S1 are described in XML and supplies the master file to the buffer 44 for storage therein. The master file creation process is ended thereby.

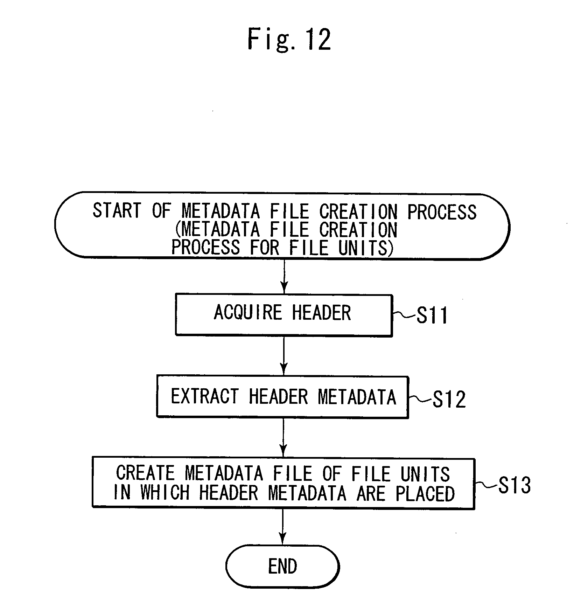

Referring next to the flowchart of FIG. 12, the metadata file creation process for file units for creating a metadata file of file units will be described.

For example, when a file of the standard AV format is supplied to and stored into the buffer 31 (FIG. 8), the metadata file creation process for file units is started. First at step S11, the header acquisition section 33 acquires the header from the file of the standard AV format stored in the buffer 31 and supplies the header to the header metadata extraction section 35. Then, the processing advances to step S12. At step S12, the header metadata extraction section 35 extracts header metadata from the header supplied thereto from the header acquisition section 33 and supplies metadata of file units placed in the header metadata to the metadata file creation section 37. Then, the processing advances to step S 13. At step S13, the metadata file creation section 37 creates a metadata file of file units in which the metadata of file units supplied thereto from the header metadata extraction section 35 are placed and supplies the created metadata file to the buffer 44 for storage therein. The metadata file creation process for file units is ended thereby.

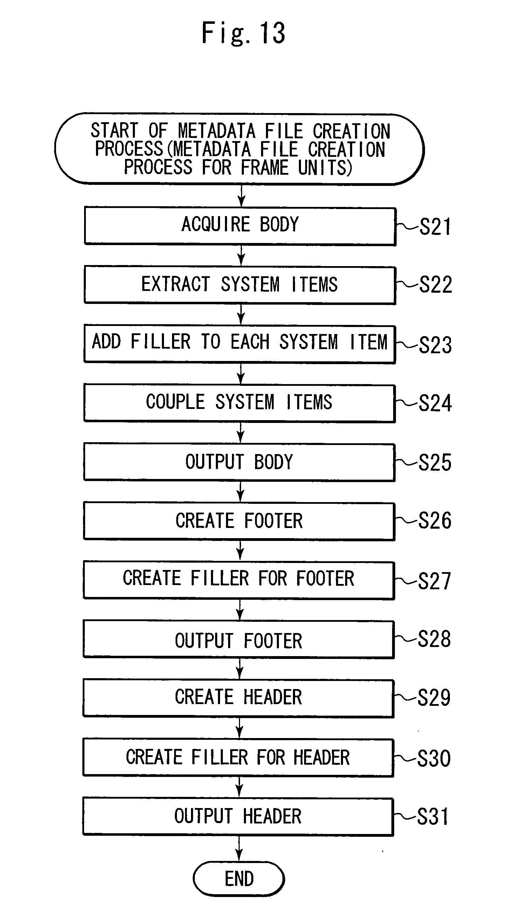

Referring next to the flowchart of FIG. 13, the metadata file creation process for frame units for creating a metadata file of frame units will be described.

For example, when a file of the standard AV format is supplied to and stored into the buffer 31 (FIG. 8), the metadata file creation process for frame units is started. First at step S21, the body acquisition section 34 acquires the body from the file of the standard AV multiplex format stored in the buffer 31 and supplies the body to the system item processing section 36. Then, the processing advances to step S22. At step S22, the system item processing section 36 extracts system items in which metadata of frame units are placed from edit units of the body supplied thereto from the body acquisition section 34 and supplies the system items to the metadata file creation section 37. Then, the processing advances to step S23. At step S23, the metadata file creation section 37 adds fillers to the system items of the edit units supplied thereto from the system item processing section 36. Then, the processing advances to step S24.

At step S24, the metadata file creation section 37 couples the system items to which the fillers are added to create a body of the metadata file of frame units in which the system items of the edit units are placed collectively and supplies the created body to the buffer 44. Then, the processing advances to step S25. At step S25, the buffer 44 outputs the body of the metadata file. Then, the processing advances to step S26.

At step S26, the metadata file creation section 37 creates a footer. Then, the processing advances to step S27. At step S27, the metadata file creation section 37 creates a filler for the footer and supplies the footer to which the filler is added to the buffer 44. Then, the processing advances to step S28. At step S28, the buffer 44 outputs the footer. Then, the processing advances to step S29.

At step S29, the metadata file creation section 37 creates a header. Then, the processing advances to step S30. At step S27, the metadata file creation section 37 creates a filler for the header and supplies the header to which the filler is added to the buffer 44. Then, the processing advances to step S31. At step S31, the buffer 44 outputs the header. The metadata file creation process for frame units is ended thereby.

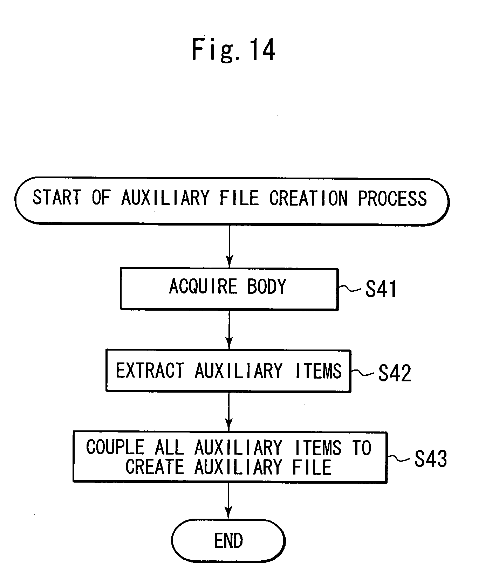

Referring next to the flowchart of FIG. 14, the auxiliary file creation process for creating an auxiliary file will be described.

For example, when a file of the standard AV format is supplied to and stored into the buffer 31 (FIG. 8), the auxiliary file creation process is started. First at step S41, the body acquisition section 34 acquires the body from the file of the AV multiplex format stored in the buffer 31 and supplies the body to the auxiliary item extraction section 38. Then, the processing advances to step S42. At step S42, the auxiliary item extraction section 38 extracts auxiliary items from edit units of the body supplied thereto from the body acquisition section 34 and supplies the auxiliary items to the auxiliary file creation section 39. Then, the processing advances to step S43. At step S43, the auxiliary file creation section 39 couples the auxiliary items of the edit units supplied thereto from the auxiliary item extraction section 38 to create an auxiliary file in which the auxiliary items of the edit units are placed collectively and supplies the auxiliary file to the buffer 44 for storage therein. The auxiliary file creation process is ended thereby.

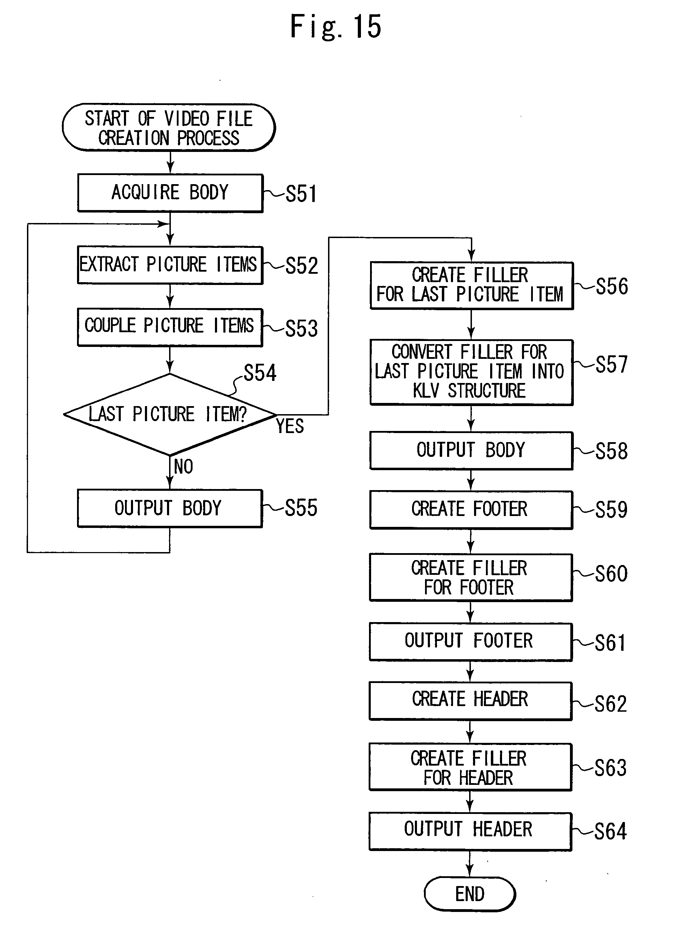

Referring next to the flowchart of FIG. 15, the video file creation process for creating a video file will be described.

For example, when a file of the standard AV format is supplied to and stored into the buffer 31 (FIG. 8), the video file creation process is started. First at step S51, the body acquisition section 34 acquires the body from the file of the standard AV multiplex format stored in the buffer 31 and supplies the body to the picture item extraction section 40. Then, the processing advances to step S52. At step S52, the picture item extraction section 40 extracts picture items from edit units of the body supplied thereto from the body acquisition section 34 and supplies the picture items to the video file creation section 41. Then, the processing advances to step S53. At step S53, the coupling section 51 of the video file creation section 41 (FIG. 9) couples the picture items of the edit units supplied thereto from the picture item extraction section 40 to create a body in which the picture items of the edit units are placed collectively. Then, the processing advances to step S54.

At step S54, the video file creation section 41 determines whether or not a picture item coupled is the last picture item. If it is determined that the picture item coupled is not the last picture item, then the processing advances to step S55. At step S55, the video file creation section 41 outputs the created body to the buffer 44. Then, the processing returns to step S52 to repeat the above-described steps. In this case, the footer creation section 52, the header creation section 53, and the filler creation section 54 let the body pass therethrough directly.

At step S54, if it is determined that the picture item coupled is the last picture item, then the processing advances to step S56. At step S56, the filler creation section 54 of the video file creation section 41 (FIG. 9) creates a filler for the last picture item. The filler has a data amount thereof adjusted such that the body has a data amount equal to an integral multiple of the data amount of an ECC block when the filler is converted into the KLV structure. Then, the processing advances to step S57. At step S57, the KLV encoder 55 converts the filler for the last picture item into the KLV structure. Then, the processing advances to step S58. At step S58, the video file creation section 41 outputs the filler converted into the KLV structure as part of the body. Then, the processing advances to step S59.

At step S59, the footer creation section 52 creates a footer. Then, the processing advances to step S60. At step S60, the filler creation section 54 creates a filler for the footer. The filler has a data amount thereof adjusted such that the footer has a data amount equal to an integral multiple of an ECC block. Then, the processing advances to step S61. At step S61, the video file creation section 41 outputs the footer. Then, the processing advances to step S62.

At step S62, the header creation section 53 creates a header. Then, the processing advances to step S63. At step S63, the filler creation section 54 creates a filler for the header. The filler has a data amount thereof adjusted such that the header has a data amount equal to an integral multiple of an ECC block. Then, the processing advances to step S64. At step S64, the video file creation section 41 outputs the header. The video file creation process is ended thereby.

Thus, a header is created after a body and a footer are created. Therefore, the header, which includes data that are not defined unless the body is defined, such as a reproduction time or time code (TC) of video data, can be created in one processing step.

For example, if the header is created first, data such as a reproduction time or time code (TC) of video data are not defined until creation of the body is ended, and thus the data cannot be written to the header. The processing of writing data such as a reproduction time or time code to the header must be executed a second time when creation of the body is ended. This would be double work. In this case, when a video file is recorded onto a recording medium such as the optical disk 7, either redundant processing for seeking the header occurs or it is difficult to reserve an area required for recording the header since the data amount of the header is not yet defined. As a result, the header may, in some cases, be recorded at a position distant from the body and the footer on the optical disk 7.

If the header is created after the body and the footer are created, such duplicated work can be saved, allowing the header, which includes data that are not defined unless the body is defined, to be created in one processing step. Further, when a video file is recorded onto a recording medium such as the optical disk 7, the header can be recorded following the body and the footer reliably.

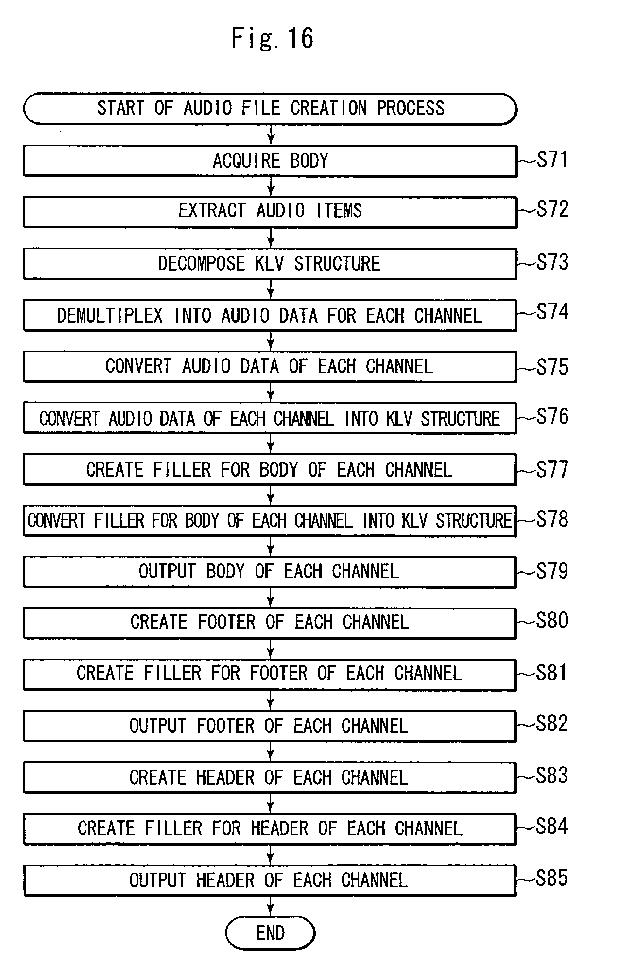

Referring next to the flowchart of FIG. 16, the audio file creation process for creating audio files will be described.

For example, when a file of the standard AV format is supplied to and stored into the buffer 31 (FIG. 8), the audio file creation process is started. First at step S71, the body acquisition section 34 acquires the body from the file of the standard AV multiplex format stored in the buffer 31 and supplies the body to the sound item extraction section 42. Then, the processing advances to step S72. At step S72, the sound item extraction section 42 extracts sound items from edit units of the body supplied thereto from the body acquisition section 34 and supplies the sound items to the audio file creation section 43. Then, the processing advances to step S73. At step S73, the KLV decoder 61 of the audio file creation section 43 (FIG. 10) decomposes the KLV structure of audio data placed in the sound items of the edit units and supplies the resulting multiplexed audio data of eight channels (multiplexed audio data) to the channel demultiplexing section 62. Then, the processing advances to step S74.

At step S74, the channel demultiplexing section 62 demultiplexes the multiplexed audio data for the sound items to form audio data of the AES3 format of individual channels and places the audio data of the AES3 format of the individual channels collectively for the individual channels. Then, the channel demultiplexing section 62 supplies the resulting audio data of the AES3 format to the data conversion section 63.

And then, the processing advances to step S75. At step S75, the data conversion section 63 converts the audio data of the AES3 format of the individual channels supplied thereto from the channel demultiplexing section 62 into audio data of the WAVE system and supplies the audio data of the WAVE system to the KLV encoder 64. Then, the processing advances to step S76. At step S76, the KLV encoder 64 KLV-codes each of the audio data of the WAVE format collected for the individual channels and supplied thereto from the data conversion section 63 into the KLV structure. Consequently, the KLV encoder 64 creates a body of each channel in which the audio data of the WAVE format of the channel are placed collectively. Then, the processing advances to step S77.

At step S77, the filler creation section 67 creates a filler for the body of each channel. The filler has a data amount thereof adjusted such that the audio data have a data amount equal to an integral multiple of an ECC block when the filler is formed into the KLV structure. Then, the processing advances to step S78. At step S78, the KLV encoder 68 KLV-codes the fillers of the bodies for the individual channels into the KLV structure. Then, the processing advances to step S79. At step S79, the audio file creation section 43 outputs the bodies of the individual channels. Then, the processing advances to step S80. When the bodies of the individual channels are outputted, the values of the audio data and the fillers in the KLV structure are outputted, but the keys and the lengths of the audio data are not outputted.

At step S80, the footer creation section 66 creates a footer of each channel. Then, the processing advances to step S81. At step S81, the filler creation section 67 creates a filler for the footer of each channel. The filler has a data amount thereof adjusted such that the footer has a data amount equal to an integral multiple of an ECC block. Then, the processing advances to step S82. At step S82, the video file creation section 41 outputs the footers of the individual channels. Then, the processing advances to step S83.

At step S83, the header creation section 65 creates a header of each channel. Then, the processing advances to step S84. At step S84, the filler creation section 54 creates a filler for the footer of each channel. The filler has a data amount thereof adjusted such that the header and a key and a length of the audio data have a data amount equal to an integral multiple of an ECC block. Then, the processing advances to step S85. At step S85, the video file creation section 41 outputs the headers of the individual channels. The audio file creation process is ended thereby. At step S85, the keys and the lengths of the audio data are outputted together with the headers of the individual channels.

Thus, a header is created after a body and a footer are created. Consequently, a header, which includes data that are not defined unless a body is defined, such as a reproduction time or time code (TC) of audio data, can be created in one processing step.

Further, when audio files are recorded onto a recording medium such as the optical disk 7, the headers can be recorded following the bodies and the footers reliably.

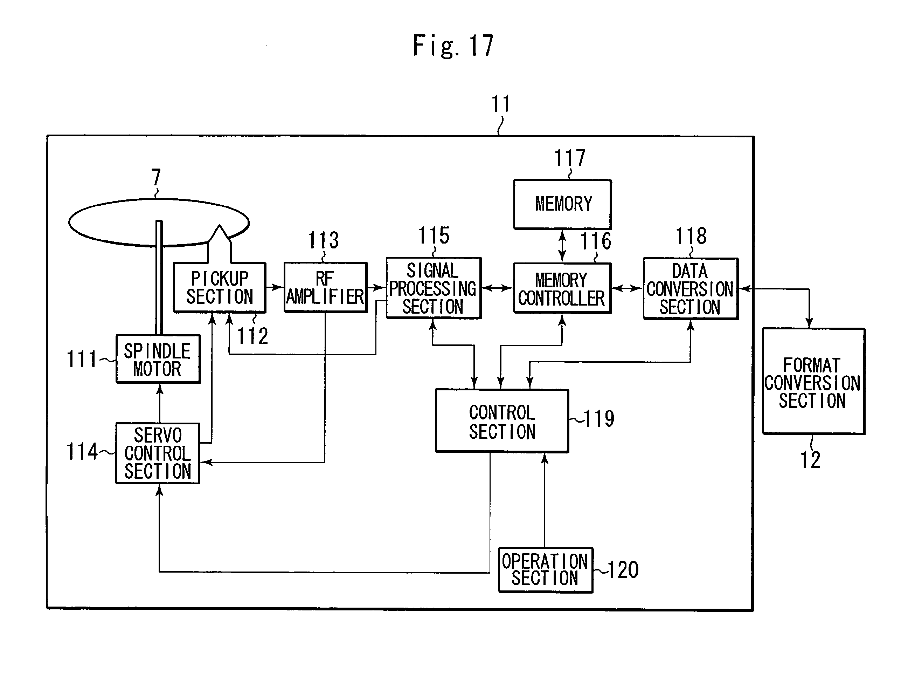

FIG. 17 shows an example of a configuration of an embodiment of the disk driving apparatus 11.

A spindle motor 111 drives the optical disk 7 to rotate at a Constant Linear Velocity (CLV), a Constant Angular Velocity (CAV), or the like, based on a spindle motor driving signal from a servo control section 114.

A pickup section 112 controls output of laser light based on a recording signal supplied thereto from a signal processing section 115 to record the recording signal onto an optical disk 7. The pickup section 112 also emits the laser light by condensing the laser light onto the optical disk 7. Further, the pickup section 112 photoelectrically converts reflected light from the optical disk 7 to generate a current signal and supplies the current signal to a Radio Frequency (RF) amplifier 113. Note that the laser light is controlled so as to be emitted onto a predetermined position by a servo signal supplied to the pickup section 112 from the servo control section 114.

The RF amplifier 113 generates a focusing error signal and a tracking error signal, and a reproduced signal based on the current signal from the pickup section 112 and supplies the tracking error signal and the focusing error signal to the servo control section 114 and the reproduced signal to the signal processing section 115.

The servo control section 114 controls focusing servo operation and tracking servo operation. Specifically, the servo control section 114 generates a focusing servo signal and a tracking servo signal based on the focusing error signal and the tracking error signal from the RF amplifier 113, respectively, and supplies the generated signals to an actuator (not shown) of the pickup section 112. Further, the servo control section 114 generates the spindle motor driving signal for driving the spindle motor 111 to control spindle servo operation for rotating the optical disk 7 at a predetermined rotational speed.

Furthermore, the servo control section 114 performs thread control by which the pickup section 112 is moved in a radial direction of the optical disk 7 to change positions onto which the laser light is emitted. Note that setting of a position for reading out a signal from the optical disk 7 is performed by a control section 119. The position of the pickup section 112 is controlled such that the signal can be read out from the set reading position.

The signal processing section 115 modulates recording data inputted from a memory controller 116 to generate a recording signal and supplies the recording signal to the pickup section 112. Further, the signal processing section 115 demodulates a reproduced signal from the RF amplifier 113 to generate reproduced data and supplies the reproduced data to the memory controller 116.

The memory controller 116 stores recording data from a data conversion section 118 into a memory 117, and also reads out the recording data and supplies the read data to the signal processing section 115 suitably, as hereinafter described. Further, the memory controller 116 stores reproduced data from the signal processing section 115 into the memory 117, and also reads out the reproduced data and supplies the read data to the data conversion section 118, suitably.

The data conversion section 118 creates a file of low-res data, which are data wherein the data amount of data included in a file of the AV independent format is reduced, from the file of the AV independent format supplied thereto from the format conversion section 12. The data conversion section 118 supplies the file of the low-res data to the memory controller 116 together with the file of the AV independent format.

Further, the data conversion section 118 supplies the reproduced data supplied thereto from the memory controller 116 to the format conversion section 12.

The control section 119 controls the servo control section 114, the signal processing section 115, the memory controller 116, and the data conversion section 118 based on a signal such as an operation signal from an operation section 120 to cause these sections to execute recording/reproduction processing.

The operation section 120 is operated by, for example, a user and supplies an operation signal corresponding to the operation to the control section 119.

In the disk driving apparatus 11 having the configuration described hereinabove, when the user operates the operation section 120 to instruct recording of data, the data supplied from the format conversion section 12 are supplied to and recorded onto the optical disk 7 through the data conversion section 118, the memory controller 116, the sinal processing section 115, and the pickup section 112.

Meanwhile, when the user operates the operation section 120 to instruct reproduction of data, the data are read out and reproduced from the optical disk 7 through the pickup section 112, the RF amplifier 113, the signal processing section 115, the memory controller 16, and the data conversion section 118 and supplied to the format conversion section 12.

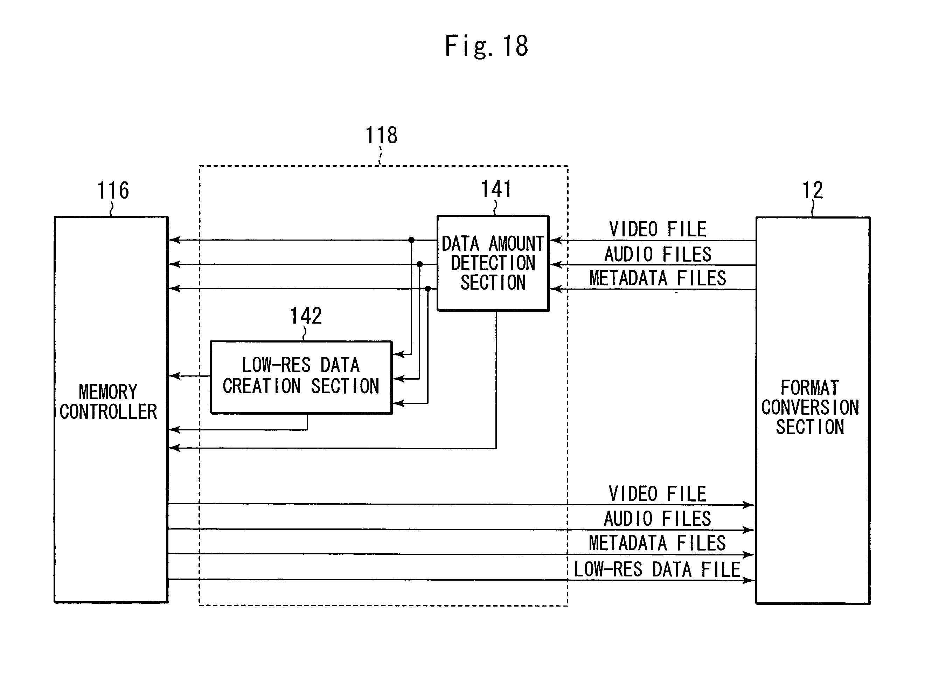

Next, FIG. 18 shows an example of a configuration of the data conversion section 118 shown in FIG. 17.

To record data onto an optical disk 7, files of the AV independent format including a video file, audio files, and metadata files to be recorded are supplied from the format conversion section 12 to a data amount detection section 141.

The data amount detection section 141 supplies each of the video file, the audio files, and the metadata files supplied from the format conversion section 12 directly to the memory controller 116. Further, the data amount detection section 141 detects data amounts of the video file and the audio files and supplies the detected data amounts to the memory controller 116. That is, the data amount detection section 141 detects, for example, a data amount equal to a predetermined reproduction time for each of the video file and the audio files supplied thereto from the format conversion section 12 and supplies the detected data amounts to the memory controller 116.

A low-res data creation section 142 creates a data series of low-res data, in which the data amount of data supplied thereto is reduced, and supplies the low-res data to the memory controller 116. In this case, the low-res data creation section 142 outputs the low-res data processed into a file format. Further, the low-res data creation section 142 detects a data amount of the low-res file equal to, for example, a predetermined reproduction time and supplies the detected data amount to the memory controller 116.

Low-res data of a file format will hereinafter be referred to also as a low-res data file.

And the video file and the audio files supplied to the memory controller 116 are supplied to and recorded onto the optical disk 7 in the above-described way.

A data series of the video file and the audio files supplied from the format conversion section 12 and a data series of low-res data outputted from the low-res data creation section 142 here are data series of picture and sound data having the same contents. However, the video file and the audio files supplied from the format conversion section 12 are intended for provision to the user as primary data, so to speak. For this reason, the video file and the audio files supplied from the format conversion section 12 will hereinafter be referred to suitably as main line data.

While low-res data are picture and sound data having the same contents as main line data as described above, the data amount thereof is small. Therefore, to reproduce data for a specific reproduction time, the low-res data can be read out from the optical disk 7 more quickly than the main line data.

Note that a data rate of, for example, 25 Mbps (Mega-bit per second) or so may be adopted for main line data. In this case, a data rate of, for example, 3 Mbps or so may be adopted for low-res data. Further, in this case, if a data rate of, for example, 2 Mbps or so is adopted for metadata, then a data rate for the entire data for recording onto the optical disk 7 is 30 (25+3+2) Mbps or so. Therefore, an optical disk 7 (a disk driving apparatus 11 that drives the optical disk 7) can be adopted, which may cover a sufficiently practicable range of recording rates including, for example, 35 Mbps.

As described hereinabove, the data conversion section 118 shown in FIG. 16 supplies not only a data series of main line data (the video file and the audio files) but also a data series of metadata and low-res data to the memory controller 116. And the main line data, the metadata, and the low-res data supplied to the memory controller 116 are supplied to and recorded onto the optical disk 7.

Meanwhile, to reproduce data from the optical disk 7, a video file, audio files, metadata files, and a low-res data file are read out from the optical disk 7 and the read files are supplied to the format conversion section 12.

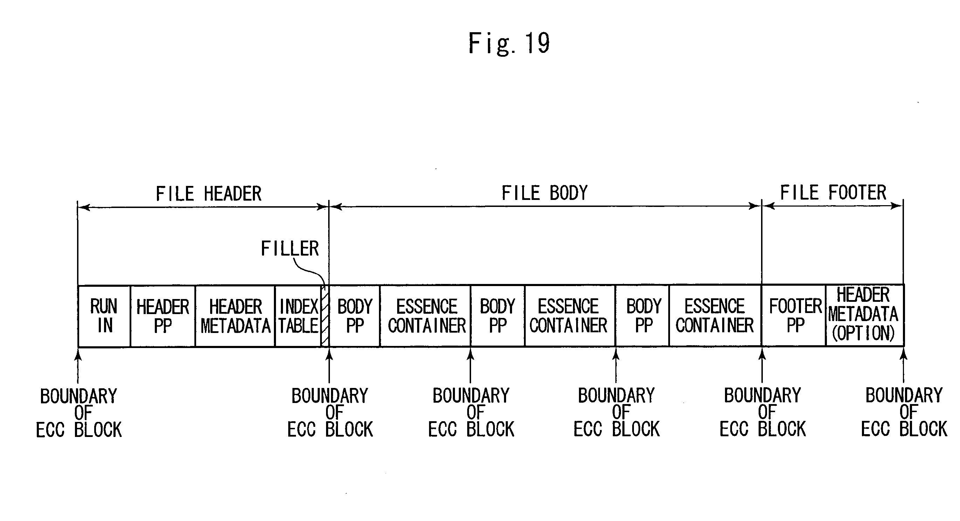

Referring next to FIGS. 19 to 24, a structure of a low-res data file will be described. As shown in FIG. 19, a header of the low-res data file includes a Run In, a Header Partition Pack, Header Metadata, an Index Table, and a filler placed therein. A body of the low-res data file includes Essence Containers placed therein. The essence containers are partitioned by a Body Partition Pack.

A footer of the low-res data file includes a Footer Partition Pack and Header Metadata placed therein. The header metadata of the footer is optional.

Since the header partition pack, the header metadata, the index table, and the footer partition pack in the low-res data file are similar as in a file of the standard AV multiplex format, descriptions thereof will be omitted.

The header of the low-res data file has a size equal to an integral multiple of the ECC block length of the optical disk 7. A set of the body partition pack and the essence container placed in the body of the low-res data file have a size equal to an integral multiple of the ECC block length of the optical disk 7. The footer of the low-res data file has a size equal to an integral multiple of the ECC block length of the optical disk 7.

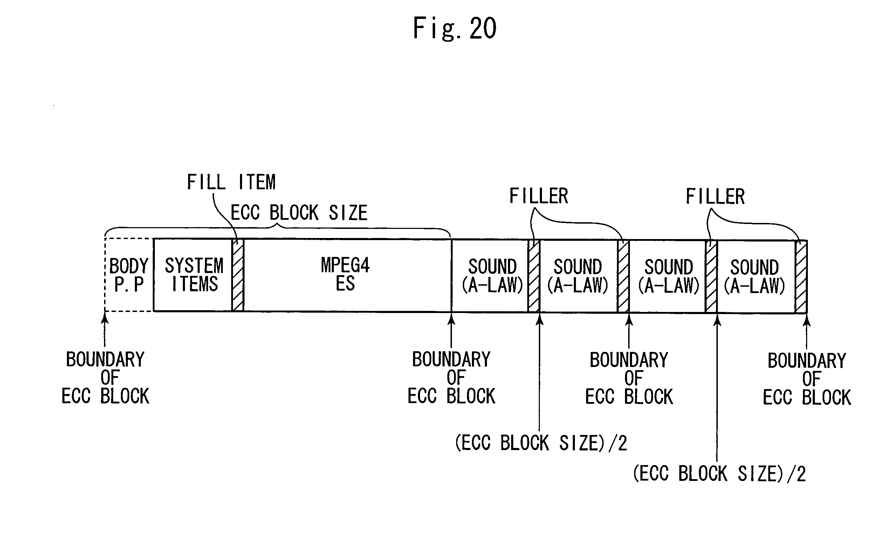

FIG. 20 is a diagrammatic representation showing a configuration of a body partition pack and an essence container placed in a body of a low-res data file. The essence container stores a system item, a picture essence (video data) of an MPEG4 elementary stream system, and a sound essence (sound data). A fill item is interposed between the system item and the picture essence. The body partition pack, the system item, the fill item, and the picture essence have a size equal to an integral multiple of the ECC block length of the optical disk 7.

The sound essence is delimited into four parts, with a filler added to each of the parts. A set of a sound essence part and a filler added thereto has a data amount equal to 1/2 the ECC block length of the optical disk 7. That is, two sets of a sound essence part and a filler thereof have a data amount equal to the ECC block length of the optical disk 7. Therefore, a sound essence and fillers thereof in one essence container have a total data amount equal to twice the ECC block length of the optical disk 7.

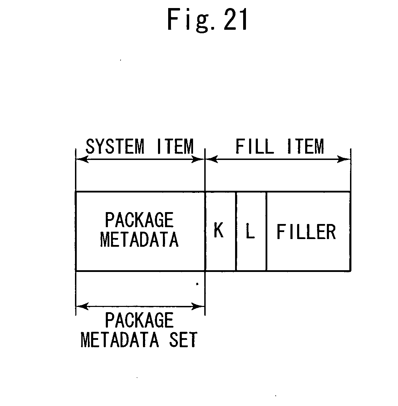

FIG. 21 is a diagrammatic representation showing a configuration of a system item and a fill item of a header. The system item stores Package Metadata. The fill item is formed from a filler having the KLV structure.

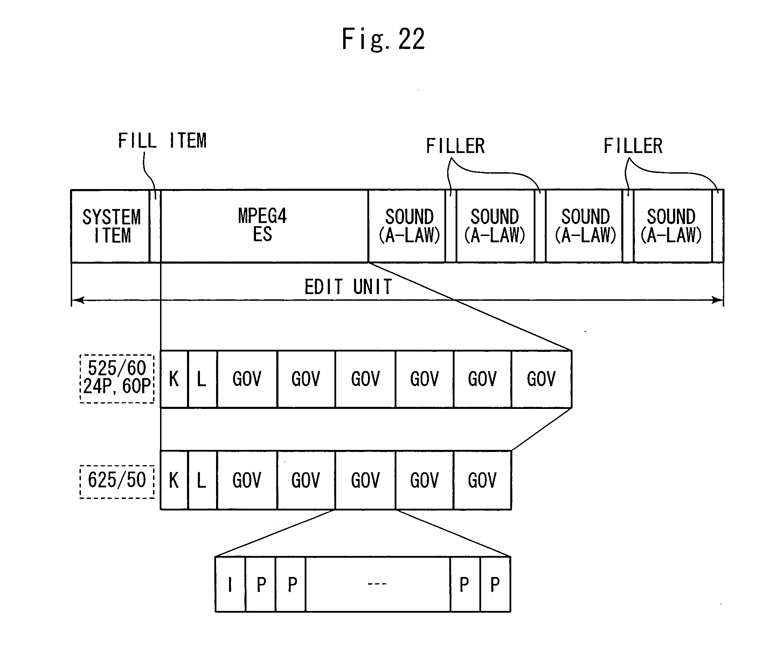

FIG. 22 is a diagrammatic representation showing a configuration of a picture essence. The picture essence is picture data of the MPEG4 elementary stream system having the KLV structure. That is, in the case of picture data having a total number of scanning lines/frame rate of 525/60 (59.94), in the case of picture data which are a progressive scan picture having a frame rate of 24 (23.97), or in the case of picture data which are a progressive scan picture having a frame rate of 60 (59.94), six Groups of Video Object Plane (GOVs) are placed in a picture essence of one edit unit. Meanwhile, in the case of picture data having a total number of scanning lines/frame rate of 625/50, five GOVs are placed in a picture essence of one edit unit. A GOV includes an Intra Video Object Plane (I-VOP), which is intra frame coded, placed at the top therein and a predetermined number of Predicted Video Object Planes (P-VOP), which are inter-frame predictively coded, placed next to the I-VOP.

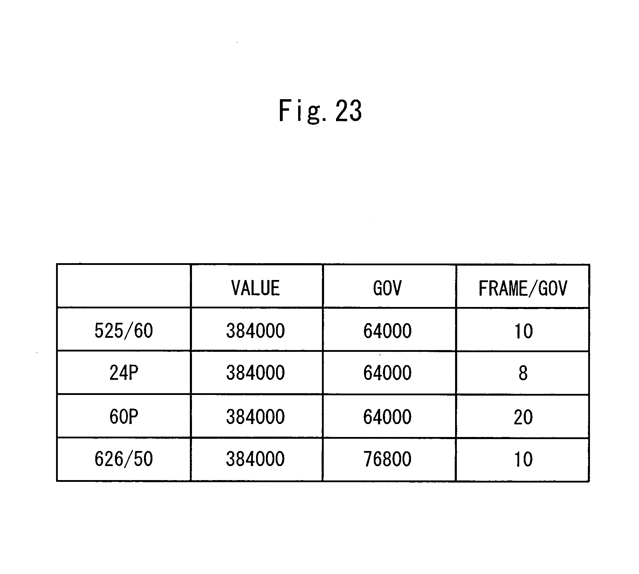

FIG. 23 is a diagram illustrating data amounts of picture essences each having the KLV structure. In the case of picture data having a total number of scanning lines/frame rate of 525/60 (59.94), the value has a data amount equal to 384,000 bytes (octets). That is, one GOV has a data amount equal to 6,400 bytes. In this case, one GOV stores 10 frames of picture.

In the case of picture data which are a progressive scan picture having a frame rate of 24 (23.97), the value has a data amount equal to 384,000 bytes. That is, one GOV has a data amount equal to 6,400 bytes. In this case, one GOV stores a picture of eight frames.

In the case of picture data which are a progressive scan picture having a frame rate of 60 (59.94), the value has a data amount equal to 384,000 bytes. That is, one GOV has a data amount equal to 6,400 bytes. In this case, one GOV stores a picture of twenty frames.

In the case of picture data having a total number of scanning lines/frame rate of 625/50, the value has a data amount equal to 384,000 bytes. That is, one GOV has a data amount equal to 76,800 bytes. In this case, one GOV stores a picture of ten frames.

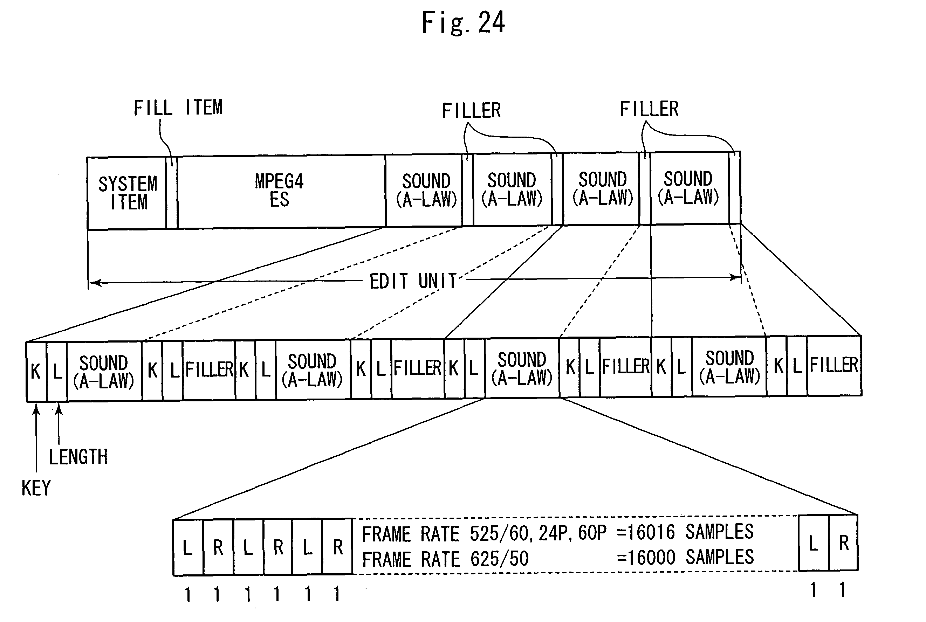

FIG. 24 is a diagrammatic representation showing a configuration of a sound essence. A sound essence of a low-res data file is data of two channels having a system based on International Telecommunication Union, Telecommunication Standardization Sector (ITU-T) G.711 standards. The sound essence is delimited into four parts, each of which has the KLV structure. And a filler having the KLV structure is added to each of the delimited data parts having the KLV structure.

The value includes samples of two channels placed alternately therein. In the case of a sound essence corresponding to the picture essence having a total number of scanning lines/frame rate of 525/60 (59.94), in the case of a sound essence corresponding to the picture essence which are a progressive scan picture having a frame rate of 24 (23.97), or in the case of a sound essence corresponding to the picture essence which are a progressive scan picture having a frame rate of 60 (59.94), one of the four sound essence parts includes 16,016 samples therein. Meanwhile, in the case of a sound essence corresponding to the picture essence having a total number of scanning lines/frame rate of 625/50, one of the four sound essence parts includes 16,000 samples therein.

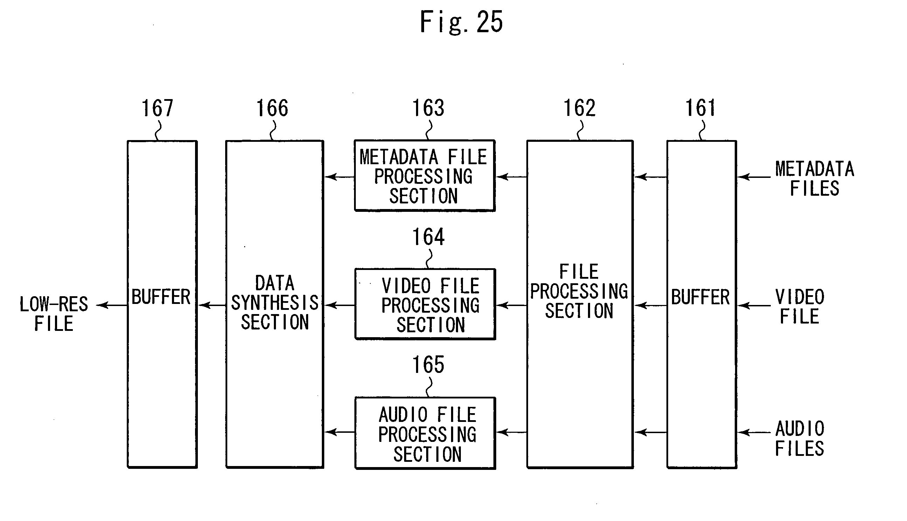

FIG. 25 is a block diagram showing a configuration of a low-res data creation section 142.

A buffer 161 temporarily stores files (a master file, a metadata file of file units, a metadata file of frame units, an auxiliary file, a video file, and audio files of individual eight channels) of the AV independent format supplied thereto from the format conversion section 12.

A file acquisition section 162 refers to the master file stored in the buffer 161 to recognize file names for the metadata file of file units, the metadata file of frame units, the auxiliary file, the video file, and the audio files of the individual eight channels. Thus, the file acquisition section 162 acquires the metadata file of file units, the metadata file of frame units, the auxiliary file, the video file, and the audio files of the individual eight channels from the format conversion section 12 through the buffer 161 based on the file names. Further, the file acquisition section 102 supplies the acquired metadata file of file units and metadata file of frame units to a metadata file processing section 163, the acquired video file to a video file processing section 164, and the acquired audio files of the individual eight channels to an audio file processing section 165, respectively.

The metadata file processing section 163 extracts metadata of file units from the metadata file of file units, and also extracts system items in which metadata of frame units are placed from the metadata file of frame units supplied thereto from the file acquisition section 162. Then, the metadata file processing section 163 supplies the extracted metadata and system items to a data synthesis section 166.

The video file processing section 164 extracts picture items from the video file supplied thereto from the file acquisition section 162 to create a picture essence of a low-res data file from the extracted picture items. Then, the video file processing section 164 supplies the created picture essence to the data synthesis section 166.

The audio file processing section 165 extracts audio data of the individual channels from the audio files of the individual eight channels supplied thereto from the file acquisition section 162 to create audio data having a low bit rate from the extracted picture items. Further, the audio file processing section 165 forms a sound essence in which the audio data of the individual channels are placed in a multiplexed state and supplies the sound essence to the data synthesis section 166.

The data synthesis section 166 forms a low-res data file, using the metadata of file units and the system items supplied thereto from the metadata file processing section 163, the picture essences supplied thereto from the video file processing section 164, and the sound essences supplied thereto from the audio file processing section 165. Then, the data synthesis section 166 supplies the low-res data file to a buffer 167.

The buffer 167 temporarily stores the low-res data file supplied thereto from the data synthesis section 166 and supplies the file to the memory controller 116.

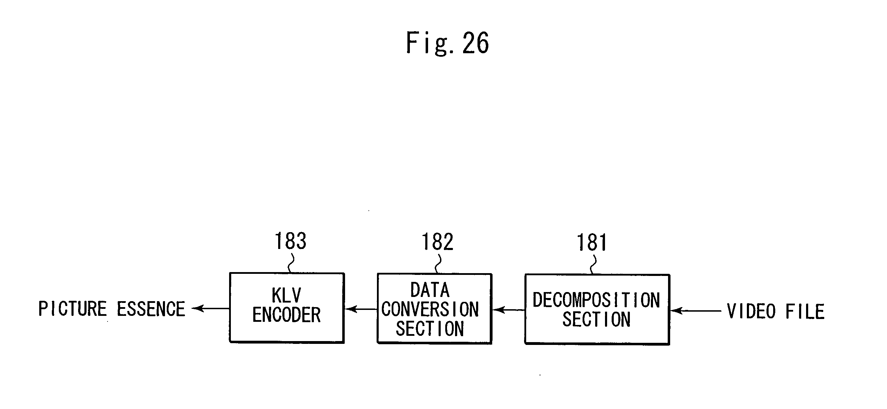

FIG. 26 is a block diagram illustrating a configuration of the video file processing section 164. A decomposition section 181 decomposes the video file supplied thereto from the file acquisition section 162 into picture items and supplies the resulting picture items to a data conversion section 182. The data conversion section 182 converts the decomposed picture items into picture data of the MPEG4 system and supplies the resulting picture data to a KLV encoder 183. The KLV encoder 183 KLV-encodes a picture essence supplied from the data conversion section 182 into the KLV structure and supplies the picture essence having the KLV structure to the data synthesis section 166.

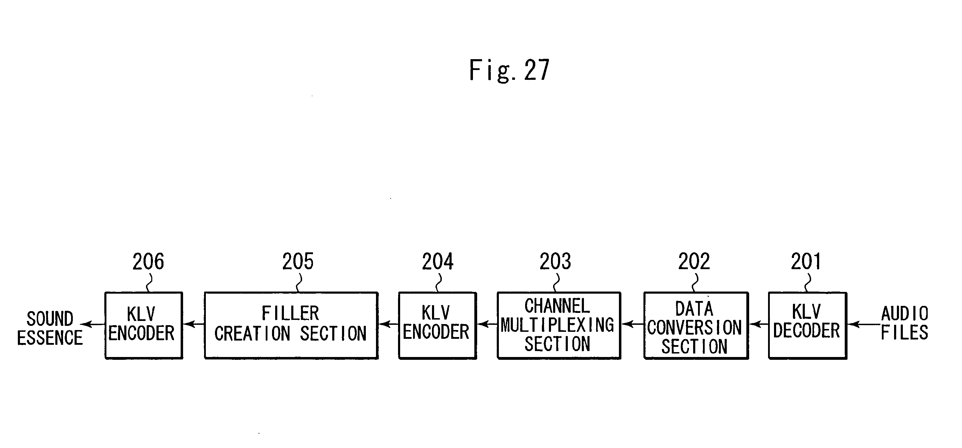

FIG. 27 is a block diagram illustrating a configuration of the audio file processing section 165. A KLV decoder 201 decomposes the KLV structure of each of the bodies of the audio files of the individual channels supplied thereto from the file acquisition section 162 to obtain audio data of the individual channels of the WAVE format. Then, the audio file processing section 165 supplies the obtained audio data of the individual channels to a data conversion section 202.

The data conversion section 202 converts the audio data of the WAVE format of the individual channels supplied thereto from the KLV decoder 201 into audio data of the ITU-T G.711 format of two channels and supplies the resulting audio data to a channel multiplexing section 203. The channel multiplexing section 203 multiplexes the audio data of the two channels supplied thereto from the data conversion section 202 in units of samples to obtain multiplexed audio data and supplies the multiplexed audio data to a KLV encoder 204. The KLV encoder 204 delimits the audio data supplied thereto from the channel multiplexing section 203 into four parts and KLV-codes each of the delimited audio data parts into the KLV structure. Then, the KLV encoder 204 supplies the resulting audio data to a filler creation section 205.

The filler creation section 205 creates a filler for each audio data having the KLV structure and adds the filler to the audio data. Then, the filler creation section 205 supplies the resulting audio data to a KLV encoder 206. The KLV encoder 206 KLV-codes the filler added to each audio data into the KLV structure and outputs the sound essence to which the filler having the KLV structure is added.

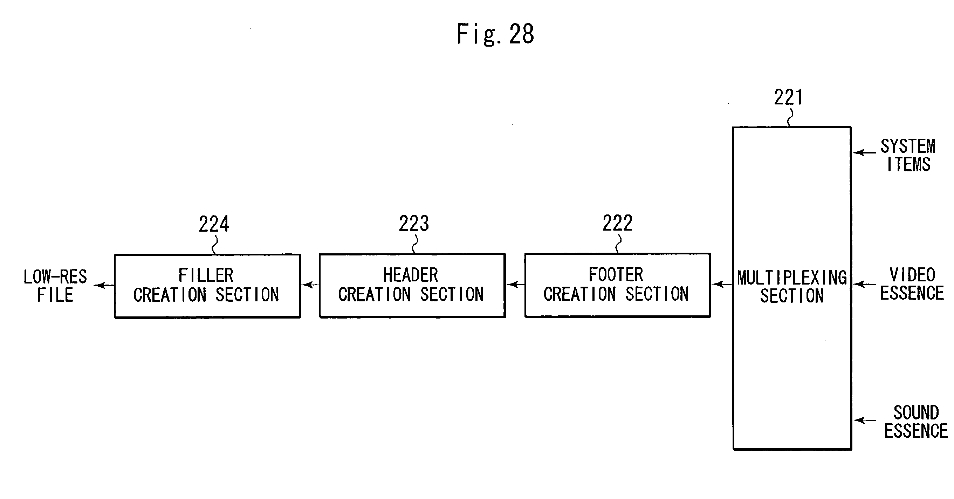

FIG. 28 is a block diagram showing a configuration of the data synthesis section 166. A multiplexing section 221 multiplexes the system items supplied thereto from the metadata file processing section 163, the video essences supplied thereto from the video file processing section 164, and the sound essences supplied thereto from the audio file processing section 165. Further, the multiplexing section 221 adds body partitions to essence containers to create a body and supplies the created body to a footer creation section 222. The footer creation section 222 creates a footer, adds the footer to the body, and supplies the body and the footer to a header creation section 223.

The header creation section 223 creates a header, adds the header to the body and the footer, and supplies the body, the footer, and the header to a filler creation section 224. The filler creation section 224 creates a filler to be added to the header, adds the created filler to the header, and outputs a low-res file to which the filler is added.

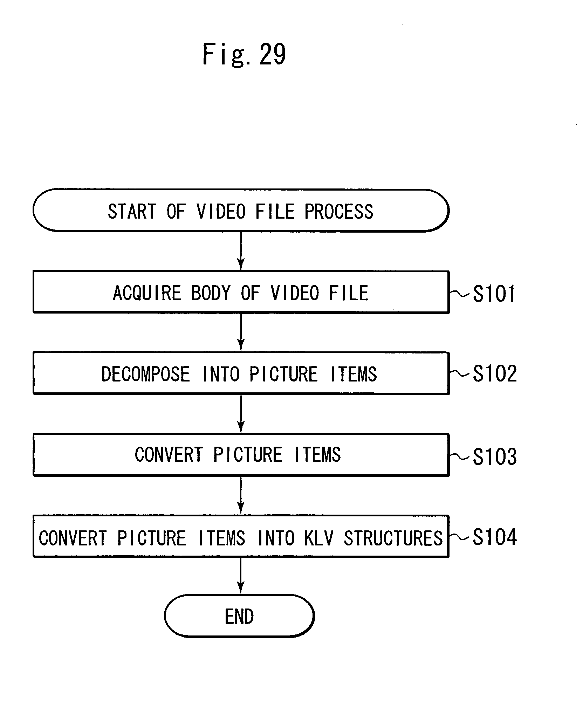

FIG. 29 is a flowchart illustrating a video file process. At step S101, the file acquisition section 162 acquires the body of a video file from the format conversion section 12 through the buffer 161. Then, the processing advances to step S102. At step S102, the decomposition section 181 decomposes the video file supplied thereto from the file acquisition section 162 into picture items. Then, the processing advances to step S103. At step S103, the data conversion section 182 converts the resulting picture items into picture data of the MPEG4 system. Then, the processing advances to step S104. At step S104, the KLV encoder 183 KLV-encodes the picture items supplied thereto from the data conversion section 182 into the KLV structure to obtain a picture essence. The video file process is ended thereby.

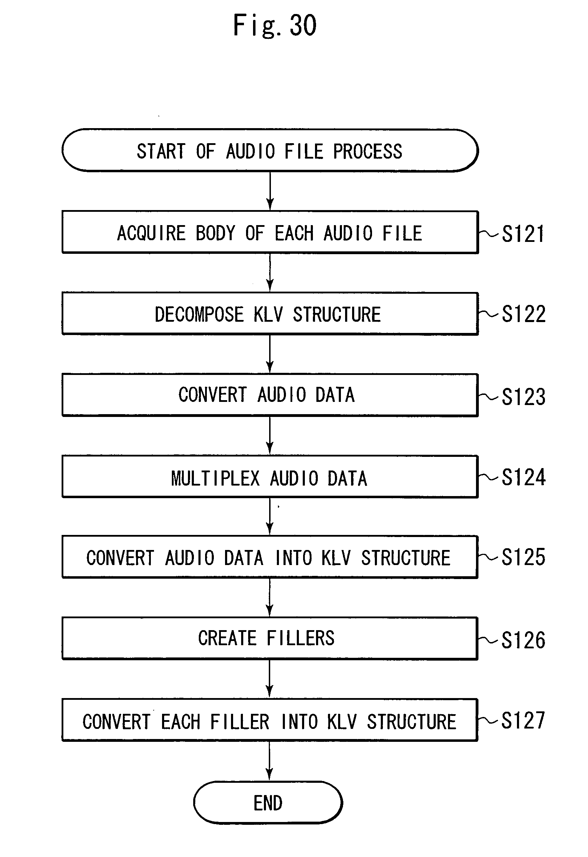

FIG. 30 is a flowchart illustrating an audio file process. At step S121, the file acquisition section 162 acquires the body of each of audio files from the format conversion section 12 through the buffer 161. Then, the processing advances to step S122. At step S122, the KLV decoder 201 decomposes the KLV structure of the body of the audio file of each channel supplied thereto from the file acquisition section 162. Then, the processing advances to step S123.

At step S123, the data conversion section 202 converts audio data of the WAVE format supplied thereto from the KLV decoder 201 into audio data of the ITU-T G.711 format of two channels. Then, the processing advances to step S124. At step S124, the channel multiplexing section 203 multiplexes the audio data of the two channels supplied thereto from the data conversion section 202 in units of samples. Then, the processing advances to step S125. At step S125, the KLV encoder 204 delimits the audio data supplied thereto from the channel multiplexing section 203 into four parts and KLV-codes each of the delimited audio data parts into the KLV structure. Then, the processing advances to step S126.

At step S126, the filler creation section 205 creates a filler for each audio data having the KLV structure and adds the filler to the audio data. Then, the processing advances to step S127. At step S127, the KLV encoder 206 KLV-codes the filler added to the audio data into the KLV structure to obtain a sound essence. The audio file process is ended thereby.

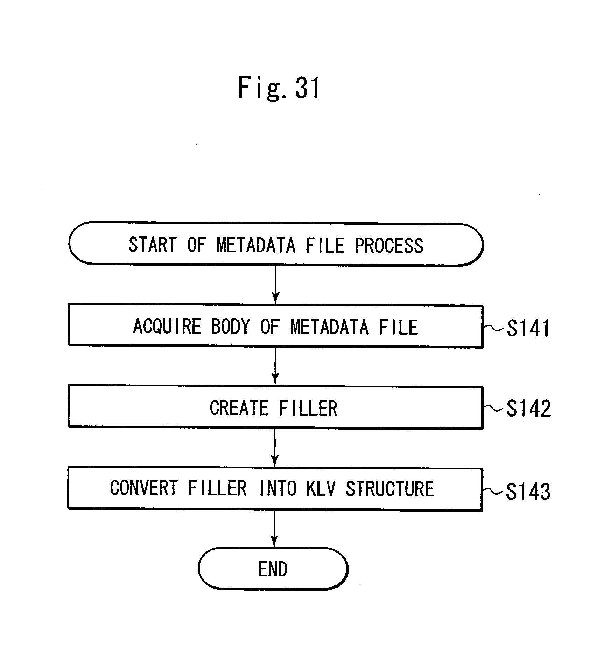

FIG. 31 is a flowchart illustrating a metadata file process. At step S141, the file acquisition section 162 acquires the body of a metadata file from the format conversion section 12 through the buffer 161 to obtain system items. Then, the processing advances to step S142. At step S142, the metadata file processing section 163 creates fillers. Then, the processing advances to step S143. At step S143, the metadata file processing section 163 KLV-codes each of the fillers added to the system items into the KLV structure to obtain a fill item and outputs the system items to which the fill items are added. The metadata file process is ended thereby.

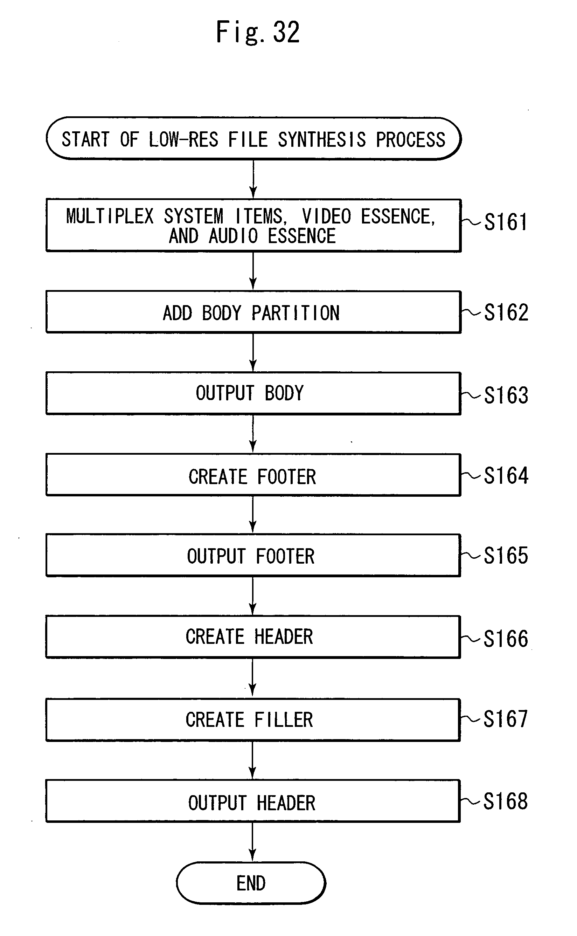

FIG. 32 is a flowchart illustrating a low-res data file synthesis process. At step S161, the multiplexing section 221 multiplexes the system items supplied thereto from the metadata file processing section 163, the video essences supplied thereto from the video file processing section 164, and the sound essences supplied thereto from the audio file processing section 165 to create essence containers. Then, the processing advances to step S162. At step S162, the multiplexing section 221 adds body partitions to the essence containers to create a body. Then, the processing advances to step S163.

At step S163, the data synthesis section 166 outputs the body. Then, the processing advances to step S164. At step S164, the footer creation section 222 creates a footer. Then, the processing advances to step S165. At step S165, the data synthesis section 166 outputs the footer. Then, the processing advances to step S166.

At step S166, the header creation section 223 creates a header. Then, the processing advances to step S167. At step S167, the filler creation section 224 creates a filler to be added to the header. Then, the processing advances to step S168. At step S168, the data synthesis section 166 outputs the header to which the filler is added. The low-res data file synthesis process is ended thereby.

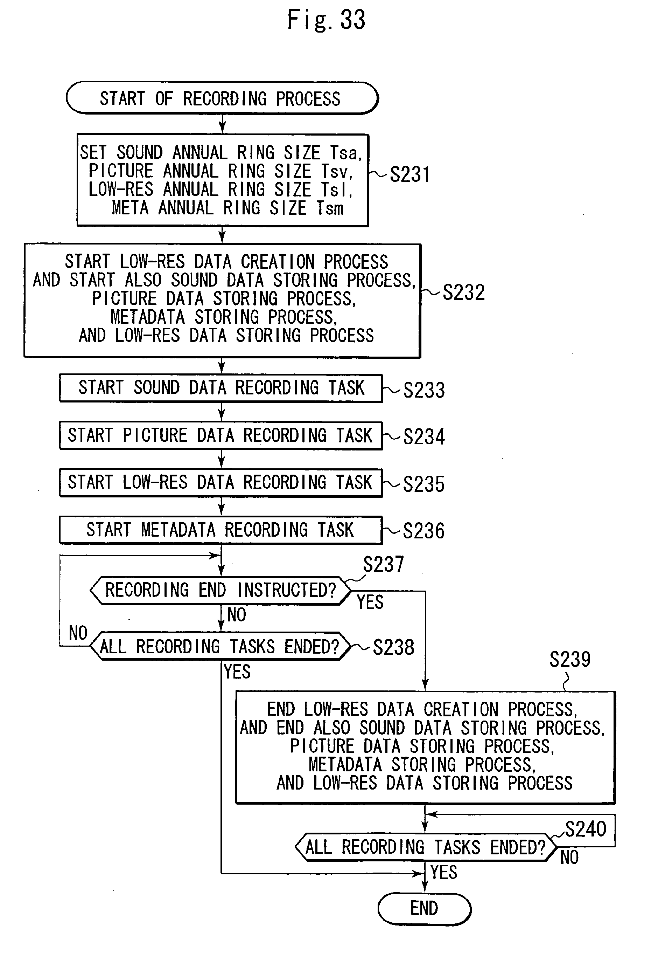

Referring next to a flowchart of FIG. 33, a recording process executed by the control section 119 will be described.

When the operation section 120 is operated to supply an operation signal instructing a recording process start to the control section 119 from the operation section 120, the control section 119 starts the recording process.

That is, first at step S231, the control section 119 sets a sound annual ring size Tₛₐ and a picture annual ring size Tₛᵥ. Further, the control section 119 sets a low-res annual ring size Tₛₗ and a meta annual ring size Tₛₘ.

The sound annual ring size Tₛₐ here is a variable that defines a data amount of audio files, which are recorded onto the optical disk 7 in a collectively placed state. The sound annual ring size Tₛₐ is represented by, for example, a reproduction time of the audio files. Similarly, the picture annual ring size Tₛᵥ is a variable that defines a data amount of video files, which are recorded onto the optical disk 7 in a collectively placed state. The picture annual ring size Tₛᵥ is represented by, for example, a reproduction time of the video files.

Note that the reason why the sound annual ring size Tₛₐ and the picture annual ring size Tₛᵥ are represented indirectly, so to speak, by a reproduction time, not directly by a data amount such as the number of bits or the number of bytes is as follows.

That is, according to the recording process of FIG. 33, sound annual ring data and picture annual ring data are recorded onto the optical disk 7 in a cyclically placed state, as hereinafter described. The sound annual ring data are a collection of audio files, which has a data amount extracted from a series of audio files and based on the sound annual ring size Tₛₐ. The picture annual ring data are a collection of video files, which has a data amount extracted from a series of video files and based on the picture annual ring size Tₛᵥ.

Let it be considered how sound and picture should be reproduced when sound annual ring data and picture annual ring data are recorded onto the optical disk 7 in a cyclically placed state. The sound and the picture cannot be reproduced unless video files and audio files accompanying the video files are properly paired. From this viewpoint of reproduction, sound annual ring data for a reproduction time zone and picture annual ring data for the reproduction time zone should be recorded at close positions on the optical disk 7. That is, these data should be recorded, for example, at adjacent positions.

However, audio files and video files for the same reproduction time generally have largely different data amounts when the data amounts thereof are compared. That is, the data amount of audio files for a reproduction time is quite small when compared with the data amount of video files for the reproduction time. Further, an audio file or a video file does not have a fixed data rate but has a variable data rate, in some cases.

Therefore, if the sound annual ring size Tₛₐ and the picture annual ring size Tₛᵥ are represented by a data amount, and sound annual ring data and picture annual ring data, each having the data amount, are sequentially extracted from series of audio files and video files, respectively, then the sound annual ring data are obtained for individual reproduction time zones, which are ahead of the corresponding picture annual ring data in terms of reproduction time. As a result, it becomes difficult to place audio files and video files to be reproduced in the same reproduction time zone at positions close to each other on the optical disk 7.

Meanwhile, the sound annual ring size Tₛₐ and the picture annual ring size Tₛᵥ are represented by a reproduction time, and sound annual ring data and picture annual ring data, each having a data amount equal to the reproduction time, are sequentially extracted from series of audio files and video files, respectively. Then, sound annual ring data and picture annual ring data for similar reproduction time zones can be obtained as a set. As a result, the audio files and the video files to be reproduced in the same reproduction time zone can be placed at close positions.

It is desirable to set the sound annual ring size Tₛₐ here to a value at which sound annual ring data having a data amount equal to a reproduction time represented by the sound annual ring size Tₛₐ are reproduced faster when skipped by seeking than when read out, from the optical disk 7. This applies similarly to the picture annual ring size Tₛᵥ. Such a picture annual ring size Tₛᵥ is, for example, 1.5 to 2 seconds or so, according to experiences of the inventors.

Further, to form sound annual ring data and picture annual ring data for similar reproduction time zones, the sound annual ring size Tₛₐ and the picture annual ring size Tₛᵥ may be set to the same value. In this case, it is desirable to place the sound annual ring data and the picture annual ring data for similar reproduction time zones alternately on the optical disk 7 from the above-described viewpoint of reproduction.

Furthermore, the sound annual ring size Tₛₐ and the picture annual ring size Tₛᵥ can be set to different values. Considering the fact that the data rate of an audio file is, in general, quite lower than the data rate of a video file, the sound annual ring size Tₛₐ can be set to, for example, a value double the picture annual ring size Tₛᵥ. In this case, one item of sound annual ring data for a reproduction time zone corresponds to two items of picture annual ring data for a reproduction time zone similar to the reproduction time zone. It is also desirable to place the one item of sound annual ring data and the corresponding two items of picture annual ring data at close positions on the optical disk 7 from the above-described viewpoint of reproduction. Specifically, it is desirable to place the one item of sound annual ring data and the corresponding two items of picture annual ring data cyclically in order of the sound annual ring data, one of the corresponding two items of picture annual ring data, and the other of the corresponding two items of picture annual ring data, or in order of one of the two items of picture annual ring data, the sound annual ring data, and the other of the two items of picture annual ring data.

Note that the sound annual ring size Tₛₐ and the picture annual ring size Tₛᵥ to be set at step S1 may be predetermined fixed values or variable values. When the values of the sound annual ring size Tₛₐ and the picture annual ring size Tₛᵥ are variable, the variable values may be inputted by, for example, operating the operation section 120.

Further, the low-res annual ring size Tₛₗ is a variable that defines a data amount of low-res data, which is recorded onto the optical disk 7 in a collectively placed state. The low-res annual ring size Tₛₗ can be represented by, for example, a reproduction time of video files (or audio files) on which the low-res data is based, similarly to the above-described sound annual ring size Tₛₐ and picture annual ring size Tₛᵥ. Similarly, the meta annual ring size Tₛ is also a variable that defines a data amount of metadata, which is recorded onto the optical disk 7 in a collectively placed state. The meta annual ring size Tₛ is represented by, for example, a reproduction time of video files (or audio files), for which the metadata describe various information (e.g., a time and date at which the picture is imaged), similarly to the above-described sound annual ring size Tₛₐ and picture annual ring size Tₛᵥ.

Note that the reason why the low-res annual ring size Tₛₗ and the meta annual ring size Tₛₘ are represented indirectly, so to speak, by a reproduction time, not directly by a data amount such as the number of bits or the number of bytes is similar as in the above-described sound annual ring size Tₛₐ and picture annual ring size Tₛᵥ.

That is, according to the recording process of FIG. 33, not only sound annual ring data and picture annual ring data but also low-res annual ring data and meta annual ring data are recorded onto the optical disk 7 in a cyclically placed state, as hereinafter described. The sound annual ring data are a collection of audio files, which has a data amount extracted from a series of audio files and based on the sound annual ring size Tₛₐ. The picture annual ring data are a collection of video files, which has a data amount extracted from a series of video files and based on the picture annual ring size Tₛᵥ. The low-res annual ring data are a collection of low-res data, which has a data amount extracted from a data series of low-res data and based on the low-res annual ring size Tₛₗ. The meta annual ring data are a collection of metadata, which has a data amount extracted from a data series of metadata and based on the meta annual ring size Tₛₘ.

Thus, if sound annual ring data, picture annual ring data, low-res annual ring data, and meta annual ring data are recorded onto the optical disk 7 in a cyclically placed state, then, since low-res annual ring data are obtained by reducing the data amounts of sound annual ring data and picture annual ring data, sound annual ring data and picture annual ring data for a reproduction time zone should be recorded onto the optical disk 7 at positions close to the low-res annual ring data which are obtained by reducing the data amounts of the sound annual ring data and the picture annual ring data for the reproduction time zone. Further, since meta annual ring data represents data regarding sound annual ring data and picture annual ring data, sound annual ring data and picture annual ring data for a reproduction time zone should also be recorded onto the optical disk 7 at positions close to the meta annual ring data which represent the sound annual ring data and the picture annual ring data for the reproduction time zone.

However, when the data rates of an audio file and a video file are compared with the data rates of low-res data and metadata for the same reproduction time, the data rates of the low-res data and the metadata are smaller than the data rates of the audio file and the video file.

Therefore, if the low-res annual ring size Tₛₗ and the meta annual ring size Tₛₘ are represented by a data amount, inconvenience arises which makes it difficult to place audio files, video files, low-res data, and metadata to be reproduced in similar reproduction time zones at close positions on the optical disk 7, similarly to the above-described case where the sound annual ring size Tₛₐ and the picture annual ring size Tₛᵥ are represented by a data amount.

Thus, in the embodiment of FIG. 33, the low-res annual ring size Tₛₗ and the meta annual ring size Tₛₘ are represented by a reproduction time, similarly to the sound annual ring size Tₛₐ and the picture annual ring size Tₛᵥ. As a result, audio files, video files, low-res data, and metadata to be reproduced in similar reproduction time zones can be placed at close positions on the optical disk 7.

Note that the sound annual ring size Tₛₐ, the picture annual ring size Tₛᵥ, the low-res annual ring size Tₛₗ, and the meta annual ring size Tₛₘ to be set at step S231 may be predetermined fixed values, or variable values. When the sound annual ring size Tₛₐ, the picture annual ring size Tₛᵥ, the low-res annual ring size Tₛₗ, and the meta annual ring size Tₛₘ are made variable, the variable values can be inputted by, for example, operating the operation section 120.

After step S231 is executed, the processing advances to step S232. At step S232, the control section 119 starts a low-res data creation process for creating a series of low-res data from audio files and video files supplied to the disk driving apparatus 11 from the format conversion section 12. Further, the control section 119 controls the memory controller 116 to start an audio file storing process and a video file storing process for supplying audio files and video files obtained by the data conversion section 118 to the memory 117 for storage therein, respectively. Furthermore, at step S232, the control section 119 controls the memory controller 116 to start a metadata storing process and a low-res data storing process for supplying metadata and low-res data obtained by the data conversion section 118 to the memory 117 for storage therein, respectively.

And the processing advances to steps S233 and S234 in sequence. At step S233, the control section 119 starts an audio file recording task which is a controlling task for recording audio files onto the optical disk 7. At step S234, the control section 119 starts a video file recording task which is a controlling task for recording video files onto the optical disk 7. Then, the processing advances to step S235. At step S235, the control section 119 starts a low-res data recording task which is a controlling task for recording low-res data onto the optical disk 7. Then, the processing advances to step S236. At step S236, the control section 119 starts a metadata recording task which is a controlling task for recording metadata onto the optical disk 7. Then, the processing advances to step S237. Note that details of the audio file recording task at step S233, the video file recording task at step S234, the low-res data recording task at step S235, and the metadata recording task at step S236 will be described hereinafter.

At step S237, the control section 119 determines whether or not an operation signal for instructing a data recording end is supplied thereto from the operation section 120. If it is determined that the operation signal is not supplied, the processing advances to step S238. At step S238, the control section 119 determines whether or not all the recording tasks are ended. If it is determined at step S238 that all the recording tasks are not ended, the processing returns to step S237 to repeat similar processing thereafter.

On the other hand, if it is determined at step S238 that all the recording tasks are ended, the recording process is ended thereby. That is, when all of the audio file recording task started at step S233, the video file recording task started at step S234, the low-res data recording task started at step S235, and the metadata recording task started at step S236 are ended, the recording process is ended.

Meanwhile, if it is determined at step S237 that the operation signal for instructing a data recording end is supplied, i.e., if, for example, the user has operated the operation section 120 to end the data recording, then the processing advances to step S239. At step S239, the control section 119 ends the low-res data creation process, as well as the audio file storing process, the video file storing process, the metadata storing process, and the low-res data storing process, which are started at step S232. Then, the processing advances to step S240.

At step S240, it is determined whether or not all the recording tasks are ended similarly as at step S238. If it is determined at step S240 that all the recording tasks are not ended, the processing returns to step S240, where a waiting time is provided until all the recording tasks are ended.

On the other hand, if it is determined at step S240 that all the recording tasks are ended, the recording process is ended thereby. That is, if all of the audio file recording task started at step S233, the video file recording task started at step S234, the low-res data recording task started at step S235, and the metadata recording task started at step S236 are ended, the recording process is ended.

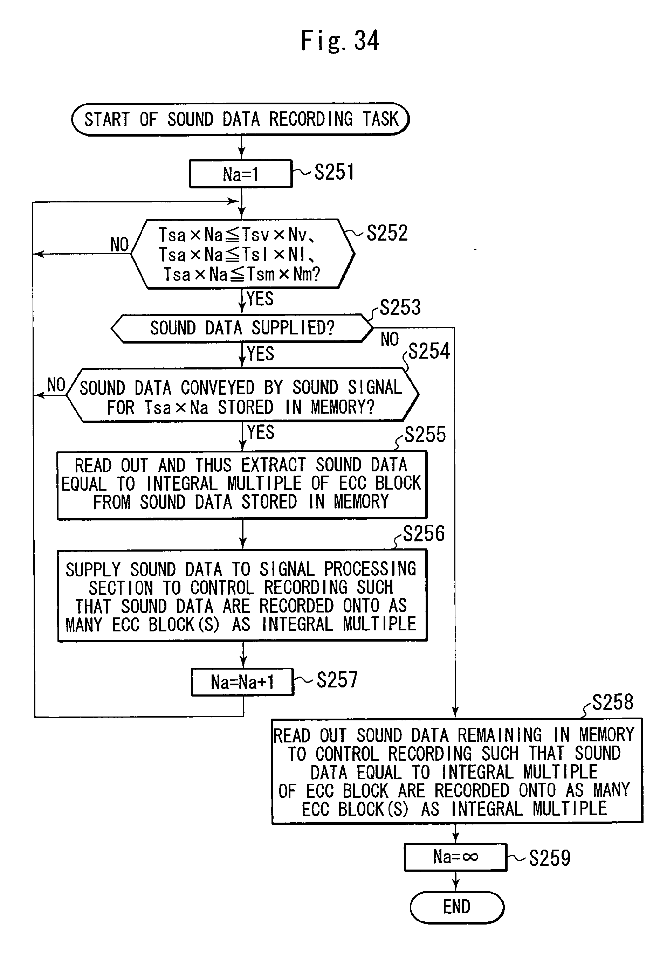

Referring next to a flowchart of FIG. 34, the audio file recording task started at step S233 shown in FIG. 33 will be described.

When the audio file recording task is started, first at step S251, the control section 119 initializes a variable Nₐ, which is incremented by 1 at step S257 hereinafter executed, to, for example, 1. Then, the processing advances to step S252.

At step S252, the control section 119 determines whether or not Tₛₐ×Nₐ equals Tₛᵥ×Nᵥ or less, and further, whether or not Tₛₐ×Nₐ equals Tₛₗ×Nₗ or less and equals Tₛₘ×Nₘ or less, similarly as at step S12 shown in FIG. 5.

The value Tₛₐ here is a sound annual ring size, and represents a reproduction time of audio files. Further, the variable Nₐ is incremented by 1 every time audio files (sound annual ring data) having a data amount which is based on the sound annual ring size Tₛₐ are recorded onto the optical disk 7 in the audio file recording task, as hereinafter described. Similarly, the value Tₛᵥ is a picture annual ring size. The variable Nᵥ is incremented by 1 every time video files (picture annual ring data) having a data amount which is based on the video annual ring size Tₛᵥ are recorded onto the optical disk 7 in the video file recording task, as hereinafter described. Therefore, Tₛₐ×Nₐ corresponds to the last reproduction time for sound annual ring data which are now to be recorded onto the optical disk 7 when audio files are recorded in units of sound annual ring sizes Tₛₐ. And Tₛᵥ×Nᵥ corresponds to the last reproduction time for picture annual ring data which are now to be recorded onto the optical disk 7 when video files are recorded in units of picture annual ring sizes Tₛᵥ.

Further, Tₛₗ is a low-res annual ring size. The variable Nₗ is incremented by 1 every time low-res data (low-res annual ring data) having a data amount which is based on the low-res annual ring size Tₛₑ are recorded onto the optical disk 7 in the low-res data recording task, as hereinafter described. Furthermore, Tₛₘ is a meta annual ring size. The variable Nₘ is incremented by 1 every time metadata (meta annual ring data) having a data amount which is based on the meta annual ring size Tₛₘ are recorded onto the optical disk 7 in the metadata recording task, as hereinafter described. Therefore, Tₛₗ×Nₗ corresponds to the last reproduction time for low-res annual ring data which are now to be recorded onto the optical disk 7 when low-res data are recorded in units of low-res annual ring sizes Tₛₑ. And Tₛₘ×Nₘ corresponds to the last reproduction time for meta annual ring data which are now to be recorded onto the optical disk 7 when metadata are recorded in units of meta annual ring sizes Tₛₘ.

Meanwhile, let it be assumed that sound annual ring data, picture annual ring data, low-res annual ring data, and meta annual ring data for similar reproduction time zones are recorded at close positions on the optical disk 7 in a cyclically placed state. Further, let it also be assumed that as to each of sound annual ring data, picture annual ring data, low-res annual ring data, and meta annual ring data, those having an earlier reproduction time are placed more toward the top on the optical disk 7 (ahead in the order of reading/writing data from/to the optical disk 7). Furthermore, sound annual ring data, picture annual ring data, low-res annual ring data, and meta annual ring data for similar reproduction time zones are placed more toward the top on the optical disk 7 in order of, for example, the sound annual ring data, the picture annual ring data, the low-res annual ring data, and the meta annual ring data.

In this case, target sound annual ring data, which are sound annual ring data now to be recorded, are sound annual ring data for the most recent (closest to a reproduction time Tₛₐ×Nₐ) reproduction time zone prior to the reproduction time Tₛₐ×Nₐ. Therefore, the target sound annual ring data must be recorded immediately before picture annual ring data, low-res annual ring data, and meta annual ring data for the most recent reproduction time zone prior to the reproduction time Tₛₐ×Nₐ are recorded, i.e., immediately after picture annual ring data, low-res annual ring data, and meta annual ring data for the second most recent reproduction time zone prior to the reproduction time Tₛₐ×Nₐ are recorded.

By the way, picture annual ring data now to be recorded are picture annual ring data for the most recent reproduction time zone prior to a reproduction time Tₛᵥ×Nᵥ. Further, low-res annual ring data now to be recorded are low-res annual ring data for the most recent reproduction time zone prior to a reproduction time Tₛₗ×Nₗ. Meta annual ring data now to be recorded are meta annual ring data for the most recent reproduction time zone prior to a reproduction time Tₛₘ×Nₘ. As to annual ring data for similar reproduction time zones, sound annual ring data are placed more toward the top on the optical disk 7 as described above. Therefore, the target sound annual ring data must be recorded at a timing at which the reproduction time Tₛₐ×Nₐ of the sound annual ring data equals the reproduction time Tₛᵥ×Nᵥ of the picture annual ring data or less, and further equals the reproduction time Tₛₗ×Nₗ of the low-res annual ring data or less and equals the reproduction time Tₛₘ×Nₘ of the meta annual ring data or less.

Thus at step S252, it is determined whether or not the reproduction time Tₛₐ×Nₐ of the sound annual ring data equals the reproduction time Tₛᵥ×Nᵥ of the picture annual ring data or less, and further equals the reproduction time Tₛₗ×Nₗ of the low-res annual ring data or less and the reproduction time Tₛₘ×Nₘ of the meta annual ring data or less, as described above. This determines whether or not the current timing is a timing for recording the target sound annual ring data.

If it is determined at step S252 that the reproduction time Tₛₐ×Nₐ of the sound annual ring data is not equal to or less than (prior to) any of the reproduction time Tₛᵥ×Nᵥ of the picture annual ring data, the reproduction time Tₛₗ×Nₗ of the low-res annual ring data, or the reproduction time Tₛₘ×Nₘ of the meta annual ring data, i.e., if the current timing is not a timing for recording the target sound annual ring data, then the processing returns to step S252 to repeat similar processing thereafter.

On the other hand, if it is determined at step S252 that the reproduction time Tₛₐ×Nₐ of the sound annual ring data is equal to or less than all of the reproduction time Tₛᵥ×Nᵥ of the picture annual ring data, the reproduction time Tₛₗ×Nₗ of the low-res annual ring data, and the reproduction time Tₛₘ×Nₘ of the meta annual ring data, i.e., if the current timing is a timing for recording the target sound annual ring data, then the processing advances to step S253. At step S253, the control section 119 determines whether or not audio files are supplied to the memory 117 from the data conversion section 118 through the memory controller 116. If it is determined that the audio files are supplied, the processing advances to step S254.

At step S254, the control section 119 determines whether or not audio files of the audio files necessary for a reproduction for a total sound annual ring size Tₛₐ×Nₐ are sored into the memory 117. If it is determined that the audio files for such a size are not stored into the memory 117 yet, the processing returns to step S252 to repeat the processing subsequent thereto. On the other hand, if it is determined at step S254 that the audio files having a size corresponding to the reproduction time Tₛₐ×Nₐ are sored into the memory 117, the processing advances to step S255.

Note that, upon detection of the audio files necessary for the reproduction for the total reproduction time Tₛₐ×Nₐ, the data amount detection section 141 of the data conversion section 118 notifies the memory controller 116 to that effect. The memory controller 116 determines whether or not the audio files necessary for the reproduction for the total reproduction time Tₛₐ×Nₐ are stored into the memory 117 and notifies the control section 119 of the determination result. That is, the control section 119 makes a determination at step S254 based on the determination result from the memory controller 116.

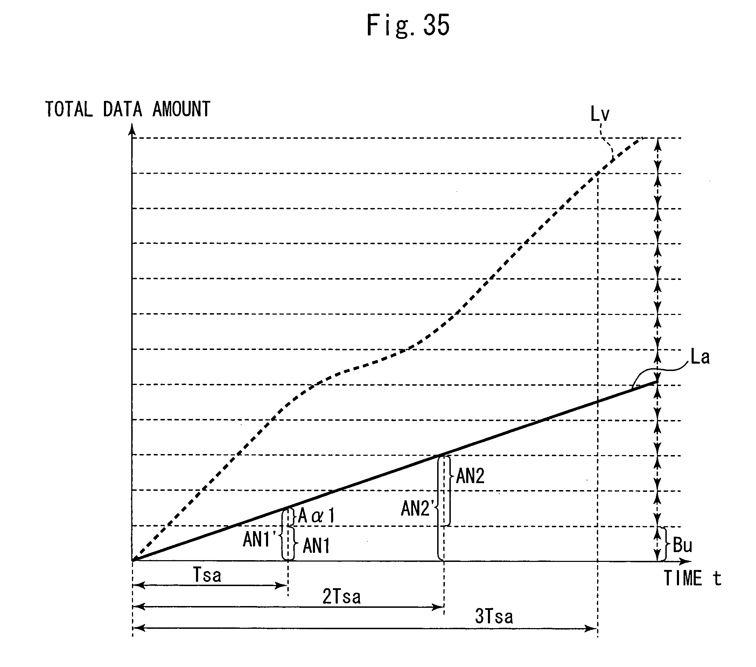

FIG. 35 here shows a relationship between a total data amount (total data amount) La of audio files sored into the memory 117 and a time (reproduction time). Note that in FIG. 6, each pair of small arrows (arrows indicating an interval between two adjacent horizontal dotted lines) on the right-hand side pointing upward and downward directions represents a data amount Bu of an ECC block. Further, a dotted line Lv in FIG. 35 indicates a total data amount (total data amount) Lv of video files sored into the memory 117, which is shown by a solid line in FIG. 9 hereinafter described. Furthermore, the total data amount La of the audio files is shown to be linear. Therefore, the data rate of the audio file is fixed. However, the audio file may have a variable data rate.

In FIG. 35, the data amount of audio files necessary for a reproduction for a time Tₛₐ×Nₐ (=1), for example, when Nₐ=1 is AN1'. Therefore, at step S254 where Nₐ=1, when audio files having a total data amount of AN1' are sored into the memory 117, it is determined that the audio files corresponding to the reproduction time Tₛₐ×Nₐ are sored into the memory 117. Then, the processing advances to step S255.

At step S255, the control section 119 controls the memory controller 116 to read out audio files having the following data amount from the audio files stored in the memory 117 to extract the audio files in order of first inputted ones in terms of time. That is, the memory controller 116 reads out audio files having a data amount which is, for example, equal to an integral multiple (n times) of the data amount Bu of one ECC block and maximally readable from the memory 117, as a unit for reading/writing from/to the optical disk 7. Then, the processing advances to step S256. Note that sound annual ring data read out from the memory 117 as audio files having a data amount equal to an integral multiple of one ECC block and maximally readable from the memory 117 are the most recent sound annual ring data prior to a reproduction time Tₛₐ×Nₐ described above.

When the time is 1×Tₛₐ in FIG. 35 here described above, the memory 117 stores at least audio files having a data amount of AN1'. The data amount AN1' is larger than the data amount of one ECC block, but smaller than the data amount of two ECC blocks. Therefore, at step S255, audio files for an AN1, which equals the data amount Bu of one ECC block are read out and extracted from the memory 117 as the target sound annual ring data.

Note that audio files which are not read out at step S255, i.e., audio files having a data amount of Aα1, which is less than the data amount Bu of one ECC block at the time 1×Tₛₐ in FIG. 35 are left unread in the memory 117.

Returning to FIG. 34, at step S256, the control section 119 supplies the target sound annual ring data having the data amount equal to the integral multiple of one ECC block obtained at step S255, to the signal processing section 115 from the memory controller 116. Further, the control section 119 controls the signal processing section 115 to record the target sound annual ring data having the data amount equal to the integral multiple of one ECC block onto as many ECC block(s) as the integral multiple.

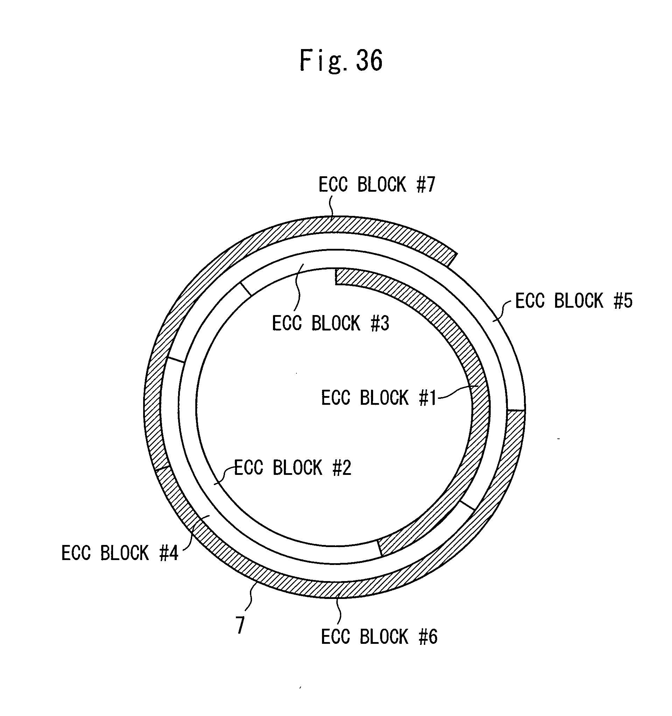

When the time here shown in FIG. 35 is 1×Tₛₐ, audio files having the data amount Bu of one ECC block are supplied to the signal processing section 115 from the memory controller 116 as the target sound annual ring data. And the target sound annual ring data having the data amount Bu of one ECC block is supplied to the pickup section 112 and recorded onto an ECC block #1, which is one of ECC blocks of the optical disk 7, such that the boundaries of the sound annual ring data coincide with the boundaries of the ECC block #1 of the optical disk 7, as shown in FIG. 36.

Note here that, to explain it simply, a physically continuous, sufficiently large empty area is assumed to exist on the optical disk 7. Further, data are to be read/written from/to the optical disk 7, for example, in a direction from the inner circumference toward the outer circumference. Then, it is assumed that the data are recorded in order of those supplied from the memory controller 116 to the signal processing section 115. That is, the data are recorded successively from the inner circumferential side toward the outer circumferential side of the empty area.

At step S256, after recording the target sound annual ring data is controlled as described above, the processing advances to step S257. At step S257, the control section 119 increments the variable Nₐ by 1. Then, the processing returns to step S252 to execute the processing subsequent thereto.

On the other hand, if it is determined at step S253 that the audio files are not supplied to the memory 117, i.e., if supply of audio files from the data conversion section 118 to the memory controller 116 is stopped, then the processing advances to step S258. At step S258, the control section 119 controls the memory controller 116 to read all of audio files currently remaining in the memory 117 and supply the sound annual ring data from the memory controller 116 to the signal processing section 115. As a result, the control section 119 controls the signal processing section 115 to record the sound annual ring data having a data amount equal to an integral multiple of one ECC block, onto as many ECC block(s) as the integral multiple.

Since the audio files have a data amount equal to an integral multiple of one ECC block as described above, the sound annual ring data having the data amount equal to the integral multiple of one ECC block are recorded onto as many ECC blocks as the integral multiple at step S253.

Thereafter, the processing advances to step S259. At step S259, the control section 119 sets to the variable Nₐ a value equivalent to infinity (a very large value). The audio file recording task is ended thereby.

As a result, in the audio file recording task of FIG. 34, sound annual ring data having, for example, a data amount equal to an integral multiple of one ECC block as a unit for reading/writing from/to the optical disk 7 are recorded cyclically on as many ECC block(s) as the integral multiple, such that the boundaries of the sound annual ring data coincide with the corresponding boundaries of ECC block(s) of the optical disk 7.

Referring next to a flowchart of FIG. 36, the video file recording task started at step S234 shown in FIG. 33 will be described.

When the video file recording task is started, first at step S261, the control section 119 initializes a variable Nᵥ, which is incremented by 1 at step S267 hereinafter executed, to, for example, 1. Then, the processing advances to step S262.

At step S262, the control section 119 determines whether or not Tₛᵥ×Nᵥ is less than Tₛₐ×Nₐ, and further, whether or not Tₛᵥ×Nᵥ equals Tₛₗ×Nₗ or less and equals Tₛₘ×Nₘ or less.

The value Tₛₐ×Nₐ here corresponds to the last reproduction time of sound annual ring data which are now to be recorded onto the optical disk 7 when audio files are recorded in units of sound annual ring sizes Tₛₐ. The value Tₛᵥ×Nᵥ corresponds to the last reproduction time of video annual ring data which are now to be recorded onto the optical disk 7 when video files are recorded in units of video annual ring sizes Tₛᵥ.

Let it now be assumed, as described above, that sound annual ring data and picture annual ring data are placed cyclically such that those for similar reproduction time zones are recorded at close positions on the optical disk 7. Further, let it be also assumed that sound annual ring data and picture annual ring data for similar reproduction time zones are placed such that the sound annual ring data are ahead of the picture annual ring data. And if the picture annual ring data now to be recorded are referred to as target picture annual ring data, the target picture annual ring data are picture annual ring data for the most recent (closest to a reproduction time Tₛᵥ×Nᵥ) reproduction time zone prior to the reproduction time Tₛᵥ×Nᵥ. The target picture annual ring data must be recorded immediately after sound annual ring data for the most recent reproduction time zone prior to a reproduction time Tₛₐ×Nₐ are recorded. Therefore, the target picture annual ring data must be recorded at a timing at which the reproduction time Tₛᵥ×Nᵥ of the picture annual ring data is less than the reproduction time Tₛₐ×Nₐ of the sound annual ring data.

Thus at step S262, it is determined whether or not the reproduction time Tₛᵥ×Nᵥ of the picture annual ring data is less than the reproduction time Tₛₐ×Nₐ of the sound annual ring data as described above. This determines whether or not the current timing is a timing for recording the target picture annual ring data.

Further, Tₛᵥ×Nᵥ must equal Tₛₗ×Nₗ or less as a condition for recording the target picture annual ring data, which are picture annual ring data now to be recorded, i.e., picture annual ring data for the most recent (closest to a reproduction time Tₛᵥ×Nᵥ) reproduction time zone prior to the reproduction time Tₛᵥ×Nᵥ, immediately before low-res annual ring data for the most recent reproduction time zone prior to the reproduction time Tₛᵥ×Nᵥ, i.e., immediately after low-res annual ring data for the second most recent reproduction time zone prior to the reproduction time Tₛᵥ×Nᵥ, similarly as at step S252 shown in FIG. 34.

Furthermore, Tₛᵥ×Nᵥ must equal Tₛₘ×Nₘ or less as a condition for recording the target picture annual ring data, which are picture annual ring data now to be recorded, i.e., picture annual ring data for the most recent reproduction time zone prior to the reproduction time Tₛᵥ×Nᵥ, immediately before meta annual ring data for the most recent reproduction time zone prior to the reproduction time Tₛᵥ×Nᵥ, i.e., immediately after meta annual ring data for the second most recent reproduction time zone prior to the reproduction time Tₛᵥ×Nᵥ, as at step S252 shown in FIG. 34.

If it is determined at step S262 that the reproduction time Tₛᵥ×Nᵥ of the picture annual ring data is not less than the reproduction time Tₛₐ×Nₐ of the sound annual ring data, that the reproduction time Tₛᵥ×Nᵥ of the picture annual ring data does not equal the reproduction time Tₛₗ×Nₗ of the low-res annual ring data or less, or that the reproduction time Tₛᵥ×Nᵥ of the picture annual ring data does not equal the reproduction time Tₛₘ×Nₘ of the meta annual ring data or less, i.e., if the current timing is not a timing for recording the target picture annual ring data, then the processing returns to step S262 to repeat similar processing thereafter.

On the other hand, if it is determined at step S262 that the reproduction time Tₛᵥ×Nᵥ of the picture annual ring data is less than the reproduction time Tₛₐ×Nₐ of the picture annual ring data, that the reproduction time Tₛᵥ×Nᵥ of the picture annual ring data equals the reproduction time Tₛₗ×Nₗ of the low-res annual ring data or less, and that the reproduction time Tₛᵥ×Nᵥ of the picture annual ring data equals the reproduction time Tₛₘ×Nₘ of the meta annual ring data or less, i.e., if the current timing is a timing for recording the target picture annual ring data, then the processing advances to step S263. At step S263, the control section 119 determines whether or not video files are supplied to the memory 117 from the data conversion section 118 through the memory controller 116. If it is determined that the video files are supplied, the processing advances to step S24.

At step S264, the control section 119 determines whether or not video files of the video files necessary for a reproduction for a total picture annual ring size Tₛᵥ×Nᵥ are stored into the memory 117. If it is determined that the video files for such a size are not stored into the memory 117 yet, the processing returns to step S262 to repeat the processing subsequent thereto. On the other hand, if it is determined at step S264 that the video files having a size corresponding to the reproduction time Tₛᵥ×Nᵥ are stored into the memory 117, the processing advances to step S265.

Note that, upon detection of the video files necessary for the reproduction for the total reproduction time Tₛᵥ×Nᵥ, the data amount detection section 141 of the data conversion section 118 notifies the memory controller 116 to that effect. The memory controller 116 determines whether or not the video files necessary for the reproduction for the total reproduction time Tₛᵥ×Nᵥ are stored into the memory 117 and notifies the control section 119 of the determination result. That is, the control section 119 makes a determination at step S264 based on the determination result from the memory controller 116.

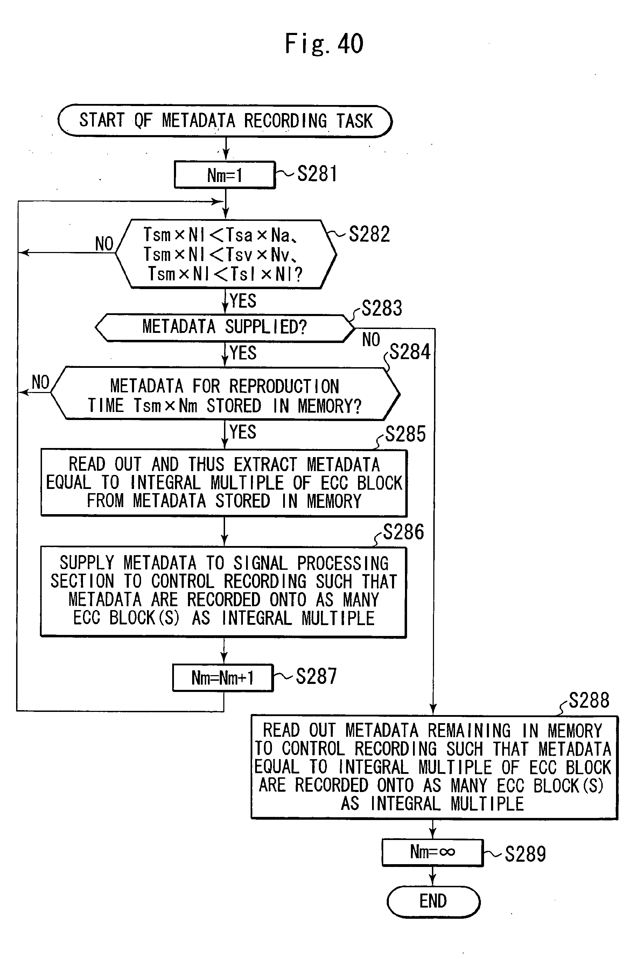

FIG. 40 here shows a relationship between the total data amount (total data amount) La of video files sored into the memory 117 and a time (reproduction time). Note that in FIG. 40, each pair of small arrows (arrows indicating an interval between two adjacent horizontal dotted lines) on the right-hand side pointing upward and downward directions represents the data amount Bu of an ECC block. Further, a dotted line La in FIG. 40 indicates the total data amount (total data amount) La of audio files sored into the memory 117, which is shown by the solid line in FIG. 35 described above.

In FIG. 40, the data amount of video files necessary for a reproduction for a time Tₛᵥ×Nᵥ (=1) when Nᵥ=1, for example, is VN1'. Therefore, at step S264 where Nᵥ=1, when video files having a total data amount of VN1' are stored into the memory 117, it is determined that, the video files corresponding to the reproduction time Tₛᵥ×Nᵥ are stored into the memory 117. Then, the processing advances to step S265.

At step S265, the control section 119 controls the memory controller 116 to read out video files having the following data amount from the video files stored in the memory 117 to extract the video files in order of first inputted ones in terms of time. That is, the memory controller 116 reads out video files having a data amount which is, for example, equal to an integral multiple (n times) of the data amount Bu of one ECC block and maximally readable from the memory 117, as a unit for reading/writing from/to the optical disk 7. Then, the processing advances to step S266. Note that picture annual ring data read out from the memory 117 as the video files having a data amount which is equal to an integral multiple of one ECC block and maximally readable from the memory 117 are the most recent picture annual ring data prior to the reproduction time Tₛᵥ×Nᵥ described above.

When the time is 1×Tₛᵥ in FIG. 40 here described above, the memory 117 stores at least video files having a data amount of VN1'. The data amount VN 1' is larger than the data amount of four ECC blocks, but smaller than the data amount of five ECC blocks. Therefore, at step S265, video files for a VN1, which equals a data amount Bu of four ECC blocks are read out and extracted from the memory 117 as the target picture annual ring data.

Note that video files which are not read out at step S265, i.e., video files having a data amount of Vα1, which is less than the data amount Bu of one ECC block at the time 1×Tₛᵥ in FIG. 40 are left unread in the memory 117.

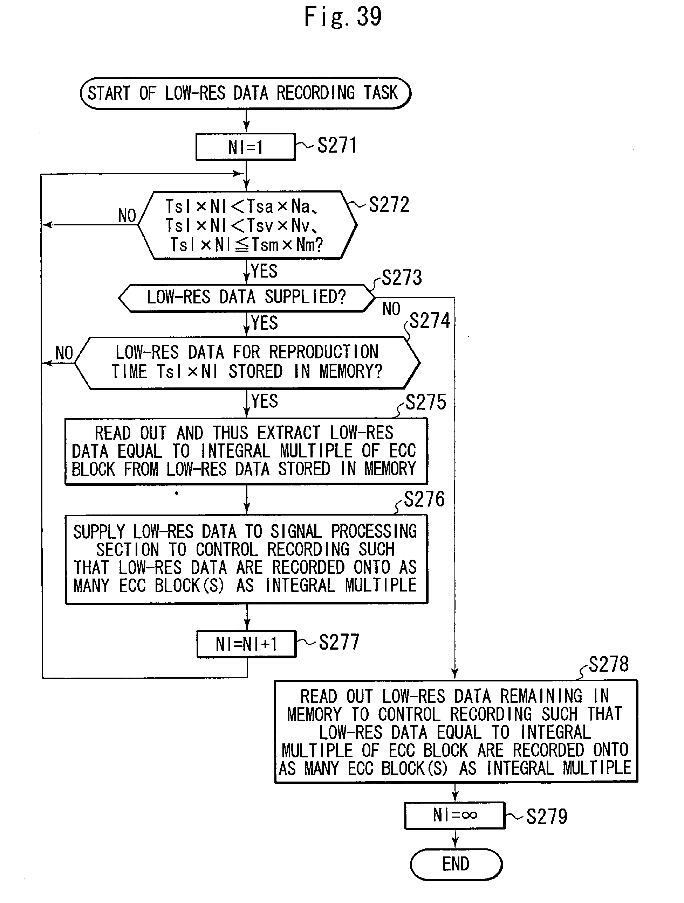

Returning to FIG. 39, at step S266, the control section 119 supplies the target video annual ring data having a data amount equal to an integral multiple of one ECC block obtained at step S265 to the signal processing section 115 from the memory controller 116. As a result, the control section 119 controls the signal processing section 115 to record the target video annual ring data having the data amount equal to the integral multiple of one ECC block on as many ECC block(s) as the integral multiple.

When the time here shown in FIG. 40 is 1×Tₛᵥ, video files having a data amount Bu of four ECC blocks are supplied to the signal processing section 115 from the memory controller 116 as the target picture annual ring data. And the target picture annual ring data having the data amount Bu of four ECC blocks are supplied to the pickup section 112 and recorded thereby onto ECC blocks #2, #3, #4, and #5, which are four ECC blocks of the optical disk 7, such that the boundaries of the video annual ring data coincide with the corresponding boundaries of the ECC blocks #2 to #5 (the top-side boundary of the ECC block #2 and the bottom-side boundary of the ECC block #5) of the optical disk 7, as shown in FIG. 36 described above.

That is, to explain it simply, let it now be assumed that the sound annual ring size Tₛₐ equals the picture annual ring size Tₛᵥ. Then, when Nₐ=Nₐ=1 after the audio file recording task of FIG. 34 and the video file recording task of FIG. 39 are started, the most recent sound annual ring data prior to the reproduction time Tₛₐ×Nₐ are recorded onto the ECC block #1, as shown in FIG. 36. After the sound annual ring data are recorded onto the ECC block #1, at step S257 of the audio file recording task of FIG. 34, the variable Nₐ is incremented by 1 to have Nₐ=2. At this point, the variable Nᵥ is still 1, and therefore, the reproduction time Tₛₐ×Nₐ is less than the reproduction time Tₛₐ×Nₐ. As a result, in the video file recording task of FIG. 39, the most recent picture annual ring data prior to the reproduction time Tₛᵥ×Nᵥ are recorded onto the ECC blocks #2 to #5 at step S266.

That is, as described above, the data here are recorded successively from the inner circumferential side toward the outer circumferential side of the empty area on the optical disk 7 in order of those supplied to the signal processing section 115 from the memory controller 116. Therefore, recording of the picture annual ring data for four ECC blocks, which are the most recent picture annual ring data prior to the reproduction time Tₛᵥ×Nᵥ, is started at the ECC block #2, which is immediately after the ECC block # 1 onto which the sound annual ring data are recorded. As a result, the picture annual ring data are recorded onto the ECC blocks #2 to #5, as shown in FIG. 36.

From what is described hereinabove, the sound annual ring data and the picture annual ring data obtained when Nₐ=Nₐ=1, i.e., the most recent sound annual ring data prior to the reproduction time Tₛₐ×Nₐ and the most recent picture annual ring data prior to the reproduction time Tₛᵥ×Nᵥ which is equal to the reproduction time Tₛₐ×Nₐ, i.e., sound annual ring data and picture annual ring data for similar reproduction time zones are recorded while placed at adjacent positions on the optical disk 7.

At step S266, after recording of the target picture annual ring data is controlled as described above, the processing advances to step S267. At step S267, the control section 119 increments the variable Nᵥ by 1. Then, the processing returns to step S262 to execute the processing subsequent thereto.

On the other hand, if it is determined at step S263 that the video files are not supplied to the memory 117, i.e., if supply of video files from the data conversion section 118 to the memory controller 116 is stopped, then the processing advances to step S268. At step S268, the control section 119 controls the memory controller 116 to read out all of video files currently remaining in the memory 117 and supply the video files from the memory controller 116 to the signal processing section 115. Further, the control section 119 controls the signal processing section 115 to record the picture annual ring data having a data amount equal to an integral multiple of one ECC block, onto as many ECC block(s) as the integral multiple.

Since the video files have a data amount equal to an integral multiple of one ECC block, the picture annual ring data having the data amount equal to the integral multiple of one ECC block are recorded onto as many ECC block(s) as the integral multiple at step S268.

Thereafter, the processing advances to step S269. At step S269, the control section 119 sets to the variable Nᵥ a value equivalent to infinity. The video file recording task is ended thereby.

As a result, picture annual ring data having a data amount equal to, for example, an integral multiple of one ECC block as a unit for reading/writing from/to the optical disk 7 are recorded cyclically onto as many ECC block(s) as the integral multiple, such that the boundaries of the picture annual ring data coincide with the corresponding boundaries of ECC block(s) on the optical disk 7, in the video file recording task of FIG. 36, similarly as in the video file recording task of FIG. 34.

Referring next to a flowchart of FIG. 39, the low-res data recording task started at step S235 shown in FIG. 33 will be described.

When the low-res data recording task is started, first at step S271, the control section 119 initializes a variable Nₗ, which is incremented by 1 at step S277 hereinafter described, to, for example,

### 1. Then, the processing advances to step S272.

At step S272, the control section 119 determines whether or not Tₛₗ×Nₗ is less than Tₛₐ×Nₐ, and further, whether or not Tₛₗ×Nₗ equals Tₛᵥ×Nᵥ or less and equals Tₛₘ×Nₘ or less.

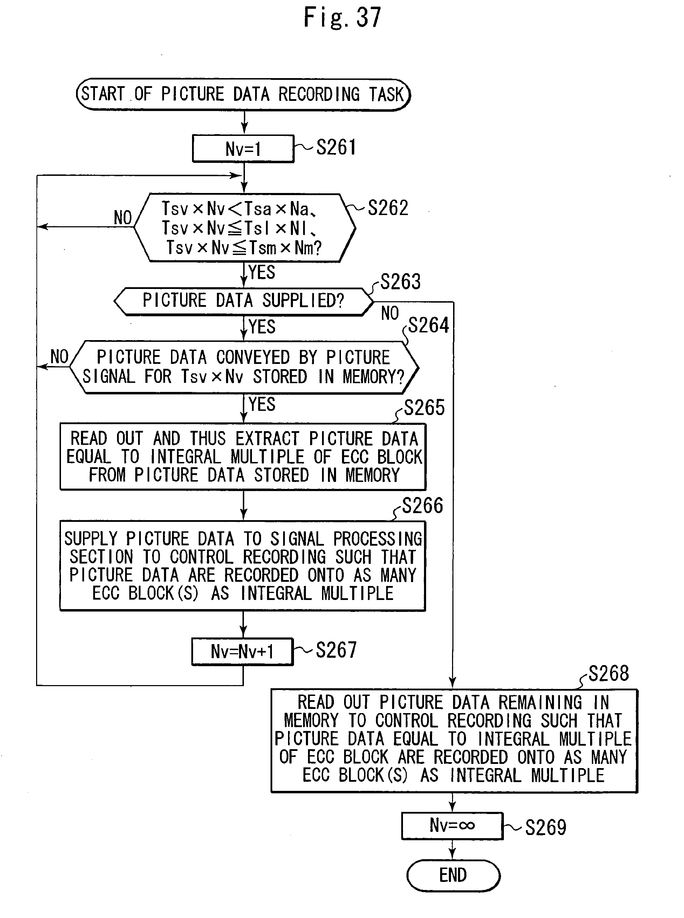

Here, Tₛₗ×Nₗ must be less than Tₛₐ×Nₐ as a condition for recording target low-res annual ring data, which are low-res annual ring data now to be recorded, immediately after sound annual ring data for the most recent reproduction time zone prior to a reproduction time Tₛₗ×Nₗ, similarly as at step S262 shown in FIG. 37. Further, Tₛₗ×Nₗ must be less than Tₛᵥ×Nᵥ as a condition for recording the target low-res annual ring data, which are low-res annual ring data now to be recorded, immediately after picture annual ring data for the most recent reproduction time zone prior to the reproduction time Tₛₗ×Nₗ, similarly as at step S262 shown in FIG. 37.

Furthermore, Tₛₗ×Nₗ must equal Tₛₘ×Nₘ or less as a condition for recording the target low-res annual ring data, which are low-res annual ring data now to be recorded, i.e., low-res annual ring data for the most recent (closest to the reproduction time Tₛₗ×Nₗ) reproduction time zone prior to the reproduction time Tₛₗ×Nₗ, immediately before meta annual ring data for the most recent reproduction time zone prior to the reproduction time Tₛₗ×Nₗ, i.e., immediately after meta annual ring data for the second most recent reproduction time zone prior to the reproduction time Tₛₗ×Nₗ, similarly as at step S252 shown in FIG. 34.

If it is determined at step S272 that the reproduction time Tₛₗ×Nₗ of the low-res annual ring data is not less than the reproduction time Tₛₐ×Nₐ of the sound annual ring data, that the reproduction time Tₛₗ×Nₗ of the low-res annual ring data is not less than the reproduction time Tₛᵥ×Nᵥ of the picture annual ring data, or that the reproduction time Tₛₗ×Nₗ of the low-res annual ring data does not equal the reproduction time Tₛₘ×Nₘ of the meta annual ring data or less, i.e., if the current timing is not a timing for recording the target low-res annual ring data, then the processing returns to step S272 to repeat similar processing thereafter.

On the other hand, if it is determined at step S272 that the reproduction time Tₛₗ×Nₗ of the low-res annual ring data is less than the reproduction time Tₛₐ×Nₐ of the sound annual ring data, and further that the reproduction time Tₛₗ×Nₗ of the low-res annual ring data is less than the reproduction time Tₛᵥ×Nᵥ of the picture annual ring data and equals the reproduction time Tₛₘ×Nₘ of the meta annual ring data or less, i.e., if the current timing is a timing for recording the target low-res annual ring data, then the processing advances to step S273. At step S273, the control section 119 determines whether or not low-res data are supplied to the memory 117 from the data conversion section 118 through the memory controller 116. If it is determined that the low-res data are supplied, the processing advances to step S274.

At step S274, the control section 119 determines whether or not low-res data necessary for a reproduction for a total low-res annual ring size Tₛᵥ×Nᵥ are stored into the memory 117. If it is determined that the low-res data for such a size are not stored into the memory 117 yet, the processing returns to step S272 to repeat similar processing thereafter. On the other hand, if it is determined at step S274 that the low-res data having a data amount corresponding to the reproduction time Tₛₗ×Nₗ are stored into the memory 117, then the processing advances to step S275.

Note that, upon detection of video files and audio files necessary for the reproduction for the total reproduction time Tₛₗ×Nₗ, the data amount detection section 141 of the data conversion section 118 notifies the memory controller 116 to that effect. The memory controller 116 determines whether or not the low-res data necessary for the reproduction for the total reproduction time Tₛₗ×Nₗ are stored into the memory 117 based on the notification and notifies the control section 119 of the determination result. And the control section 119 makes a determination at step S274 based on the determination result from the memory controller 116. Note that video files and the like, whose data amount is reduced and which are further compression-coded, are referred to as low-res data in the present embodiment. Alternatively, video files and the like, whose data amount is reduced only without any further processing, may also be referred to as low-res data.

At step S275, the control section 119 controls the memory controller 116 to read out low-res data having the following data amount from the low-res data stored in the memory 117 to extract the low-res data in order of first inputted data in terms of time. That is, the memory controller 116 reads out low-res data having a data amount which is, for example, equal to an integral multiple (n times) of the data amount Bu of one ECC block and maximally readable from the memory 117, as a unit for reading/writing from/to the optical disk 7. Then, the processing advances to step S276.

Note that low-res annual ring data read out from the memory as low-res data having a data amount which is equal to an integral multiple of one ECC block and maximally readable from the memory 117 are the most recent low-res annual ring data prior to the reproduction time Tₛₗ×Nₗ described above.

Further, low-res data which are not read out at step S275 are left unread in the memory 117.

At step S276, the control section 119 supplies the target low-res annual ring data having the data amount equal to the integral multiple of one ECC block which are obtained at step S275 to the signal processing section 115 from the memory controller 116. The control section 119 controls the signal processing section 115 to record the target low-res annual ring data having the data amount equal to the integral multiple of one ECC block onto as many ECC block(s) as the integral multiple. As a result, the low-res annual ring data having the data amount equal to the integral multiple of one ECC block are recorded onto as many ECC block(s) as the integral multiple, such that the boundaries of the low-res annual ring data coincide with the corresponding boundaries of ECC block(s) of the optical disk 7.

Thereafter, the processing advances to step S277. At step S277, the control section 119 increments the variable Nₗ by 1. Then, the processing returns to step S272 to execute similar processing thereafter.

On the other hand, if it is determined at step S273 that the low-res data are not supplied to the memory 117, i.e., if supply of low-res data from the data conversion section 118 to the memory controller 116 is stopped, then the processing advances to step S278. At step S278, the control section 119 controls the memory controller 116 to read out all of low-res data currently remaining in the memory 117 and supply the low-res data from the memory controller 116 to the signal processing section 115,. Further, the control section 119 controls the signal processing section 115 to record the low-res annual ring data having a data amount equal to an integral multiple of one ECC block onto as many ECC block(s) as the integral multiple.

Since a low-res data file has a data amount equal to an integral multiple of one ECC block, the low-res annual ring data having the data amount equal to the integral multiple of one ECC block are recorded onto as many ECC block(s) as the integral multiple at step S278.

Thereafter, the processing advances to step S279. At step S279, the control section 119 sets to the variable Nₗ a value equivalent to infinity. The low-res data recording task is ended thereby.

Referring next to a flowchart of FIG. 40, the metadata recording task started at step S236 shown in FIG. 33 will be described.

When the metadata recording task is started, first at step S281, the control section 119 initializes a variable Nₗ, which is incremented by 1 at step S287 hereinafter described, to, for example, 1. Then, the processing advances to step S282.

At step S282, the control section 119 determines whether or not Tₛₘ×Nₘ is less than Tₛₐ×Nₐ, and further, whether or not Tₛₘ×Nₘ is less than Tₛᵥ×Nᵥ and Tₛₗ×Nₗ.

Here, Tₛₘ×Nₘ must be less than Tₛₐ×Nₐ as a condition for recording target meta annual ring data, which are meta annual ring data now to be recorded, immediately after sound annual ring data for the most recent reproduction time zone prior to a reproduction time Tₛₘ×Nₘ, similarly as at step S262 shown in FIG. 37. Further, Tₛₘ×Nₘ must be less than Tₛᵥ×Nᵥ as a condition for recording the target meta annual ring data, which are meta annual ring data now to be recorded, immediately after picture annual ring data for the most recent reproduction time zone prior to the reproduction time Tₛₘ×Nₘ, similarly also as at step S262 shown in FIG. 37. Similarly, Tₛₘ×Nₘ must be less than Tₛₗ×Nₗ as a condition for recording the target meta annual ring data, which are meta annual ring data now to be recorded, immediately after low-res annual ring data for the most recent reproduction time zone prior to the reproduction time Tₛₘ×Nₘ.

If it is determined at step S282 that the reproduction time Tₛₘ×Nₘ of the meta annual ring data is not less than the reproduction time Tₛₐ×Nₐ of the sound annual ring data, the reproduction time Tₛᵥ×Nᵥ of the picture annual ring data, or the reproduction time Tₛₗ×Nₗ of the meta annual ring data, i.e., if the current timing is not a timing for recording the target meta annual ring data, then the processing returns to step S282 to repeat similar processing thereafter.

On the other hand, if it is determined at step S282 that the reproduction time Tₛₘ×Nₘ of the meta annual ring data is less than the reproduction time Tₛₐ×Nₐ of the sound annual ring data, the reproduction time Tₛᵥ×Nᵥ of the picture annual ring data, and the reproduction time Tₛₗ×Nₗ of the low-res annual ring data, i.e., if the current timing is a timing for recording the target meta annual ring data, then the processing advances to step S283. At step S283, the control section 119 determines whether or not metadata are supplied to the memory 117 from the data conversion section 118 through the memory controller 116. If it is determined that the metadata are supplied, the processing advances to step S284.

At step S284, the control section 119 determines whether or not metadata necessary for a reproduction for a total meta annual ring size Tₛᵥ×Nᵥ are stored into the memory 117. If it is determined that the metadata for such a size are not stored in the memory 117 yet, the processing returns to step S282 to repeat similar processing thereafter. On the other hand, if it is determined at step S284 that the metadata having a size corresponding to the reproduction time Tₛₘ×Nₘ are stored into the memory 117, the processing advances to step S285.

Note that, upon detection of video files and audio files necessary for the reproduction for the total reproduction time Tₛₘ×Nₘ, the data amount detecting section 141 of the data conversion section 118 notifies the memory controller 116 to that effect. The memory controller 116 determines whether or not the metadata necessary for the reproduction for the total reproduction time Tₛₘ×Nₘ are stored into the memory 117 based on the notification and notifies the control section 119 of the determination result. And the control section 119 makes a determination at step S284 based on the determination result from the memory controller 116.

At step S285, the control section 119 controls the memory controller 116 to read out metadata having the following data amount from the metadata stored in the memory 117 to extract the metadata in order of first inputted data in terms of time. That is, the memory controller 116 reads out metadata having a data amount which is, for example, equal to an integral multiple (n times) of the data amount Bu of one ECC block and maximally readable from the memory 117, as a unit for reading/writing from/to the optical disk 7. Then, the processing advances to step S286.

Note that meta annual ring data read out from the memory as metadata having a data amount which is equal to an integral multiple of one ECC block and maximally readable from the memory 117 are the most recent meta annual ring data prior to the reproduction time Tsm×Nm described above.

Further, meta data not read out at step S285 are left unread in the memory 117.

At step S286, the control section 119 supplies the target meta annual ring data having the data amount equal to the integral multiple of one ECC block which are obtained at step S285 to the signal processing section 115 from the memory controller 116. The control section 119 controls the signal processing section 115 to record the target meta annual ring data having the data amount equal to the integral multiple of one ECC block onto as many ECC block(s) as the integral multiple. As a result, the meta annual ring data having the data amount equal to the integral multiple of one ECC block are recorded cyclically onto as many ECC block(s) as the integral multiple, such that the boundaries of the meta annual ring data coincide with the corresponding boundaries of ECC block(s) of the optical disk 7.

Thereafter, the processing advances to step S287. At step S287, the control section 119 increments the variable Nₗ by 1. Then, the processing returns to step S282 to execute similar processing thereafter.

On the other hand, if it is determined at step S283 that the metadata are not supplied to the memory 117, i.e., if supply of metadata from the data conversion section 118 to the memory controller 116 is stopped, then the processing advances to step S288. At step S288, the control section 119 controls the memory controller 116 to read out all of metadata currently remaining in the memory 117 and supply the metadata from the memory controller 116 to the signal processing section 115. Further, the control section 119 controls the signal processing section 115 to record the meta annual ring data having a data amount equal to an integral multiple of one ECC block onto as many ECC block(s) as the integral multiple.

Thereafter, the processing advances to step S289. At step S289, the control section 119 sets to the variable Nₗ a value equivalent to infinity. The metadata recording task is ended thereby.

Thus, the processing of the audio file recording task, the video file recording task, the low-res data recording task, and the metadata recording task is executed, whereby audio files, video files, metadata, and low-res data are recorded onto the optical disk 7. As a result, for example, when the sound annual ring size Tₛₐ and the picture annual ring size Tₛᵥ are set to the same time period, sound annual ring data, which are a collection of audio files, and picture annual ring data, which are a collection of video files, both for similar reproduction time zones, are sequentially recorded so as to be placed at adjacent positions on the optical disk 7. Further, low-res annual ring data, which are a collection of low-res data files, and meta annual ring data, which are a collection of metadata, both for similar reproduction time zones, are sequentially recorded so as to be placed at adjacent positions on the optical disk 7.

Video files, audio files, and the like are recorded onto the optical disk 7, in a manner forming annual rings of a tree. For analogy, a collection of audio files, video files, and the like is called sound "annual ring" data, picture "annual ring" data, and the like. The same applies similarly to low-res annual ring data and meta annual ring data. Note that a collection of data in a data series, which are recorded onto the optical disk 7 as if they formed an annual ring of a tree, will hereinafter be referred to suitably as
annual ring data.

The width of an annual ring formed on the optical disk 7 here (across how many tracks an item of sound annual ring data and an item of picture annual ring data are recorded) is defined by the sound annual ring size Tₛₐ and the picture annual ring size Tₛᵥ. Note that the sound annual ring size Tₛₐ and the picture annual ring size Tₛᵥ can be varied according to radial positions of the optical disk 7 at which sound annual ring data and picture annual ring data are recorded. And depending on the sound annual ring size Tₛₐ and the picture annual ring size Tₛᵥ, an item of sound annual ring data or an item of picture annual ring data may not use a full circuit of a track for recording, in some cases.

As described hereinabove, since sound annual ring data and picture annual ring data for similar reproduction time zones are recorded at close positions on the optical disk 7, audio files and video files for the same reproduction time can be read out quickly from the optical disk 7 for reproduction.

Further, audio files and video files are collected into annual ring data having a data amount equal to a plurality of ECC blocks. And the annual ring data are recorded onto the plurality of ECC blocks such that the boundaries of the annual ring data coincide with the corresponding boundaries of ECC blocks. Thus, only the audio files or the video files can be read out from the optical disk 7. As a result, editing processing only for audio files or video files can be performed quickly.

Each of the header, the body, and the footer of a video file has a data amount equal to an integral multiple of one ECC block. Thus, each of the header, the body, and the footer is recorded onto ECC block(s). That is, any two of the header, the body, and footer are in no way recorded onto one ECC block.

Therefore, when one of the header, the body, and the footer is written or read out, the writing or reading processing is executed to/from a minimum number of ECC blocks. Therefore, the reading/writing processing can be executed more efficiently. As a result, in file writing processing, the number of clusters in which data are rewritten is minimized. Consequently, if an optical disk 7 has a physical limitation (in terms of physical properties) as to how many times data are rewritable, an advantage is provided that the service life of the optical disk 7 is extended in terms of how many times data are rewritable.

Note that based on the determination processing at step S252 in the audio file recording task of FIG. 34, at step S262 in the video file recording task of FIG. 37, at step S272 in the low-res data recording task of FIG. 39, and at step S282 in the metadata recording task of FIG. 40, sound annual ring data, picture annual ring data, low-res annual ring data, and meta annual ring data for similar reproduction time zones are recorded cyclically on the optical disk 7 in priority order of the sound annual ring data, the picture annual ring data, the low-res annual ring data, and the meta annual ring data.

However, the priority order for recording sound annual ring data, picture annual ring data, low-res annual ring data, and meta annual ring data onto the optical disk 7 is not limited to the above-described order of sound annual ring data, picture annual ring data, low-res annual ring data, and meta annual ring data.

For example, the priority order for recording onto the optical disk 7 may be of meta annual ring data, sound annual ring data, picture annual ring data, and low-res annual ring data.

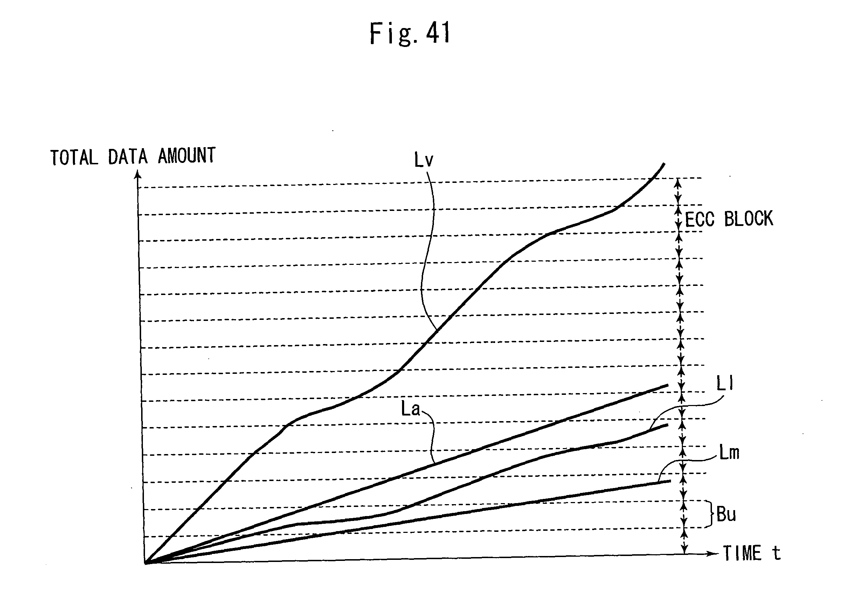

Next, as described above, the memory controller 116 reads out data from the memory 117 to extract sound annual ring data, picture annual ring data, low-res annual ring data, and meta annual ring data. Referring now to FIGS. 41 to 45, processing of forming (extracting) the sound annual ring data, the picture annual ring data, the low-res annual ring data, and the meta annual ring data will further be described.

FIG. 41 shows a relationship between the total data amount (total data amount) La of audio files, the total data amount Lv of video files, a total data amount Ll of low-res data, and a total data amount Lm of metadata, which are sored into the memory 117 and a time (reproduction time) t. Note that in FIG. 41, each pair of small arrows (arrows indicating an interval between two adjacent horizontal dotted lines) on the right-hand side pointing upward and downward directions represents the data amount Bu of an ECC block.

As described above, when audio files necessary for a reproduction for a reproduction time Tₛₐ×Nₐ are stored into the memory 117, the memory controller 116 reads out audio files having a maximum data amount equal to an integral multiple of one ECC block which are readable from the memory 117 to extract the audio files having the maximum data amount equal to the integral multiple of one ECC block as sound annual ring data. Further, when video files necessary for a reproduction for a reproduction time Tₛᵥ×Nᵥ are stored into the memory 117, the memory controller 116 reads out video files having a maximum data amount equal to an integral multiple of one ECC block which are readable from the memory 117 to extract the video files having the maximum data amount equal to the integral multiple of one ECC block as picture annual ring data. Furthermore, when low-res data necessary for a reproduction for a reproduction time Tₛₗ×Nₗ are stored into the memory 117, the memory controller 116 reads out low-res data in maximum data amounts equal to an integral multiple of one ECC block which are readable from the memory 117 to extract the low-res data having the maximum data amount equal to the integral multiple of one ECC block as low-res annual ring data. Furthermore, when metadata necessary for a reproduction for a reproduction time Tₛₘ×Nₘ are stored into the memory 117, the memory controller 116 reads out metadata having a maximum data amount equal to an integral multiple of one ECC block which are readable from the memory 117 to extract the metadata having the maximum data amount equal to the integral multiple of one ECC block as meta annual ring data.

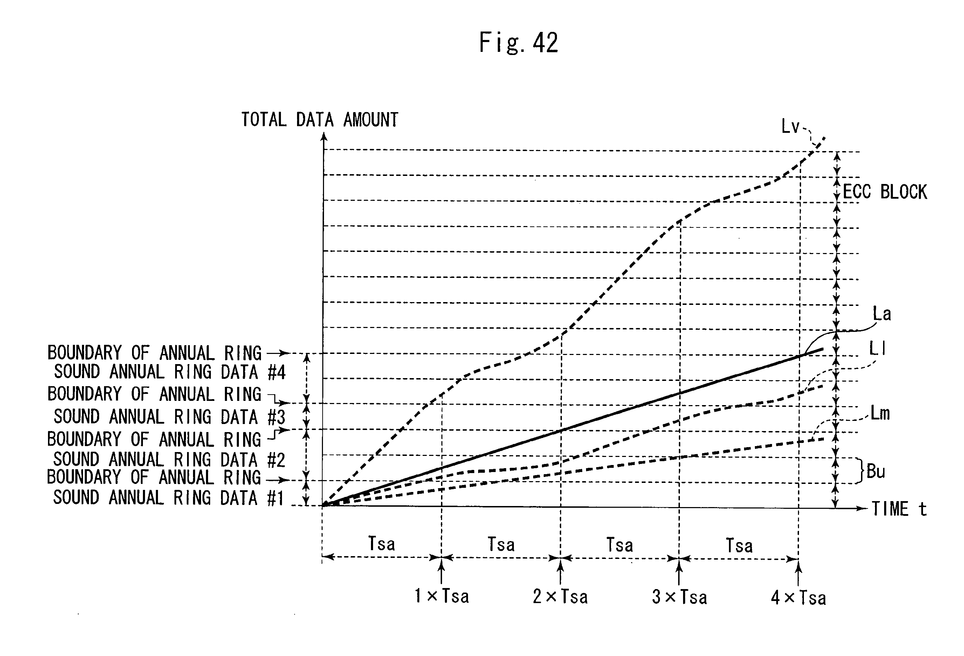

Therefore, as shown in FIG. 41, if the total data amount La of audio files sored into the memory 117 varies, the memory controller 116 reads out, as shown in FIG. 42, audio files having a maximum data amount equal to an integral multiple of one ECC block which are readable from the memory 117 at timings at which the time t reaches i×Tₛₐ (i=1, 2, ···) which equals an integral multiple of the sound annual ring size Tₛₐ to extract the audio files having the maximum data amount equal to the integral multiple of one ECC block as sound annual ring data.

In the embodiment of FIG. 42 here, audio files for one ECC block, two ECC blocks, one ECC block, and two ECC blocks are extracted as sound annual ring data #1, #2, #3, and #4, at the timings at which the time t reaches Tₛₐ, 2×Tₛₐ, 3×Tₛₐ, and 4×Tₛₐ, respectively.

Note that, when the sound annual ring data #1, #2, #3, and #4 are extracted at the timings at which the time t reaches Tₛₐ, 2×Tₛₐ, 3×Tₛₐ, and 4×Tₛₐ, fractions which are data remaining in the memory 117 are included in a next annual ring.

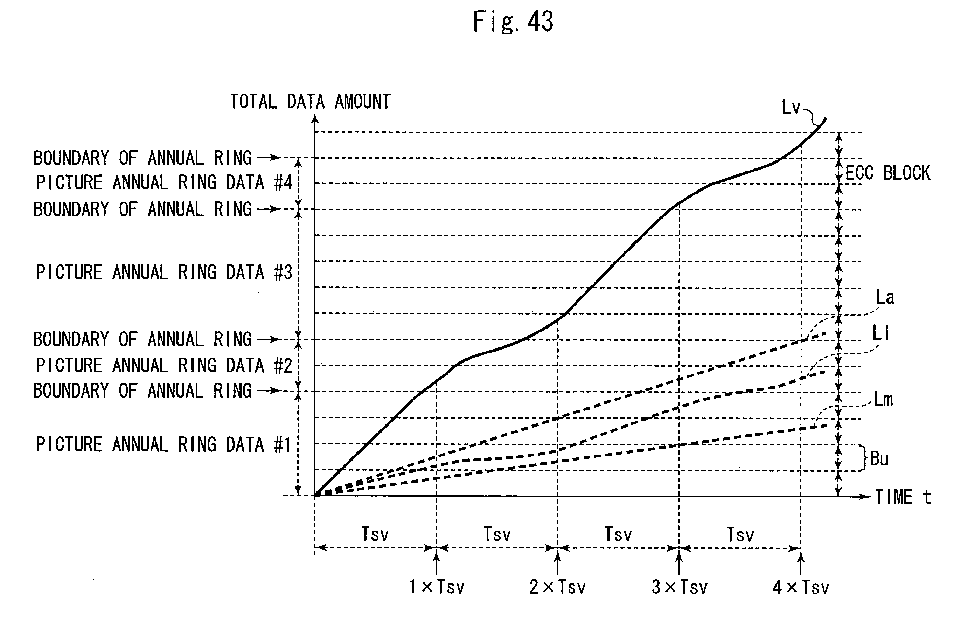

Further, as shown in FIG. 41, if the total data amount Lv of video files sored into the memory 117 varies, the memory controller 116 reads out, as shown in FIG. 43, video files having a maximum data amount equal to an integral multiple of one ECC block which are readable from the memory 117 at timings at which the time t reaches i×Tₛᵥ which equals an integral multiple of the picture annual ring size Tₛᵥ to extract the video files having the maximum data amount equal to the integral multiple of one ECC block as picture annual ring data.

In the embodiment of FIG. 43 here, video files of four ECC blocks, two ECC blocks, five ECC blocks, and two ECC blocks are extracted as picture annual ring data #1, #2, #3, and #4 at the timings at which the time t reaches Tₛᵥ, 2×Tₛᵥ, 3×Tₛᵥ, and 4×Tₛᵥ, respectively.

Note that, when the picture annual ring data #1, #2, #3, and #4 are extracted at the timings at which the time t reaches Tₛᵥ, 2×Tₛᵥ, 3×Tₛᵥ, and 4×Tₛᵥ, fractions which are data remaining in the memory 117 are included in a next annual ring.

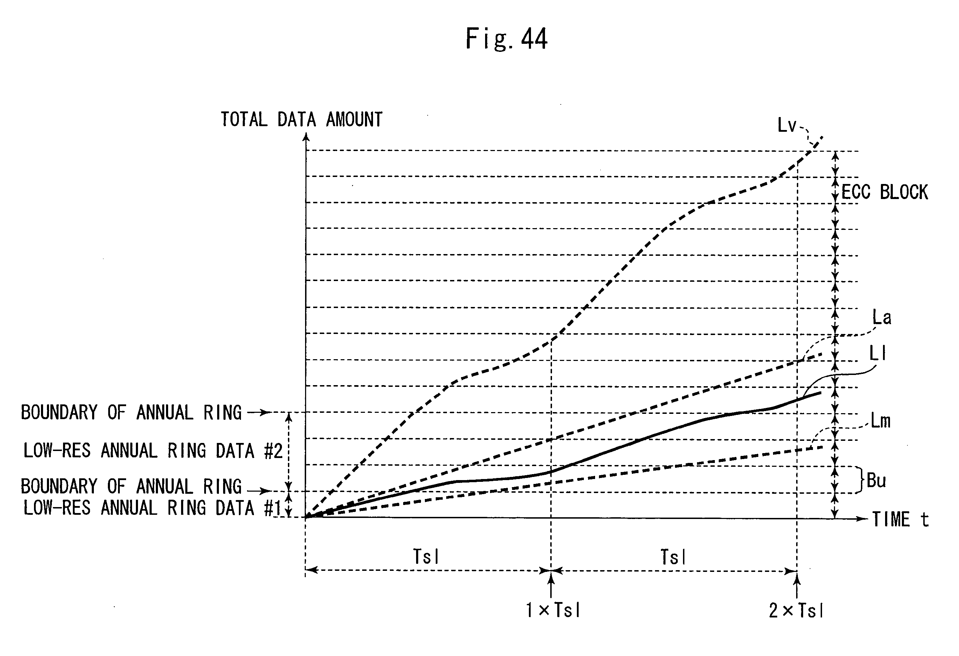

Furthermore, as shown in FIG. 41, if the total data amount Ll of low-res data sored into the memory 117 varies, the memory controller 116 reads out, as shown in FIG. 44, low-res data having a maximum data amount equal to an integral multiple of one ECC block which are readable from the memory 117 at timings at which the time t reaches i×Tₛₗ which equals an integral multiple of the low-res annual ring size Tₛₗ to extract the low-res data having the maximum data amount equal to the integral multiple of one ECC block as low-res annual ring data.

In the embodiment of FIG. 44 here, low-res data of one ECC block and three ECC blocks are extracted as low-res annual ring data # 1 and #2 at the timings at which the time t reaches Tₛₗ and 2×Tₛₗ, respectively.

Note that, when the low-res annual ring data # 1 and #2 are extracted at the timings at which the time t reaches Tₛₗ and 2×Tₛₗ, fractions which are data remaining in the memory 117 are included in a next annual ring.

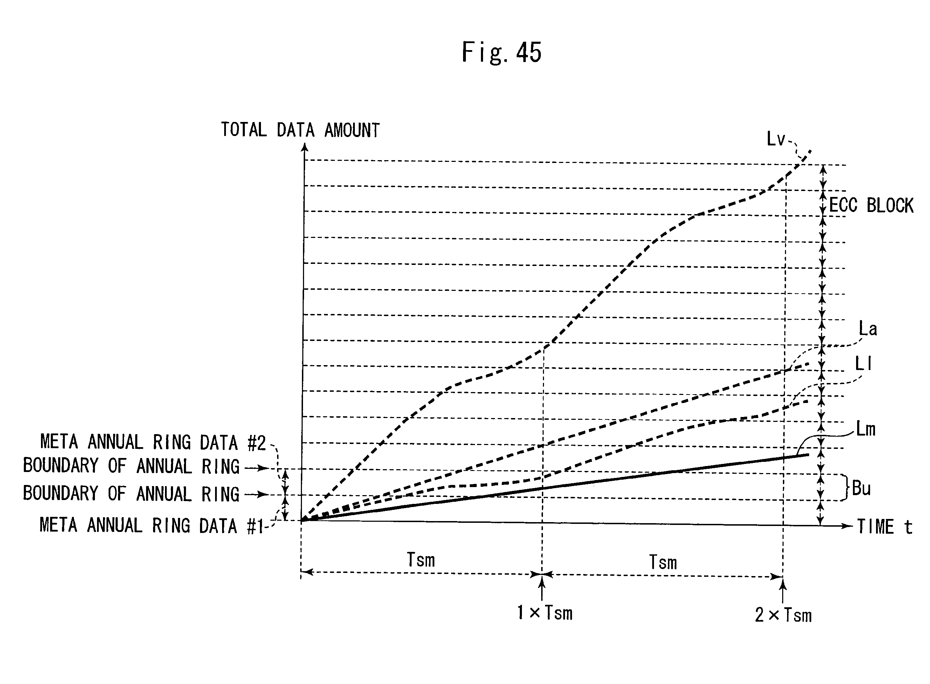

Further, as shown in FIG. 41, if the total data amount Lm of metadata sored into the memory 117 varies, the memory controller 116 reads out, as shown in FIG. 45, metadata having a maximum data amount equal to an integral multiple of one ECC block which are readable from the memory 117 at timings at which the time t reaches i×Tₛₘ which equals an integral multiple of the meta annual ring size Tₛₘ to extract the metadata having the maximum data amount equal to the integral multiple of one ECC block as meta annual ring data.

In the embodiment of FIG. 45 here, metadata of one ECC block and one ECC blocks are extracted as meta annual ring data # 1 and #2 at the timings at which the time t reaches Tₛₘ and 2×Tₛₘ, respectively.

Note that, when the meta annual ring data #1 and #2 are extracted at the timings at which the time t reaches Tₛₘ and 2×Tₛₘ, fractions which are data remaining in the memory 117 are included in a next annual ring.

Let it now be assumed that the sound annual ring size Tₛₐ shown in FIG. 42, the picture annual ring size Tₛᵥ shown in FIG. 43, the low-res annual ring size Tₛₗ shown in FIG. 44, and the meta annual ring size Tₛₘ shown in FIG. 45 are related to each other such that, for example, the sound annual ring size Tₛₐ equals the picture annual ring size Tₛᵥ, and that each of the low-res annual ring size Tₛₗ and the meta annual ring size Tₛₘ equals twice the sound annual ring size Tₛₐ (2×Tₛₐ=2×Tₛᵥ=Tₛₗ=Tₛₘ). Then, according to the audio file recording task of FIG. 34, the video file recording task of FIG. 37, the low-res data recording task of FIG. 39, and the metadata recording task of FIG. 40, the sound annual ring data #1 to #4 shown in FIG. 42, the picture annual ring data #1 to #4 shown in FIG. 43, the low-res data #1 and #2 shown in FIG. 44, the metadata #1 and #2 shown in FIG. 45 are recorded cyclically onto the optical disk 7, as shown in FIG. 27.

That is, as described above, sound annual ring data, picture annual ring data, low-res annual ring data, and meta annual ring data for similar reproduction time zones are recorded more ahead on the optical disk in priority order of the sound annual ring data, the picture annual ring data, the low-res annual ring data, and the meta annual ring data, as described above.

Further, considering, for example, the sound annual ring data having the highest priority as a reference, the picture annual ring data having the picture annual ring size Tₛᵥ which is the same as the sound annual ring size Tₛₐ are recorded onto the optical disk 7 at the same cycle as that of the sound annual ring data. That is, if sound annual ring data for a reproduction time zone are recorded, picture annual ring data for a reproduction time zone similar to the reproduction time zone are recorded following the sound annual ring data.

Furthermore, a low-res annual ring having the low-res annual ring size Tₛₗ which is double the sound annual ring size Tₛₐ is recorded onto the optical disk 7 at a cycle double that of the sound annual ring data. That is, as to low-res annual ring data for a reproduction time zone, there are sound annual ring data for two reproduction time zones into which the reproduction time zone is delimited, and the low-res annual ring data are recorded after the sound annual ring data for the two reproduction time zones are recorded.

Furthermore, a meta annual ring having the meta annual ring size Tₛₘ which is double the sound annual ring size Tₛₐ are recorded onto the optical disk 7 at a cycle double that of the sound annual ring data. That is, as to meta annual ring data for a reproduction time zone, there are sound annual ring data for two reproduction time zones into which the reproduction time zone is delimited, and the meta annual ring data are recorded after the sound annual ring data for the two reproduction time zones are recorded.

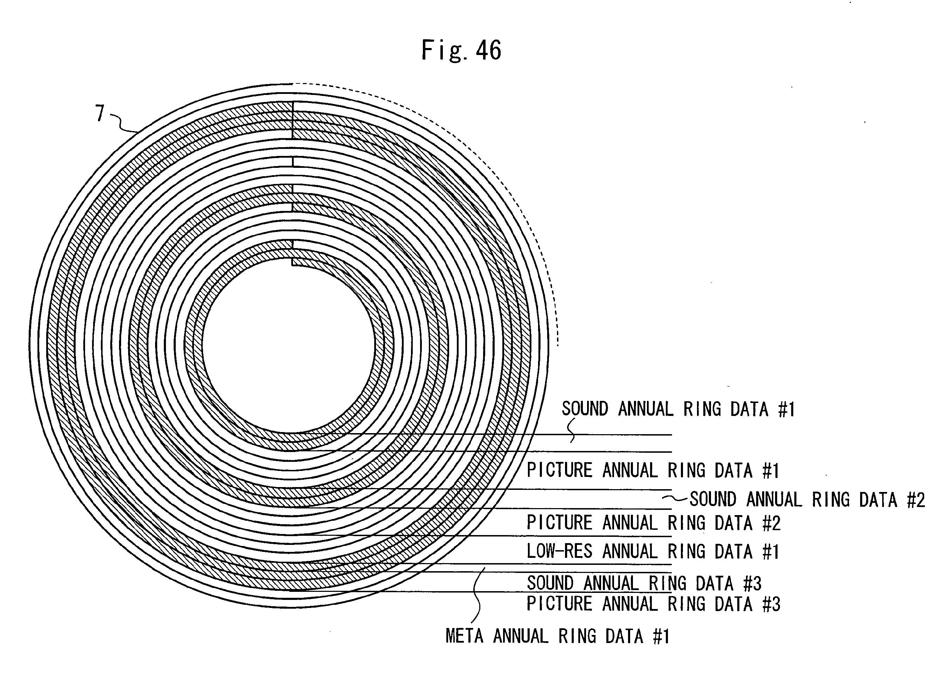

From what is described hereinabove, the sound annual ring data #1 to #4 shown in FIG. 42, the picture annual ring data #1 to #4 shown in FIG. 43, the low-res annual ring data #1 and #2 shown in FIG. 44, and the meta annual ring data #1 and #2 shown in FIG. 45 are, as shown in FIG. 46, are recorded in order of the sound annual ring data #1, the picture annual ring data #1, the sound annual ring data #2, the picture annual ring data #2, the low-res annual ring data # 1, the meta annual ring data # 1, the sound annual ring data #3, the picture annual ring data #3, the sound annual ring data #4, the picture annual ring data #4, the low-res annual ring data #2, the meta annual ring data #2, ···.

In the embodiments of FIGS. 41 to 46, the picture annual ring size Tₛᵥ equals the sound annual ring size Tₛₐ and the low-res annual ring size Tₛₗ and the meta annual ring size Tₛₘ are double the sound annual ring size Tₛₐ. The relationship between the sound annual ring size Tₛₐ, the picture annual ring size Tₛᵥ, the low-res annual ring size Tₛₗ, and the meta annual ring size Tₛₘ is not limited thereto. That is, all of the sound annual ring size Tₛₐ, the picture annual ring size Tₛᵥ, the low-res annual ring size Tₛₗ, and the meta annual ring size Tₛₘ can be set to, for example, the same time period, or different time periods.

Further, the sound annual ring size Tₛₐ, the picture annual ring size Tₛᵥ, the low-res annual ring size Tₛₗ, and the meta annual ring size Tₛₘ can be set according to, for example, applications or intended use of the optical disk 7.

That is, the low-res annual ring size Tₛₗ and the meta annual ring size Tₛₘ can be set to values larger than, for example, the sound annual ring size Tₛₐ and the picture annual ring size Tₛᵥ.

If the low-res annual ring size Tₛₗ is set to a value larger than the sound annual ring size Tₛₐ and the picture annual ring size Tₛᵥ (e.g., the sound annual ring size Tₛₐ and the picture annual ring size Tₛᵥ are set to 2 seconds, whereas the low-res annual ring size Tₛₗ is set to 10 seconds), a shuttle reproduction speed using low-res data and a rate of transferring low-res data to an external device such as a computer can be improved.

That is, low-res data are smaller in data amount than main line data, and thus can be read out from the optical disk 7 quickly. Further, low-res data require less processing load, and thus can be used for variable-speed reproduction such as shuttle reproduction. And if the low-res annual ring size Tₛₗ is set to a large value, occurrence of seeks performed when only low-res data are read out from the optical disk 7 can be reduced. Thus, reading of only low-res data from the optical disk 7 can be executed more quickly. Consequently, when shuttle reproduction using low-res data is performed, the shuttle reproduction speed can be improved. Further, when low-res data are processed by transfer to a computer or the like, the transfer rate can be improved (the time required for transfer can be shortened).

If the meta annual ring size Tₛ is set to a value larger than the sound annual ring size Tₛₐ and the picture annual ring size Tₛᵥ (e.g., the sound annual ring size Tₛₐ and the picture annual ring size Tₛᵥ are set to 2 seconds, whereas the meta annual ring size Tₛₗ is set to 20 seconds), only metadata can be read out quickly from the optical disk 7, similarly as when the low-res annual ring size Tₛₗ is set to a large value. Therefore, search of a specific frame in a video file as main line data can be performed at a high speed, using a time code or the like included in the metadata.

Therefore, if high-speed shuttle reproduction or high-speed transfer to an external device of low-res data are required, the low-res annual ring size Tₛₗ is set to a large value. Further, if high-speed search of frames is required, the meta annual ring size Tₛ is set to a large value. As a result, a highly useful optical disk 7 which meets the requirements can be provided.

As described hereinabove, if the low-res annual ring size Tₛₗ and the meta annual ring size Tₛₐ are set to large values, a time required for reading (further, a time required for writing) a specific data series, such as only low-res data or metadata can be reduced.

Therefore, if the sound annual ring size Tₛₐ and the picture annual ring size Tₛᵥ are set to large values, a time required for reading (further for writing) only audio files or video files as main line data can also be reduced. As a result, when so-called AV (Audio Visual) split editing, wherein only audio files or video files are edited, is performed, the ending speed can be increased.

However, when picture and sound are reproduced, in order to start the reproduction, it must be waited until video files and audio files accompanying the video files for individual reproduction times are ready. If the sound annual ring size Tₛₐ and the picture annual ring size Tₛᵥ are set to large values, only one of the audio files having such a large sound annual ring size Tₛₐ and the video files having such a large picture annual ring size Tₛᵥ must be read, and the other must be read thereafter. This increases the time to wait until video files for a reproduction time and audio files accompanying the video files are ready. This further increases a delay time from when a command is given for reproduction to when the reproduction is actually started. Further, in order to reproduce video files for a reproduction time and audio files accompanying the video files simultaneously, an earlier read one of the audio files having a large sound annual ring size Tₛₐ and the video files having a large picture annual ring size Tₛᵥ must be sored into the memory 117 at least until reading of the later read one is started. From what is described hereinabove, when the sound annual ring size Tₛₐ and the picture annual ring size Tₛᵥ are set to large values, not only a delay time provided until the reproduction is started increases, but also the memory 117 must have a large storage capacity.

Therefore, it is desirable to define the sound annual ring size Tₛₐ and the picture annual ring size Tₛᵥ, considering a delay time provided until reproduction is started and an allowable storage capacity of the memory 117.

Note that low-res data and metadata have a considerably small data amount compared with audio files and video files, and thus even when the low-res annual ring size Tₛₗ and the meta annual ring size Tₛₘ are set to large values, an increase in the storage capacity required of the memory 117 is not so problematic, when compared with the case where the sound annual ring size Tₛₐ and the picture annual ring size Tₛᵥ are set to large values.

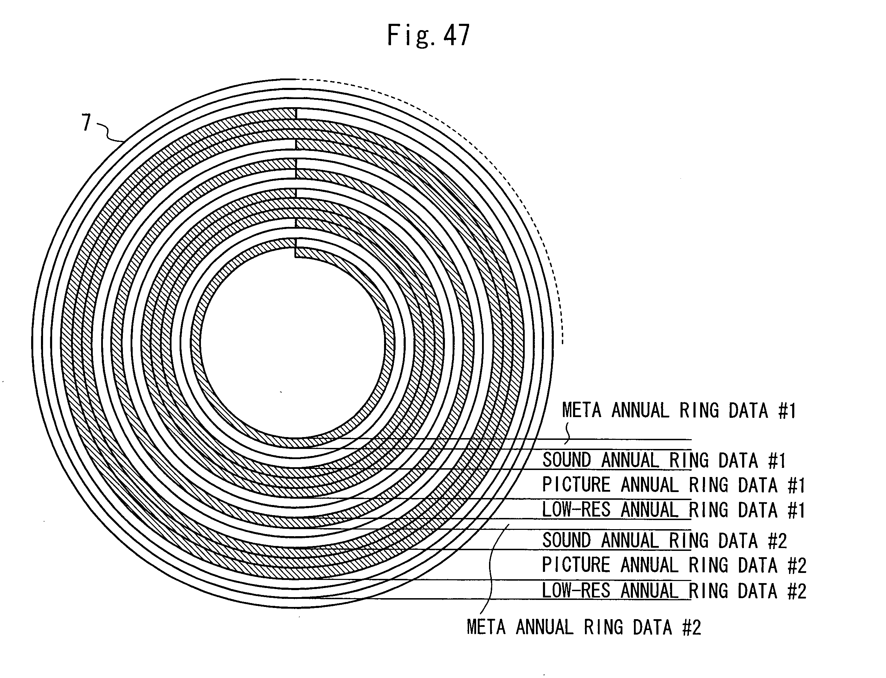

Further, data may be recorded onto the optical disk 7 in priority order of meta annual ring data, sound annual ring data, picture annual ring data, and low-res annual ring data. In this case, meta annual ring data #1 and #2, sound annual ring data #1 and #2, picture annual ring data #1 and #4, low-res annual ring data #1 and #2 are, as shown in, for example, FIG. 47, recorded in order of the meta annual ring data # 1, the sound annual ring data # 1, the picture annual ring data #1, the low-res annual ring data #1, the meta annual ring data #2, the sound annual ring data #2, the picture annual ring data #2, the low-res annual ring data #2, ···, from the inner circumferential side toward the outer circumferential side of the optical disk 7.

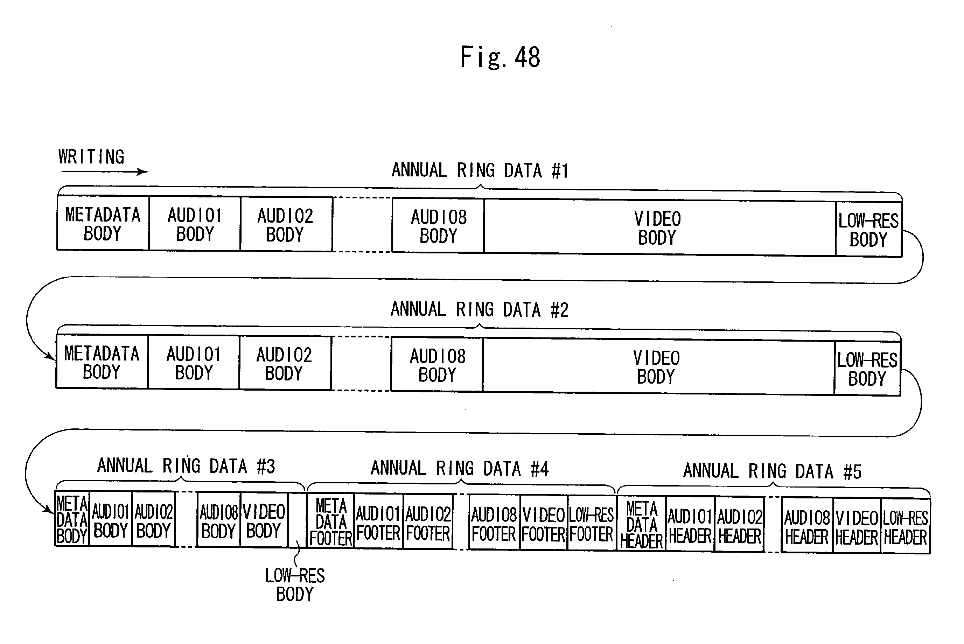

FIG. 48 shows how data are read/written from/to the optical disk 7 by the disk driving apparatus 11. Note that in FIG. 48, four data series, namely, metadata files, audio files, video files, and low-res data are read/written from/to the optical disk 7.

In FIG. 48, meta annual ring data #1, sound annual ring data #1, picture annual ring data #1, and low-res annual ring data # 1 are represented as annual ring data #1; meta annual ring data #2, sound annual ring data #2, picture annual ring data #2, and low-res annual ring data #2 are represented as annual ring data #2; and similarly, Nth meta annual ring data #N, Nth sound annual ring data #N, Nth picture annual ring data #N, and Nth low-res annual ring data #N are represented as annual ring data #N.

If a sufficiently large, continuous empty area exists on the optical disk 7 and the empty area has no defects, then sound annual ring data, picture annual ring data, low-res annual ring data, and meta annual ring data respectively extracted from data series of metadata, audio files, video files, and low-res data are written to the empty area on the optical disk 7, as if they were written at a stroke, as shown in FIG. 48. Note that the meta annual ring data, the sound annual ring data, the picture annual ring data, and low-res annual ring data each have a data amount equal to an integral multiple of one ECC block of the optical disk 7. Further, the data are recorded such that the boundaries of the data coincide with the corresponding boundaries of ECC block(s).

As described with reference to the flowchart for the metadata file creation process of FIG. 13 and the flowchart for the video file creation process of FIG. 15, a metadata file and a video file are supplied to the disk driving apparats 11 in order of the body, footer, and header.

As described with reference to the flowchart for the audio file creation process of FIG. 16, an audio file is supplied to the disk driving apparatus 11 as follows. The value of each audio item of the body and a filler having the KLV structure are supplied to the disk driving apparatus 11. Then, the footer is supplied to the disk driving apparatus 11. And thereafter, the header and the audio item key and length are supplied to the disk driving apparatus 11.

As described with reference to the flowchart for the low-res file synthesis process of FIG. 32, a low-res file is supplied to the memory controller 116 in order of the body, the footer, and the header.

Therefore, the sound annual ring data, the picture annual ring data, the low-res annual ring data, and the meta annual ring data respectively extracted from the data series of metadata, audio files, video files, and low-res data are written to the empty area on the optical disk 7 in order of the bodies, footers, and headers as shown in FIG. 48.

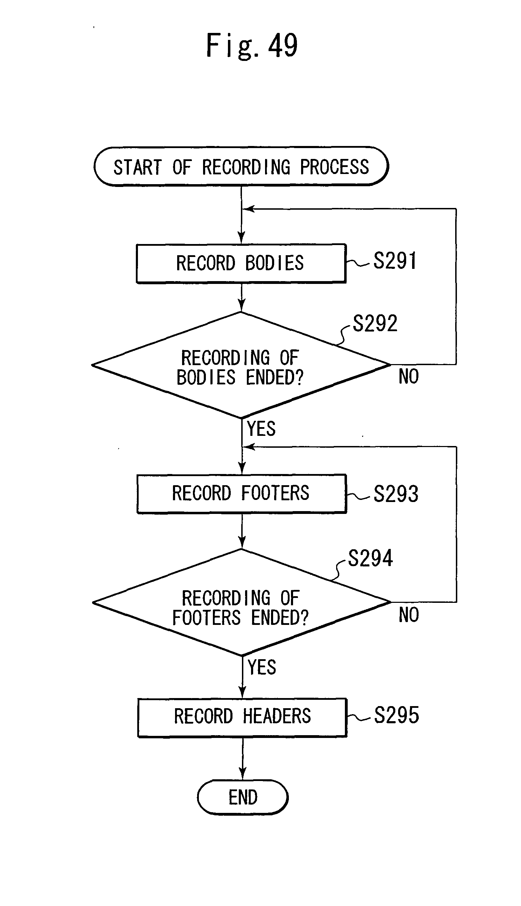

Referring to a flowchart of FIG. 49, a recording process will be described. In the recording process, the processes illustrated by the flowchart for the metadata file creation process of FIG. 13, the flowchart for the video file creation process of FIG. 15, the flowchart for the audio file creation process of FIG. 16, the flowchart for the low-res file synthesis process of FIG. 32, and the flowchart for the recording process of FIG. 33 are handled collectively.

At step S291, the control section 119 of the disk driving apparatus 11 records the bodies of a metadata file, a video file, audio files, and a low-res file onto the optical disk 7. Then, the processing advances to step S292. At step S292, the control section 119 determines whether or not recording of the bodies of the metadata file, the video file, the audio files, and the low-res file is ended. If it is determined that the recording of the bodies is not ended, the processing returns to step S291 to repeat the processing of recording the bodies.

If it is determined at step S292 that the recording of the bodies is ended, the processing advances to step S293. At step S293, the control section 119 records the footers of the metadata file, the video file, the audio files, and the low-res file onto the optical disk 7. Then, the processing advances to step S294. At step S294, the control section 119 determines whether or not recording of the footers of the metadata file, the video file, the audio files, and the low-res file is ended. If it is determined that the recording of the footers is not ended, the processing returns to step S293 to repeat the processing of recording the footers.

If it is determined at step S294 that the recording of the footers is ended, the processing advances to step S295. At step S295, the control section 119 records the headers of the metadata file, the video file, the audio files, and the low-res file onto the optical disk 7. The recording process is ended thereby.

Thus, headers are recorded after bodies and footers are recorded. Consequently, a header, which includes data that are not defined unless a body is defined, such as a reproduction time or time code (TC) of audio data, can be recorded in one processing step.

Further, the header can be reliably recorded next to the body and the footer onto the optical disk 7. In other words, the header can be reliably recorded at a position close to the body and the footer.

Note that files are read out from the optical disk 7 in order of the header, the body, and the footer as seek operation is performed in order of the header, the body, and the footer.

Further, in the present embodiment, the memory controller 116 reads out audio files having a maximum data amount which is equal to an integral multiple of a reading/writing unit such as one ECC block and which is readable from the memory 117 for each time which equals an integral multiple of the sound annual ring size Tₛₐ to extract sound annual ring data. That is, when audio files having a data amount larger than N ECC blocks but smaller than N+ 1 ECC blocks are stored into the memory 117 at a time which is an integral multiple of the sound annual ring size Tₛₐ, the audio files having the data amount equal to N ECC blocks are extracted as sound annual ring data. Alternatively, however, after a time which is an integral multiple of the sound annual ring size Tₛₐ is reached, it is waited until audio files having a data amount equal to N+ 1 ECC blocks or more are stored into the memory 117. Then, the audio files having the data amount equal to N+ 1 ECC blocks can be read out to extract sound annual ring data. This applies similarly to extraction of picture annual ring data, low-res annual ring data, and meta annual ring data. That is, annual ring data may be in a data amount equal to an integral multiple of a unit for reading/writing from/to the optical disk 7 and close to a data amount necessary for a reproduction for a reproduction time set as the sound annual ring size or the like.

Furthermore, metadata may be recorded by including all the components in meta annual ring data, or may alternatively be recorded by including part of the components in meta annual ring data and recording the other components separately from the meta annual ring data. That is, metadata are delimited into components usable for searching, for example, frames of a video file, such as a time code, and the other components. And the components usable for searching can be recorded collectively onto, for example, the inner circumferential side of the optical disk 7, and the other components can be recorded cyclically onto the optical disk 7 as included in the meta annual ring data. In this case, the components usable for searching are recorded collectively onto the optical disk 7. Thus, the time required for searching can be reduced.

Note that metadata may have all the components recorded collectively onto, for example, the inner circumferential side of the optical disk 7. However, if all the components of the metadata are recorded collectively onto, for example, the inner circumferential side of the optical disk 7, recording of data series other than the metadata must be waited until the recording of the metadata is ended, or all the components of the metadata must be stored until recording of the data series other than the metadata is ended. By contrast, if only those components of metadata usable for searching are recorded collectively onto the optical disk 7, a waiting time for recording the data series other than the metadata can be reduced, or the data amount of metadata required to be kept in storage until recording of the data series other than the metadata is ended can be reduced.

Alternatively, the present invention can be applied to disk-shaped recording media other than optical disks.

Further, in what is described hereinabove, the cases where video files and audio files are placed on spiral tracks have been described as examples. However, these files may be placed alternately on concentric tracks. In this case, one track on the inner circumferential side is succeeded by another adjacent track on the outer circumferential side.

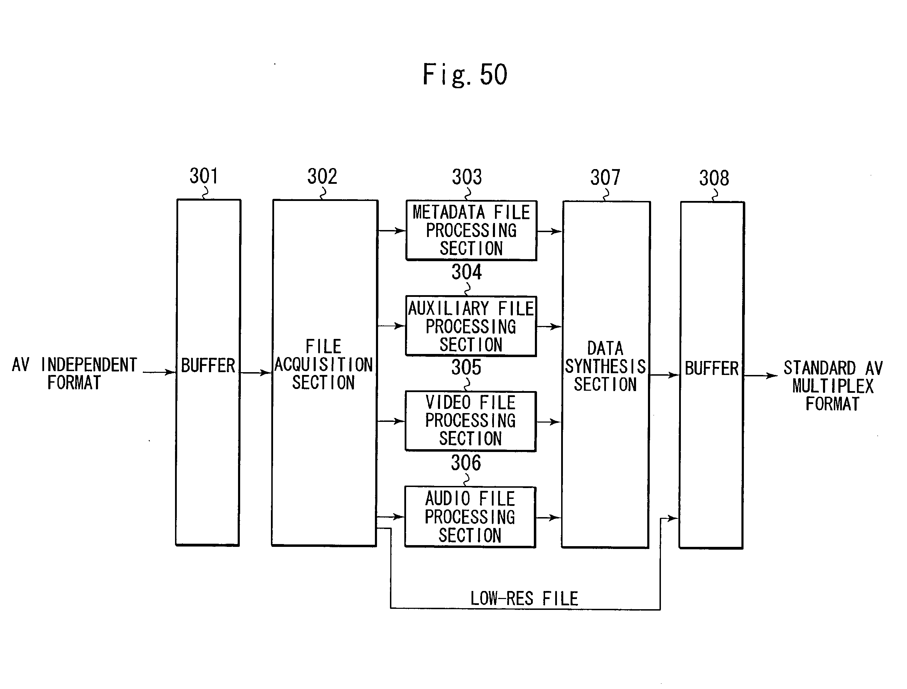

Next, FIG. 50 shows an example of a configuration of the independent/ standard conversion section 22 shown in FIG. 7.

A buffer 301 temporarily stores files of the AV independent format (a mater file, a metadata file of file units, a metadata file of frame units, an auxiliary file, a video file, audio files of individual eight channels, and a low-res data file) supplied thereto from the disk driving apparatus 11 (FIG. 1).

A file acquisition section 302 refers to the master file stored in the buffer 301 to recognize file names for the metadata file of file units, the metadata file of frame units, the auxiliary file, the video file, the audio files of the individual eight channels, and the low-res file. Then, the file acquisition section 302 causes the disk driving apparatus 11 to read out the metadata file of file units, the metadata file of frame units, the auxiliary file, the video file, the audio files of the individual eight channels, and the low-res file from the optical disk 7 through the buffer 301 based on the file names to acquire the files. Further, the file acquisition section 302 supplies the acquired metadata file of file units and metadata file of frame units to a metadata file processing section 303, the acquired auxiliary file to an auxiliary file processing section 304, the acquired video file to a video file processing section 305, and the acquired audio files of the individual eight channels to an audio file processing section 305, respectively. Furthermore, the file acquisition section 302 supplies the acquired low-res file to a buffer 309.

The metadata file processing section 303 extracts metadata of file units from the metadata file of file units supplied thereto from the file acquisition section 302. Further, the metadata file processing section 303 extracts system items in which metadata of frame units are placed from the metadata file of frame units and supplies the metadata and the system items to a data synthesis section 307.

The auxiliary file processing section 304 extracts auxiliary items from the auxiliary file supplied thereto from the file acquisition section 302 and supplies the auxiliary items to the data synthesis section 307.

The video file processing section 305 extracts picture items from the video file supplied thereto from the file acquisition section 302 and supplies the picture items to the data synthesis section 307.

The audio file processing section 105 extracts audio data for the individual channels from the audio files of the individual eight channels supplied thereto from the file acquisition section 302. Further, the audio file processing section 105 forms sound items in which the audio data of the individual channels are placed in a multiplexed state and supplies the sound items to the data synthesis section 307.

The data synthesis section 307 forms a file of the standard AV multiplex format, using the metadata of file units and the system item supplied thereto from the metadata file processing section 303, the auxiliary items supplied thereto from the auxiliary file processing section 304, the picture items supplied thereto from the video file processing section 305, and the sound items supplied thereto from the audio file processing section 306. Further, the data synthesis section 307 supplies the file of the standard AV multiplex format to the buffer 308.

The buffer 308 temporarily stores the file of the standard AV multiplex format supplied thereto from the data synthesis section 307 or the low-res file supplied thereto from the file acquisition section 302 and supplies the files to the communication interface 13 (FIG. 1).

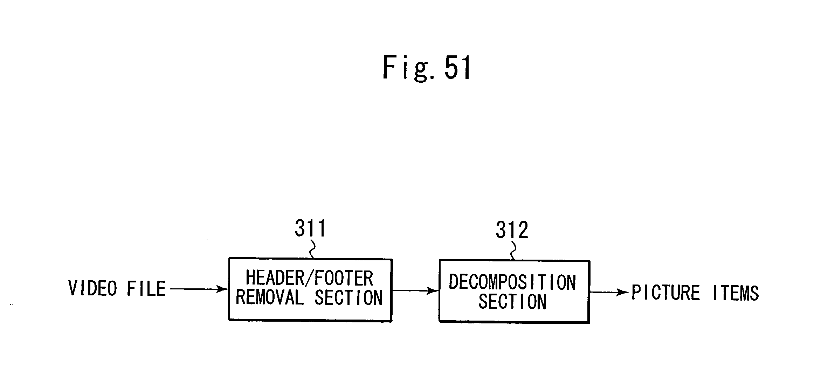

Next, FIG. 51 shows an example of a configuration of the video file processing section 305 shown in FIG. 50.

A video file supplied thereto from the file acquisition section 302 is supplied to a header/footer removal section 311. The header/footer removal section 311 removes a header and a footer from the video file supplied thereto and supplies the remaining body to a decomposition section 312. The decomposition section 312 separates a sequence of picture items placed in the body supplied thereto from the header/footer removal section 311 and extracts, from the sequence, units to be multiplexed with other items (system items, sound items, and auxiliary items), i.e., individual picture items here in which video data of frame units are placed. Then, the decomposition section 311 then supplies the extracted picture items to the data synthesis section 307 (FIG. 50).

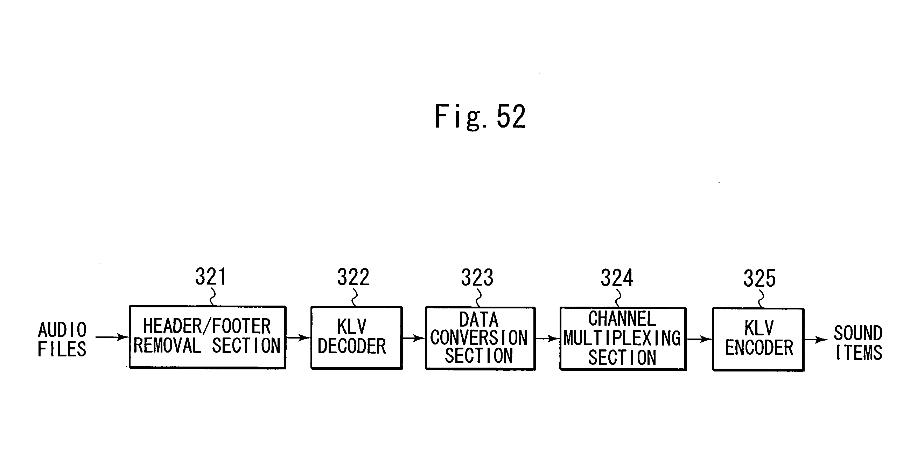

Next, FIG. 52 shows an example of a configuration of the audio file processing section 306 shown in FIG. 50.

Audio files of individual eight channels supplied thereto from the file acquisition section 302 are supplied to a header/footer removal section 321. The header/footer removal section 321 removes headers and footers from the audio files of the individual eight channels supplied thereto, and supplies the remaining bodies of the individual channels to a KLV decoder 322.

The KLV decoder 322 decomposes the bodies of the individual channels supplied thereto from the header/footer removal section 321 and supplies audio data of the WAVE format of the individual channels obtained thereby to a data conversion section 323.

The data conversion section 323 performs inverse conversion to that performed by the data conversion section 63 shown in FIG. 10, for the audio data supplied thereto from the KLV decoder 322. That is, the data conversion section 323 converts the audio data of the individual channels of the WAVE format supplied thereto from the KLV decoder 322 into audio data of the AES3 format of the individual channels and supplies the resulting audio data to a channel multiplexing section 324.

The channel multiplexing section 324 multiplexes the audio data of the individual channels supplied thereto from the data conversion section 124 in units of samples and supplies the resulting multiplexed audio data to a KLV encoder 325.

The KLV encoder 325 delimits the multiplexed audio data supplied thereto from the channel multiplexing section 324 in a unit corresponding to each frame of the video data and KLV-codes the multiplexed audio data corresponding to each frame so as to have a KLV structure. Further, the KLV encoder 325 adds, to the KLV structure of the multiplexed audio data corresponding to each frame, a KLV structure of a filler for a length short of the data length of a sound item, which is a fixed length, to form a sound item. Then, the KLV encoder 325 supplies the sound items thus formed to the data synthesis section 307 (FIG. 50).

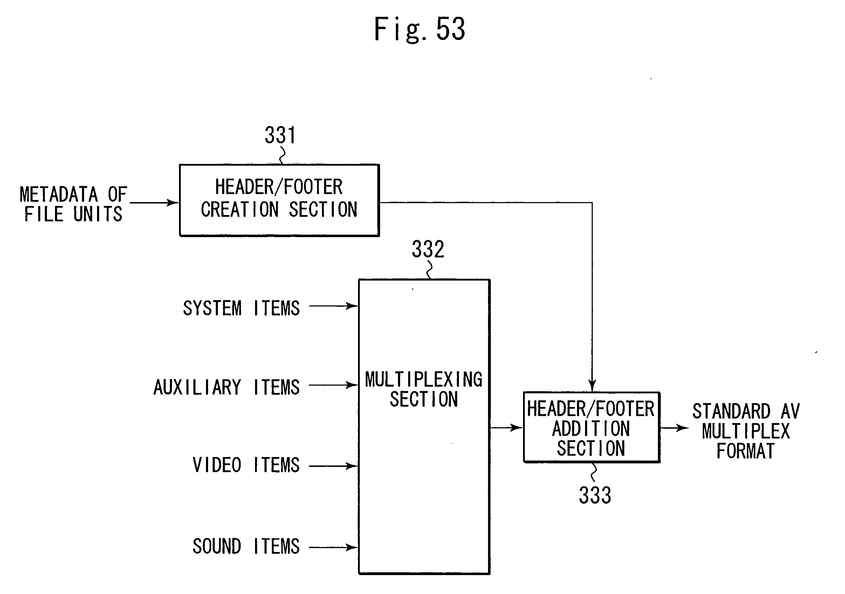

Next, FIG. 53 shows an example of a configuration of the data synthesis section 307 shown in FIG. 50.

A header/footer creation section 331 receives metadata of file units outputted from the metadata file processing section 303. The header/footer creation section 331 creates a header and a footer of a file of the standard AV multiplex format. Further, the header/footer creation section 331 places metadata of frame units supplied thereto from the metadata file processing section 303 in header metadata of the header and supplies the resulting header and footer to a header/footer addition section 333.

A multiplexing section 332 receives system items outputted from the metadata file processing section 303, auxiliary items outputted from the auxiliary file processing section 304, picture items outputted from the video file processing section 305, and sound items outputted from the audio file processing section 306. The multiplexing section 332 successively multiplexes the system items, the picture items, the sound items, and the auxiliary items supplied thereto in this order to form a sequence of edit units. The multiplexed section 322 supplies the sequence of edit units as a body to the header/footer addition section 333.

The header/footer addition section 333 adds the header and the footer supplied thereto from the header/footer creation section 331 to the body supplied thereto from the multiplexing section 332, to form a file of the standard AV multiplex format. Then, the header/ footer addition section 333 outputs the file of the standard AV multiplex format.

Next, the independent/ standard conversion section 22 shown in FIG. 50 executes a metadata file process for processing metadata files, an auxiliary file process for processing an auxiliary file, a video file process for processing a video file, and an audio file process for processing audio files. Further, the independent/ standard conversion section 22 executes a synthesis process for creating a file of the standard AV multiplex format through synthesis using results of the processes mentioned above.

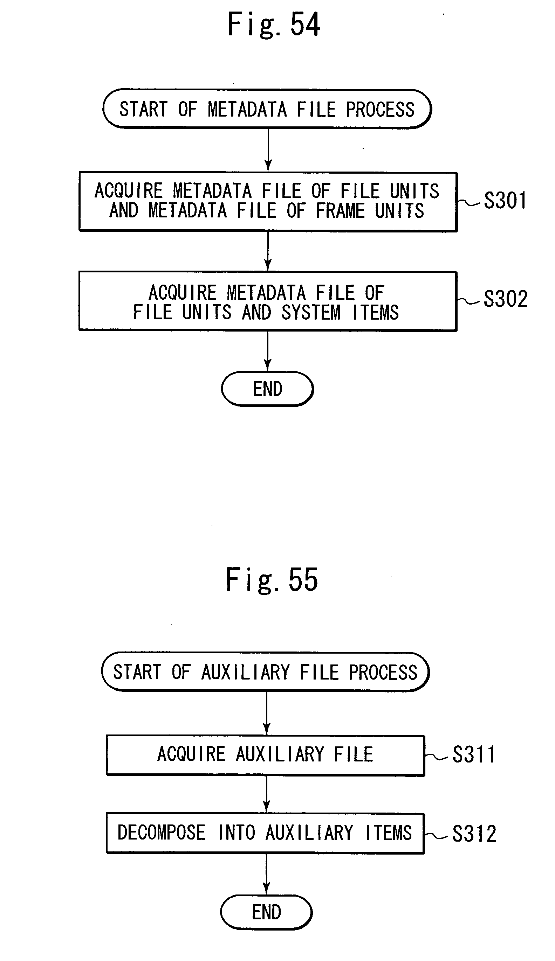

Thus, referring to flowcharts of FIGS. 54 to 58, the metadata file process, the auxiliary file process, the video file process, the audio file process, and the synthesis process executed by the independent/ standard conversion section 22 will be described.

Referring first to the flowchart of FIG. 54, the metadata file process will be described.

The metadata file process is started, for example, when a master file is read out from an optical disk 7 by the disk driving apparatus 11 and stored into the buffer 301.

That is, first at step S301, the file acquisition section 302 refers to the master file stored in the buffer 301 to recognize file names for metadata files of file units and frame units, respectively. Further, at step S301, the file acquisition section 302 causes the disk driving section 11 to read out the metadata files of file units and frame units through the buffer 301 from the optical disk 7 through the buffer 301 based on the file names to acquire the metadata files of file units and frame units, respectively. The file acquisition section 302 supplies the acquired metadata files to the metadata file processing section 303. Then, the processing advances to step S302. At step S302, the metadata file processing section 303 extracts metadata of file units from the metadata file of file units supplied thereto from the file acquisition section 302. Further, the metadata file processing section 303 acquires system items in which metadata of frame units are placed from the metadata file of frame units supplied thereto from the file acquisition section 302. Then, the metadata file processing section 303 supplies the metadata of file units and the system items to the data synthesis section 307. The metadata file process is ended thereby.

Referring next to the flowchart of FIG. 55, the auxiliary file process will be described.

The auxiliary file process is started, for example, when a master file is read out from an optical disk 7 by the disk driving apparatus 11 and stored into the buffer 301.

That is, first at step S311, the file acquisition section 302 refers to the master file stored in the buffer 301 to recognize a file name for an auxiliary file. Further, at step S311, the file acquisition section 302 causes the disk driving apparatus 11 to read out the auxiliary file from the optical disk 7 through the buffer 301 based on the file name to acquire the auxiliary file and supplies the acquired file to the auxiliary file processing section 304. Then, the processing advances to step S312.

At step S312, the auxiliary file processing section 304 decomposes the auxiliary file supplied thereto from the file acquisition section 302 into units of auxiliary items to extract (acquire) the auxiliary items from the auxiliary file and supplies the auxiliary items to the data synthesis section 307. The auxiliary file process is ended thereby.

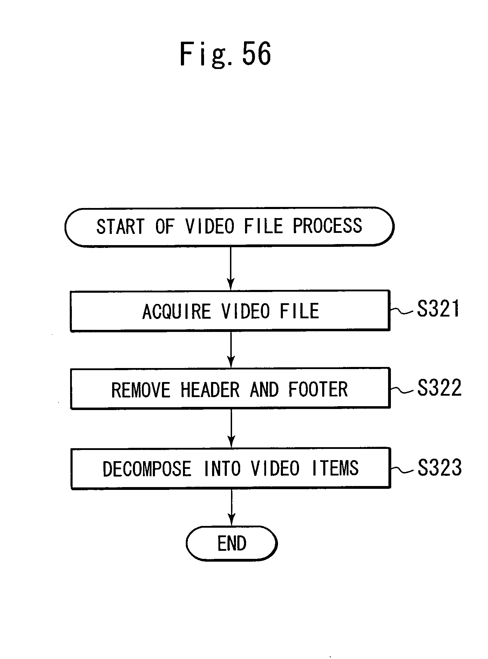

Referring next to the flowchart of FIG. 56, the video file process will be described.

The video file process is started, for example, when a master file is read out from an optical disk 7 by the disk driving apparatus 11 and stored into the buffer 301.

That is, first at step S321, the file acquisition section 302 refers to the master file stored in the buffer 301 to recognize a file name for a video file. Further at step S321, the file acquisition section 302 causes the disk driving apparatus 11 to read out the video file from the optical disk 7 through the buffer 301 based on the file name to acquire the video file and supplies the acquired video file to the video file processing section 305. Then, the processing advances to step S322.

At step S322, the header/footer removal section 311 of the video file processing section 305 (FIG. 51) removes a header and a footer from the video file supplied thereto from the file acquisition section 302 and supplies the remaining body to the decomposition section 312. Then, the processing advances to step S323. At step S323, the decomposition section 312 decomposes a sequence of picture items placed in the body supplied thereto from the header/footer removal section 311 into individual picture items and supplies the resulting picture items to the data synthesis section 307. The video file process is ended thereby.

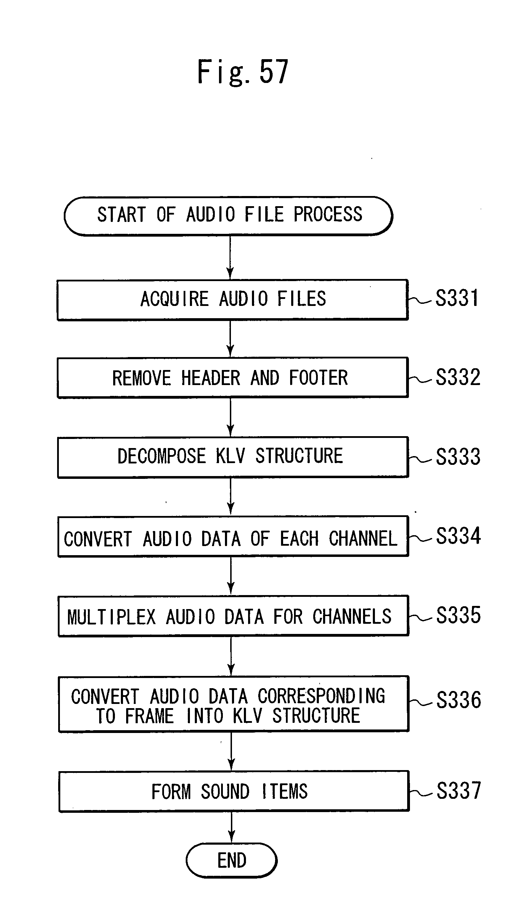

Referring next to the flowchart of FIG. 57, the audio file process will be described.

The audio file process is started, for example, when a master file is read out from an optical disk 7 by the disk driving apparatus 11 and stored into the buffer 301.

That is, first at step S331, the file acquisition section 302 refers to the master file stored in the buffer 301 to recognize file names for the audio files of individual eight channels. Further, at step S331, the file acquisition section 302 causes the disk driving apparatus 11 to read out the audio files from the optical disk 7 through the buffer 301 based on the file names to acquire the audio files of the individual eight channels and supplies the acquired files to the audio file processing section 306. Then, the processing advances to step S332.

At step S332, the header/footer removal section 321 of the audio file processing section 106 (FIG. 52) removes a header and a footer from the audio file of each of the eight channels supplied thereto from the file acquisition section 302 and supplies the remaining body of each channel to the KLV decoder 322. Then, the processing advances to step S333. At step S333, the KLV decoder 322 decomposes a KLV structure of the body of the channel supplied thereto from the header/footer removal section 321 to obtain audio data of the WAVE format and supplies the audio data to the data conversion section 323. Then, the processing advances to step S334.

At step S334, the data conversion section 323 converts the audio data of the WAVE format of each channel supplied thereto from the KLV decoder 322 into audio data of the AES3 format of the channel and supplies the audio data of the AES3 format to the channel multiplexing section 324. Then, the processing advances to step S335. At step S335, the channel multiplexing section 324 multiplexes the audio data of each channel supplied thereto from the data conversion section 124 and supplies the multiplexed audio data to the KLV encoder 325. Then, the processing advances to step S336.

At step S336, the KLV encoder 325 delimits the multiplexed audio data supplied thereto from the channel multiplexing section 324 into a unit corresponding to each frame of the video data and KLV-codes the multiplexed audio data corresponding to the frame so as to have a KLV structure. Then, the processing advances to step S337. Further, at step S337, the KLV encoder 325 adds, to the KLV structure of the multiplexed audio data corresponding to each frame, a KLV structure of a filler necessary therefor to form a sound item. Then, the KLV encoder 325 supplies the sound items to the data synthesis section 307. The audio file process is ended thereby.

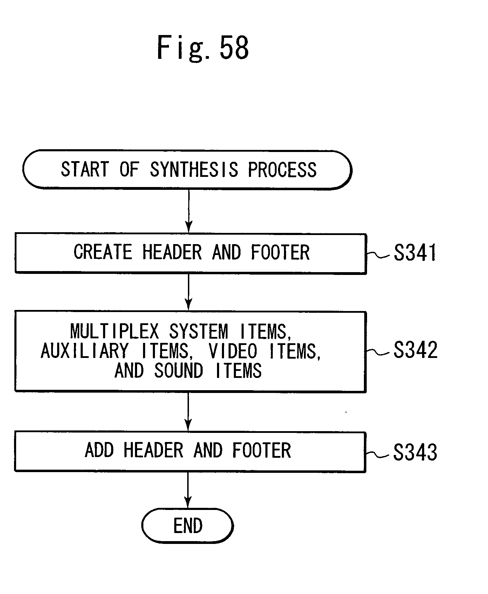

Referring next to the flowchart of FIG. 58, the synthesis process will be described.

The synthesis process is started, for example, when metadata of file units and system items, auxiliary items, picture items, and sound items are supplied to the data synthesis section 307 from the metadata file processing section 303, the auxiliary file processing section 304, the video file processing section 305, and the audio file processing section 306, respectively.

That is, first at step S341, the header/footer creation section 331 of the data synthesis section 307 (FIG. 53) creates a header and a footer of a file of the standard AV multiplex format and further places the metadata of file units from the metadata file processing section 303 in header metadata of the header. Further, at step S341, the header/footer creation section 331 supplies the header and the footer thus obtained to the header/footer addition section 333. Then, the processing advances to step S342.

At step S342, the multiplexing section 332 multiplexes the system items outputted from the metadata file processing section 303, the auxiliary item outputted from the auxiliary file processing section 304, the picture items outputted from the video file processing section 305, and the sound items outputted from the audio file processing section 306 to obtain a sequence of edit units and supplies the sequence of edit units to the header/footer addition section 333 as a body. Then, the processing advances to step S343.

At step S343, the header/footer addition section 333 adds the header and the footer supplied thereto from the header/footer creation section 331 to the body supplied thereto from the multiplexing section 332, to form a file of the standard AV multiplex format and outputs the file of the standard AV multiplex format. The synthesis process is ended thereby.

As described hereinabove, if data of each data series are recorded in a cyclically placed state, usefulness of a recording medium can be improved.

Next, the so-called postrecording process executed by the disk apparatus 1 will be described. The postrecording process is a process in which while recorded sound or picture is being read out, the sound or picture being read out is reproduced and also other sound or picture synchronizing with the sound or picture being reproduced is recorded. For example, recorded picture is read out to reproduce the read picture and to record other sound which synchronizes with the picture being reproduced. Further, for example, recorded sound is read out to reproduce the read sound and to record other picture which synchronizes with the sound being reproduced.

The postrecording process is referred to generally as voice over recording when sound is recorded. Further, the postrecording process is referred to also as after recording or separate recording.

The term "postrecording" will be referred to, in the following description, as a process in which while recorded sound or picture is being read out, the sound or picture being read out is reproduced and also other sound or picture synchronizing with the sound or picture being reproduced is recorded.

In a postrecording process executed by the disk apparatus 1 of the present invention, a low-res file stored in an optical disk 7 is read out to reproduce sound or picture using low-res data, and also sound or picture which synchronizes with the sound or picture being reproduced is acquired and the acquired sound or picture is recorded to an audio file or a video file which is main line data.

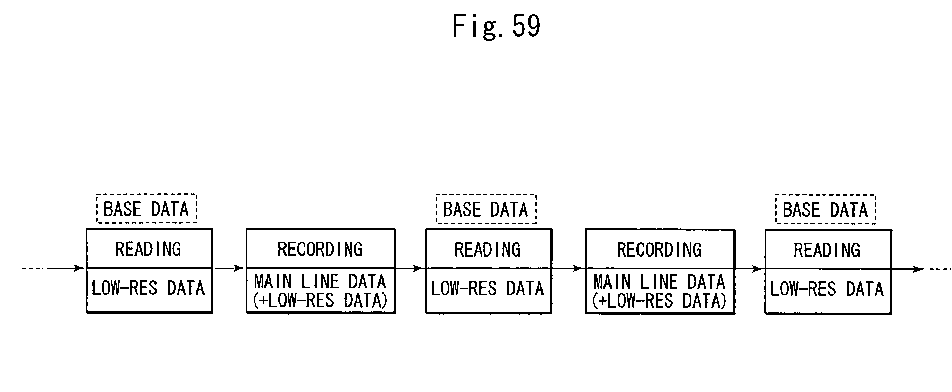

FIG. 59 is a diagrammatic representation illustrating a postrecording process executed by the disk apparatus 1. To execute a postrecording process for recording audio data, the disk apparatus 1 reads out a low-res data file as base data from an optical disk 7 loaded in the disk driving apparatus 11. The low-res data file stores a data series of picture and sound having the same contents as an audio file, which is main line data designated as a recording destination. Picture is reproduced on the basis of the read low-res data file. As described above, low-res data are low-resolution data having the same contents as at least one of video data and audio data, which are main line data recorded on the optical disk 7.

Since audio data as main line data to be recorded are supplied, the disk apparatus 1 acquires the audio data supplied thereto and records the acquired audio data to the audio file designated as a recording destination.

The disk apparatus 1 repeats the step of reading out a low-res data file and the step of recording audio data to an audio file. The step of reading out a low-res data file and the step of recording audio data to an audio file are executed apparently simultaneously.

Further, to execute a postrecording process for recording video data, the disk apparatus 1 reads out a low-res data file as base data from an optical disk 7 loaded in the disk driving apparatus 11. The low-res data file stores a data series of picture and sound having the same contents as a video file which is main line data designated as a recording destination. Sound is reproduced on the basis of the read low-res data file.

Since video data as main line data to be recorded are supplied, the disk apparatus 1 acquires the video data supplied thereto and records the acquired video data to the video file designated as a recording destination.

The disk apparatus 1 repeats the step of reading out a low-res data file and the step of recording video data to a video file. The step of reading out a low-res data file and the step of recording video data to a video file are executed apparently simultaneously.

That is, the disk apparatus 1 reads out low-res data as low-resolution data having the same contents as at least one of video data and audio data as main line data, and records, onto the optical disk 7, video data or audio data supplied thereto, which synchronize with at least one of the video data and audio data as the main line data already recorded onto the optical disk 7.

For example, if the disk apparatus 1 reads/writes data from/to the optical disk 7 at a data rate of 72 Mbps (Mega-bit per second), a data rate for main line data may be, for example, 50 Mbps or so, and a data rate for low-res data may be, for example, 2 Mbps or so.

In this case, if main line data are read out and reproduced, and supplied data are recorded to the main line data in the postrecording process, then a data rate of 50 Mbps is required for reading and a data rate of 50 Mbps is required for recording. As a result, a data rate of 100 Mbps is required in total. This exceeds the maximum data rate of the disk apparatus 1. Consequently, the postrecording process cannot be executed.

Meanwhile, if low-res data are read out and reproduced, and supplied data are recorded to main line data, then a data rate of 2 Mbps is required for reading and a data rate of 50 Mbps is required for recording. As a result, a total data rate of 52 Mbps is required. This is within the maximum data rate of the disk apparatus 1. Consequently, the postrecording process can be executed satisfactorily.

To put it in the opposite way, a data rate for a conventional postrecording process must be half or less the data rate of the apparatus, whereas the disk apparatus 1 of the present invention is free from such limitation, and thus the data rate for main line data can be set to a larger value than the data rate of the apparatus.

In other words, according to the present invention, a postrecording process for recording audio data or video data having a higher bit rate can be executed.

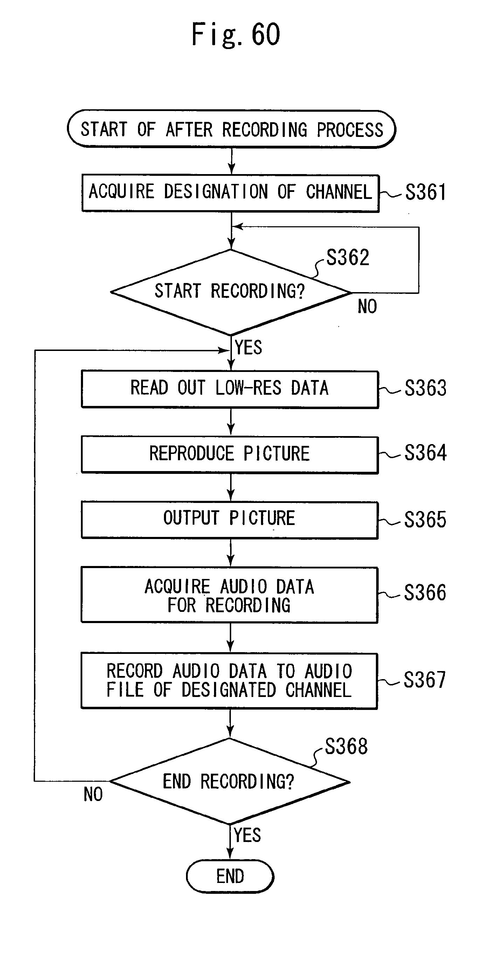

FIG. 60 is a flowchart illustrating the postrecording process for recording audio data. At step S361, the control section 119 acquires a designation of a channel for recording audio data based on a signal such as an operation signal from the operation section 120. Then, the processing advances to step S362. The designation of a channel may be for specifying an audio file already recorded onto the optical disk 7 or may be for recording a new audio file.

At step S362, the control section 119 determines whether or not recording is started based on a signal such as an operation signal from the operation section 120. If it is determined that the recording is not started, the control section 119 repeats the determination step until it is determined that the recording is started.

If it is determined at step S362 that the recording is started, then the processing advances to step S363. At step S363, the control section 119 controls the servo control section 114 and the signal processing section 115 to read out low-res data, which are a data series of sound and picture having the same contents as an audio file of the designated channel, from the optical disk 7. Then, the processing advances to step S364. At step S363, for example, the control section 119 causes the signal processing section 115 to read out a master file recorded onto the optical disk 7 and specifies a low-res data file of the data series of sound and picture having the same contents as the audio file of the designated channel based on a description of the master file. And the control section 119 controls the servo control section 114 and the signal processing section 115 such that low-res data stored in the specified low-res data file are read out.

As described above, a low-re data file stores low-resolution sound data having the same contents as an audio file of a designated channel and low-resolution picture data having the same contents as a video file related to the audio file of the designated channel in a multiplexed state. Therefore, at step S363, the control section 119 reads out the low-res data, into which the low-resolution audio data and the low-resolution video data are multiplexed, from the optical disk 7. Since the low-resolution audio data and the low-resolution video data are multiplexed in an item of low-res data, one or both of the low-resolution audio data and the low-resolution video data of a desired channel can be outputted by reducing seek operation which tends to occur when a plurality of files are read out.

At step S364, the control section 119 causes the signal processing section 115 to reproduce the read low-res data file to reproduce the picture. Then, the processing advances to step S365. At step S365, the control section 119 causes the format conversion section 12 to output the reproduced picture through the memory controller 116 and the data conversion section 118. Then, the processing advances to step S366. The reproduced picture is outputted through the format conversion section 12 and the communication interface 13. The picture is displayed on the AV apparatus 5 or the AV apparatus 6 according to (a signal of) the outputted picture.

At step S366, since the audio data for recording is transmitted thereto through the network 4, the communication interface 13 receives the audio data transmitted thereto and supplies the received audio data to the disk driving apparatus 11 through the format conversion section 12. The control section 119 causes the data conversion section 118 to acquire the audio data supplied through the format conversion section 12. Then, the processing advances to step S367.

At step S367, the control section 119 records the audio data acquired at step S366 to an audio file of the channel designated at step S361 on the optical disk 7. Then, the processing advances to step S368. For example, if the designation of a channel is for specifying an audio file already recorded onto the optical disk 7, then the audio data acquired at step S366 are overwritten to the audio file recorded onto the optical disk 7 at step S367. For example, if the designation of a channel is for recording a new audio file, then the new audio file for storing the acquired audio file is recorded onto the optical disk 7 at step S367.

Since audio data converted into the AV independent format by the format conversion section 12 are supplied to the disk driving section 11, the audio data are recorded to an audio file of the AV independent format in which audio data are placed collectively on the optical disk 7 at step S367. This further reduces seek operation and thus enables video data to be recorded more readily and more stably during recording.

At step S368, the control section 119 determines whether or not the recording is ended based on a signal such as an operation sinal from the operation section 120. If it is determined that the recording is not ended, the processing returns to step S363 to repeat the processing described above.

If it is determined at step S368 that the recording is ended, the postrecording process for recording audio data is ended thereby.

As described hereinabove, a low-res data file is read out from the optical disk 7 as base data and picture is reproduced based on the read low-res data file. The low-res data file stores low-res data which are a data series of picture and sound having the same contents as an audio file which is main line data designated as a recording destination. The audio data which are main line data to be recorded are recorded toto the audio file designated as a recording destination. The processing of reading the low-res data at step S363 and the processing of recording the audio data at step S367 are repeated.

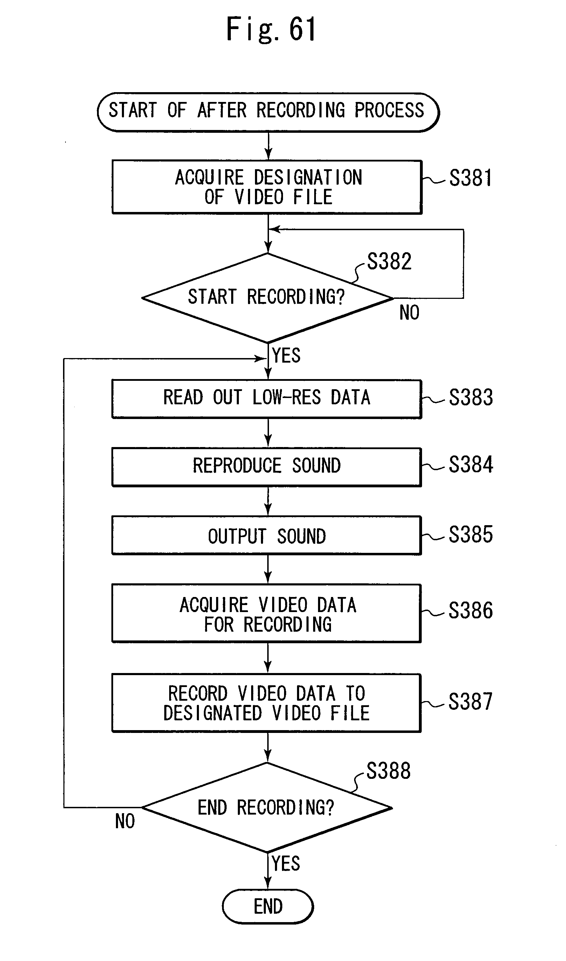

FIG. 61 is a flowchart illustrating the postrecording process for recording video data. At step S381, the control section 119 acquires a designation of a video file for recording video data based on a signal such as an operation signal from the operation section 120. Then, the processing advances to step S382. The designation of a channel may be for specifying a video file already recorded onto the optical disk 7 or may be for recording a new video file (when an object for postrecording is only sound).

At step S382, the control section 119 determines whether or not recording is started based on a signal such as an operation signal from the operation section 120. If it is determined that the recording is not started, the control section 119 repeats the determination step until it is determined that recording is started.

If it is determined at step S382 that the recording is started, then the processing advances to step S383. At step S383,, the control section 119 controls the servo control section 114 and the signal processing section 115 to read out low-res data, which are a data series of sound and picture having the same contents as the designated video file from the optical disk 7. Then, the processing advances to step S384. At step S383, for example, the control section 119 causes the signal processing section 115 to read out a master file recorded onto the optical disk 7 and specifies a low-res data file of a data series of sound and picture having the same contents as the designated video file based on a description of the master file. And the control section 119 controls the servo control section 114 and the signal processing section 115 such that low-res data stored in the specified low-res data file are read out.

At step S384, the control section 119 causes the signal processing section 115 to reproduce the read low-res data file to reproduce the sound. Then, the processing advances to step S385. At step S385, the control section 119 causes the format conversion section 12 to output the reproduced sound through the memory controller 116 and the data conversion section 118. Then, the processing advances to step S386. The reproduced sound is outputted through the format conversion section 12 and the communication interface 13. The sound is converted into a sound wave at the AV apparatus 5 or the AV apparatus 6.

At step S386, since the video data for recording is transmitted through the network 4, the communication interface 13 receives the video data transmitted thereto and supplies the received video data to the disk driving apparatus 11 through the format conversion section 12. The control section 119 causes the data conversion section 118 to acquire the video data supplied to the disk driving apparatus 11 through the format conversion section 12. Then, the processing advances to step S387.

At step S387, the control section 119 records the video data acquired at step S386 to the video file designated at step S381 onto the optical disk 7. Then, the processing advances to step S388. For example, if the designation of a video file is for specifying a video file already recorded onto the optical disk 7, then the video data acquired at step S386 are overwritten on the video file recorded onto the optical disk 7 at step S387. For example, if the selection of a video file is for recording a new video file, then the new video file in which to store the acquired video file is recorded onto the optical disk 7 at step S387.

Since video data converted into the AV independent format by the format conversion section 12 are supplied to the disk driving section 11, the video data are recorded to a video file of the AV independent format in which the video data are placed collectively on the optical disk 7 at step S387. This further reduces seek operation and thus enables video data to be recorded more easily and more stably during recording.

At step S388, the control section 119 determines whether or not the recording is ended based on a signal such as an operation sinal from the operation section 120. If it is determined that the recording is not ended, the processing returns to step S383 to repeat the processing described above.

If it is determined at step S388 that the recording is ended, the postrecording process for recording video data is ended thereby.

As described hereinabove, a low-res data file is read out from the optical disk 7 as raw data and sound is reproduced based on the read low-res data file. The low-res data file stores low-res data which are a data series of picture and sound having the same contents as a video file which is main line data designated as a recording destination. The video data which are main line data for recording are recorded to the video file designated as a recording destination. The processing of reading the low-res data at step S383 and the processing of recording the video data at step S387 are repeated.

Note that the process described above is such that low-res data are read out to reproduce picture of the low-res data and record main line audio data, or low-res data are read out to reproduce sound of the low-res data and record main line video data. However, a process may be such that low-res data are read out to reproduce sound of the low-res data and record main line video data, or low-res data are read out to reproduce picture of the low-res data and record main line audio data. Alternatively, low-res data are read out to reproduce picture and sound of the low-res data and record main line video data and audio data.

For example, if the disk apparatus 1 reads/writes data from/to the optical disk 7 at a data rate of 72 Mbps (Mega-bit per second), a data rate for video data may be, for example, 50 Mbps or so, and a data rate for audio data of one channel may be, for example, 0.75 Mbps or so. If there are eight channels, a data rate for audio data for all the channels is 6 Mbps or so. Further, a data rate for metadata may be, for example, 2 Mbps or so, and a data rate for low-res data may be, for example, 2 Mbps or so.

In this case, even if low-res data are read out to reproduce picture and sound of the low-res data and record video data and audio data for eight channels which are main line data, a data rate of 2 Mbps is required for reading out the low-res data and a data rate of 56 Mbps is required for recording. As a result, a data rate of 56 Mbps is required in total. This data rate is within the allowable data rate of the disk apparatus 1, and hence the postrecording process can be executed satisfactorily.

Alternatively, in this case, metadata may be recorded and low-res data are updated and then recorded.

If low-res data are read out in this way, picture or sound having the same contents as main line data can be reproduced based on the low-resolution data. Further, if reading of at least one of first picture data and first sound data recorded on a recording medium is controlled and recording of second picture data or second sound data synchronizing with at least one of the first picture data and the first sound data onto the recording medium is controlled, then even if the bit rate of the first picture data or the first sound data recorded on the recording medium, or the second picture data or the second sound data for recording is higher than the bit rate for reading from the recording medium or recording onto the recording medium, the postrecording process can be executed.

While the series of processes described above can be executed by hardware, it may otherwise be executed by software. Where the series of processes is executed by software, a program, which constructs the software, is installed into a computer for universal use or a like apparatus.

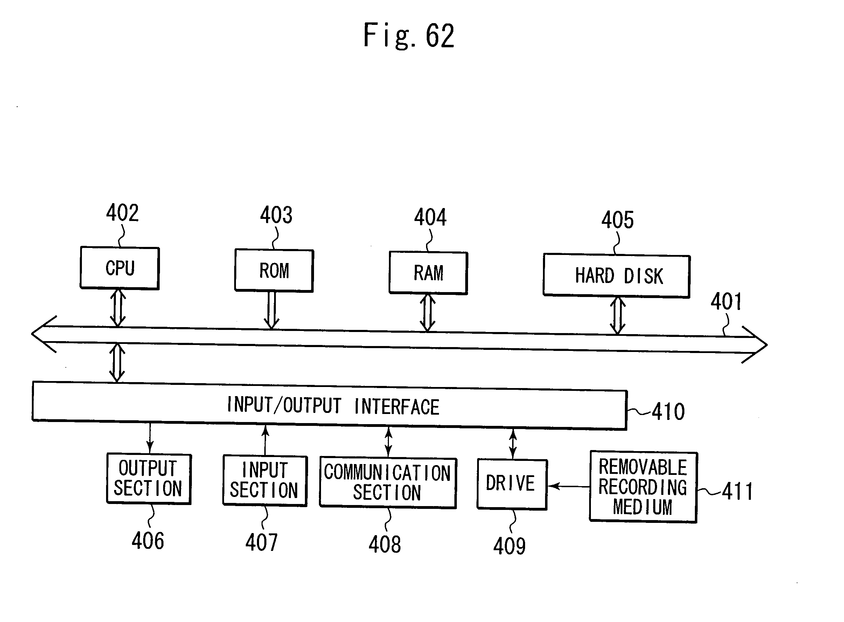

Then, FIG. 62 shows an example of a configuration of a computer into which a program for executing the series of processes described above is installed.

The program can be recorded in advance on a hard disk 405 or a Read Only Memory (ROM) 403 built in the computer and serving as a recording medium.

It is otherwise possible to temporarily or permanently store (or record) the program on a removable recording medium 411 such as a flexible disk, a Compact Disc-Read Only Memory (CD-ROM), a Magneto Optical (MO) disk, a Digital Versatile Disk (DVD), a magnetic disk, or a semiconductor memory. The removable recording medium 411 of the type described can be provided as package software.

Note that the program may be installed by a method different from the method described above wherein the program is installed from such a removable recording medium 411 into the computer as described above. That is, it is possible to transfer the program from a download site to the computer by wireless communication through an artificial satellite for digital satellite broadcasting or to transfer the program to the computer by wired communication through a network such as a Local Area Network (LAN) or the Internet. The computer thus can receive the program transferred in this manner by means of a communication section 408 and install the program into the hard disk 405 built therein.

The computer has a central processing unit CPU 402 built therein. An input/output interface 410 is connected to the CPU 402 through a bus 401. If the CPU 402 receives an instruction, for example, when an inputting section 407, which may include a keyboard, a mouse or/ and a microphone, is operated by the user through the input/output interface 410, then the CPU 402 executes a program stored in the Read Only Memory (ROM) 403 in accordance therewith. Alternatively, the CPU 402 loads a program stored on the hard disk 405; a program transferred from a satellite or a network, received by the communication section 408, and installed in the hard disk 405; or a program read out from a removable recording medium 411 loaded in a drive 409 and installed in the hard disk 405 into a Random Access Memory (RAM) 404 and executes the program loaded in the RAM 404. Thus, the CPU 402 executes processing in accordance with the flowcharts described above or processing to be executed by the configurations described above with reference to the block diagrams. Then, the CPU 402, for example, outputs a result of the processing from an outputting section 206, which may include a Liquid Crystal Display (LCD) unit or/and a speaker, through the input/ output interface 410 as the need arises. Alternatively, the CPU 402 may transmit the result of the processing from the communication section 408 or record the result of the processing onto the hard disk 405.

Further, the program may be processed by a single computer or may otherwise be processed discretely by a plurality of computers. Furthermore, the program may be transferred to and executed by a remote computer.

Note that the disk apparatus 1 in the present embodiment writes and reads out a file onto and from an optical disk 7. However, a file can be written and read out not only onto and from a recording medium of the disk type such as the optical disk 7 but also onto and from any other recording medium such as a recording medium of the random access type such as a semiconductor memory.

Further, in the embodiment of FIG. 1, the disk apparatus 1, which is one apparatus, is composed of the disk driving section 11, the format conversion section 12, and the communication interface 13. However, each of the disk driving section 11, the format conversion section 12, and the communication interface 13 may otherwise be formed as a single independent apparatus.

### INDUSTRIAL APPLICABILITY

As described hereinabove, according to the present invention, picture or sound having the same contents as main line data can be reproduced based on low-resolution data.

Further, according to the present invention, even if a bit rate of data recorded on or data for recording onto a recording medium is higher than a bit rate for reading out from or recording onto the recording medium, a postrecording process can be executed.

## Claims

1. A recording apparatus for recording second picture data or second sound data onto a recording medium on which first picture data or first sound data are recorded, **characterized by** comprising:
reading controlling means for controlling reading of low-resolution data having the same contents as at least one of said first picture data and said first sound data recorded on said recording medium; and
recording controlling means for controlling recording of said second picture data or said second sound data synchronizing with said at least one of said first picture data and said first sound data, onto said recording medium.

2. The recording apparatus according to claim 1, **characterized in that** said reading controlling means controls reading of said low-resolution data in which low-resolution picture data having the same contents as said first picture data and low-resolution sound data having the same contents as said first sound data are multiplexed.

3. The recording apparatus according to claim 1, **characterized in that** said recording controlling means controls recording of said second picture data so as to be recorded to a first file in which picture data are collectively placed, or recording of said second sound data so as to be recorded to a second file in which sound data are collectively placed.

4. The recording apparatus according to claim 1, **characterized in that** said recording medium is an optical disk.

5. The recording apparatus according to claim 1, **characterized in that** said recording medium is a semiconductor memory.

6. A recording method of recording second picture data or second sound data onto a recording medium on which first picture data or first sound data are recorded, **characterized by** comprising:
a reading controlling step of controlling reading of low-resolution data having the same contents as at least one of said first picture data and said first sound data recorded on said recording medium; and
a recording controlling step of controlling recording of said second picture data or said second sound data synchronizing with said at least one of said first picture data and said first sound data, onto said recording medium.

7. A program for causing a computer to execute processing of recording second picture data or second sound data onto a recording medium on which first picture data or first sound data are recorded, **characterized by** comprising:
a reading controlling step of controlling reading of low-resolution data having the same contents as at least one of said first picture data and said first sound data recorded on said recording medium; and
a recording controlling step of controlling recording of said second picture data or said second sound data synchronizing with said at least one of said first picture data and said first sound data, onto said recording medium.

8. A recording apparatus for recording second picture data onto a recording medium on which low-resolution picture data of a low resolution having the same contents as first picture data and said first picture data are recorded, **characterized by** comprising:
reading controlling means for controlling reading of said first picture data and said low-resolution picture data; and
recording controlling means for controlling recording of said second picture data in synchronism with said first picture data are multiplexed.

9. The recording apparatus according to claim 8, **characterized in that** said reading controlling means controls reading of low-resolution data in which said low-resolution picture data having the same contents as said first picture data and low-resolution sound data having the same contents as sound data are multiplexed.

10. The recording apparatus according to claim 8, **characterized in that** said recording controlling means controls recording of said second picture data to a file in which picture data are collectively placed.

11. The recording apparatus according to claim 8, **characterized in that** said recording medium is an optical disk.

12. The recording apparatus according to claim 8, **characterized in that** said recording medium is a semiconductor memory.

13. A recording method of recording second picture data onto a recording medium on which low-resolution picture data of a low resolution having the same contents as first picture data and said first picture data are recorded, **characterized by** comprising:
a reading controlling step of controlling reading of said first picture data and said low-resolution picture data; and
a recording controlling step of controlling recording of said second picture data in synchronism with said first picture data.

14. A program for causing a computer to execute processing of recording second picture data onto a recording medium on which low-resolution picture data of a low resolution having the same contents as first picture data and said first picture data are recorded, **characterized by** comprising:
a reading controlling step of controlling reading of said first picture data and said low-resolution picture data; and
a recording controlling step of controlling recording of said second picture data in synchronism with said first picture data.

15. A recording apparatus for recording second sound data onto a recording medium on which low-resolution sound data of a low resolution having the same contents as first sound data and said first sound data are recorded, **characterized by** comprising:
reading controlling means for controlling reading of said first sound data and said low-resolution sound data; and
recording controlling means for controlling recording of said second sound data in synchronism with said first sound data.

16. The recording apparatus according to claim 15, **characterized in that** said reading controlling means controls reading of low-resolution data in which said low-resolution sound data having the same contents as said first sound data and low-resolution picture data having the same contents as picture data are multiplexed.

17. The recording apparatus according to claim 15, **characterized in that** said recording controlling means controls recording of said second sound data to a file in which sound data are collectively placed.

18. The recording apparatus according to claim 15, **characterized in that** said recording medium is an optical disk.

19. The recording apparatus according to claim 15, **characterized in that** said recording medium is a semiconductor memory.

20. A recording method of recording second sound data onto a recording medium on which low-resolution sound data of a low resolution having the same contents as first sound data and said first sound data are recorded, **characterized by** comprising:
a reading controlling step of controlling reading of said first sound data and said low-resolution sound data; and
a recording controlling step of controlling recording of said second sound data in synchronism with said first sound data.

21. A program for causing a computer to execute processing of recording second sound data onto a recording medium on which low-resolution sound data of a low resolution having the same contents as first sound data and said first sound data are recorded, **characterized by** comprising:
a reading controlling step of controlling reading of said first sound data and said low-resolution sound data; and
a recording controlling step of controlling recording of said second sound data in synchronism with said first sound data.
